# EUROPEAN PATENT SPECIFICATION

(11) **EP 1 404 068 B1**
(45) Date of publication and mention of the grant of the patent: **01.09.2010**
(21) Application number: 03021027.2
(22) Date of filing: 17.09.2003
(51) Int. Cl.: H04L 12/56, H04W 4/00

(54) **Mobile communication system, server apparatus, and data transmission method**
Datenmobilkommunikationssystem, Servervorrichtung und Verfahren für die Datenübertragung
Système de communication sans fil, serveur, et procédé pour la transmission de données

(30) Priority: 17.09.2002 JP 2002270715; 17.02.2003 JP 2003038879
(43) Date of publication of application: 31.03.2004
(73) Proprietor: NTT DoCoMo, Inc., Tokyo 100-6150 (JP)
(72) Inventor: Nishimura, Kenji, NTT DoCoMo, Inc., Chiyoda-ku, Tokyo 100-6150 (JP); Igarashi, Ken, NTT DoCoMo, Inc., Chiyoda-ku, Tokyo 100-6150 (JP)
(74) Representative: Viering, Jentschura & Partner

(56) References cited:
- EP-A- 1 422 883
- US-A- 6 023 461
- SESHAN S ET AL: "HANDOFFS IN CELLULAR WIRELESS NETWORKS: THE DAEDALUS IMPLEMENTATIONAND EXPERIENCE" WIRELESS PERSONAL COMMUNICATIONS, SPRINGER, DORDRECHT, NL, vol. 4, no. 2, 1 March 1997 (1997-03-01), pages 141-162, XP000728589 ISSN: 0929-6212
- NETWORKING WORKING GROUP J.MOY: "OSPF Version 2" NETWORKING WORKING GROUP, FRC 2328 STD 54, vol. 1, April 1998 (1998-04), XP002514616 NETWORKING WORKING GROUP

## Description

### BACKGROUND OF THE INVENTION

### Field of the Invention

The present invention relates to a mobile communication system, a server apparatus, and a data transmission method.

### Related Background Art

UMTS (Universal Mobile Telecommunications System) is known as a conventional mobile communication system standardized by 3GPP (3rd Generation Partnership Project). The UMTS utilizes W-CDMA (Wideband-Code Division Multiple Access) as a multiplex system of radio communication paths, and provides soft handover (diversity handover) as a handover system of mobile terminals.

This soft handover is implemented adopting the subscriber line extension system, and a router to multicast data with a mobile terminal being in a site diversity state (the router will hereinafter be referred to as "multicast point") remains unchanged during communication. For this reason, even with movement of the mobile terminal, data is always transmitted via the multicast point to the mobile terminal at the destination (e.g., reference is made to Nonpatent Document 1).
[Nonpatent Document 1] 3G TR25.832 "Manifestations of Handover and SRNS Relocation"

US 6 023 461 D1 discloses hard handover in an ATM network, wherein, after a crossover switch is connected with the new base station, the cross-over switch introduces a special cell to the old path, in order to flush the remaining cells in the old path. In the time between introducing the special cell and receiving the special cell back from the mobile terminal, cells arriving at the new base station are buffered.

S. Seshan et al., "Handoffs in Cellular Wireless Networks: The Deadalus Implementation and Experience", in "Wireless Personal Communications", pages 141-162, 1997, discloses hard handover in a mobile IP network, in which data is transmitted from a corresponding host to a mobile host in the mobile IP network, wherein data is first transmitted from the corresponding host to a home agent in the home network of the mobile host for encapsulation of the data. The data is encapsulated as multicast data to be multicasted to each of the base station currently serving the mobile host and nearby base stations. The mobile host selects the nearby base stations as targets for multicast transmission, i.e. as members of the respective multicast group.

The conventional mobile communication system described above generally operates as schematically described below. Namely, a radio network controller (RNC: Radio Network Controller) used at a start of communication by the mobile terminal serves as an SRNC (Serving RNC) being an anchor multicast point. In the case where the mobile terminal undergoes a handover between radio base stations (NB: Node B) under the command of the SRNC (Intra-RNC handover), data is directly multicast from the SRNC to each of the NBs connected to the mobile terminal.

On the other hand, in the case where the mobile terminal undergoes a handover between NBs under the command of respective RNCs different from each other (Inter-RNC handover), data is transmitted via the SRNC and further via the destination RNC (DRNC: Drift RNC) to the destination NB. The RNCs and SRNC in the prior art correspond to the relay routers in the present invention, and NBs to the access routers.

### SUMMARY OF THE INVENTION

In the diversity handover control using the subscriber line extension system in the conventional UMTS described above, in the case of the Intra-RNC handover, data is multicast from the SRNC to each of NBs connected in the star configuration. For this reason, there arises no problem in the sense of data transmission using optimal paths (shortest paths). However, in the case of the Inter-RNC handover, there occur two situations: a situation where data is directly transmitted to NB under the command of the SRNC; and a situation where data is transmitted from the SRNC via the DRNC to NB under the command of the DRNC.

In the case of such Inter-RNC handover, in order to implement data transmission using shortest paths, it is necessary to transmit data to both the SRNC and DRNC, using a mobile switching center (MSC: Mobile-services Switching Center or SGSN: Serving GPRS Support Node) as a multicast point. However, the path via the SRNC is redundant in the data transmission to the DRNC, so as to waste the network resources.

This was caused by the following factor. Namely, according to the specification of UMTS (3GPP R99), the SRNC is designated to perform various complicated controls required for implementation of diversity handover, and for simplification of the controls, the point (router) to control the diversity handover is fixed at the SRNC during progress of communication.

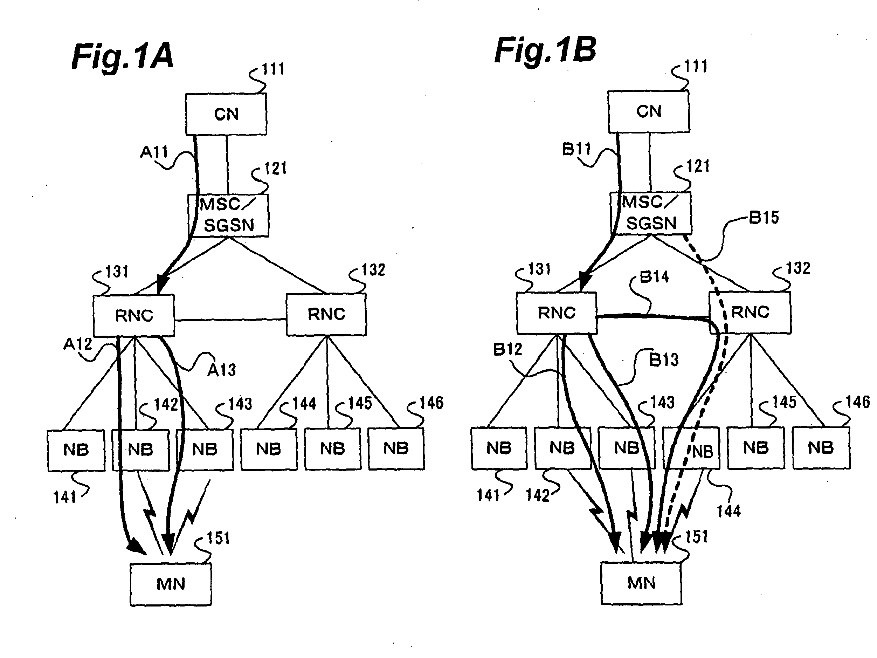

The above problem will be described below in more detail with reference to the drawings. Fig. 1A and Fig. 1B are illustrations showing states of routing according to movement of the mobile terminal during the diversity handover in the UMTS. In Figs. 1A and 1B, CN 111 represents a correspondent terminal, MSC/SGSN 121 a mobile subscriber switch (MSC or SGSN), RNCs 131, 132 radio network controllers, NBs 141, 142, 143, 144, 145, and 146 radio base stations, and MN 151 a mobile terminal.

These figures are based on the assumption that CN 111 is located above MSC/SGSN 121. The RNCs 131, 132 perform the control of radio resources and the handover control on the occasion of movement of MN 151. A plurality of NBs are connected in the star configuration to the RNCs 131, 132.

MN 151 performs communication while being connected to an NB. Particularly, during the site diversity, MN 151 is simultaneously connected to a plurality of NBs and combines downlink signals from the respective NBs at a maximum ratio by the conventional site diversity reception technology, thereby realizing a reception environment with higher quality.

Fig. 1A is an illustration showing a state of Intra-RNC diversity handover where MN 151 is connected to NB 142 and NB 143, and Fig. 1B an illustration showing a state of Inter-RNC diversity handover where MN 151 is connected to NB 142, NB 143, and NB 144. In these figures, the RNC used at a start of communication by MN 151 (i.e., the SRNC) is RNC 131.

As shown in Fig. 1A, in the case of the Intra-RNC handover, NBs 142, 143 connected to MN 151 both are under the command of one RNC (RNC 131). For this reason, data transmitted from CN 111 to MN 151 is first routed via MSC/SGSN 121 to the SRNC (RNC 131) as a multicast point, as indicated by arrow A11. Subsequently, the data multicast from RNC 131 is directly transmitted to NBs 142, 143, as indicated by arrows A12, A13, so that there is no redundant portion in the routing paths.

On the other hand, in the case of the Inter-RNC handover shown in Fig. 1B, the routing paths from MSC/SGSN 121 via SRNC (RNC 131) to NBs 142, 143 are the same as those in the Intra-RNC handover, as indicated by arrows B 11, B12, and B 13. In contrast to it, data to NB 144 located under DRNC (RNC 132) in communication with destination NM 151 is routed via the SRNC and then through the DRNC thereto, as indicated by solid arrow B 14.

Namely, there is a redundant portion in the routing path, as compared with the case where the data is directly transmitted from MSC/SGSN 121 to the DRNC. In order to eliminate this redundant portion, it is necessary for MSC/SGSN 121 to multicast the data directed to NB 144, as indicated by dashed arrow B15. However, the multicast point is fixed at one RNC in the conventional UMTS, as described previously, and thus there is the disadvantage that the redundant portion inevitably occurs.

One conceivable means for overcoming this disadvantage is to provide the nodes other than the RNCs with the data multicasting function. However, an issue in that case is how to select a multicast point for providing routing paths without redundancy. To always select an optimal multicast point is relatively easy in networks of the tree structure designed like cellular networks, whereas it is difficult in networks having the topology (connection topology) of the complicated mesh structure like general IP networks.

The optimal multicast point differs depending upon the location of connection of MN 151 to the network and upon the location of connection of CN 111 being a correspondent thereof, to the network. For example, the optimal multicast point in Fig. 1A is RNC 131, while in Fig. 1B, RNC 131 and MSC/SGSN 121 are optimal multicast points.

For this reason, it is desirable to preset the optimal multicast points for respective routing paths according to destinations of movement of the mobile terminal. It is, however, practically impossible to predict all the destinations of movement of the mobile terminal and encompass all the routing paths. It is thus difficult to preliminarily statically set the optimal multicast points, not only in the networks of the mesh structure, but also in the networks of the tree structure. Therefore, an effective means is to establish a technique of dynamically switching the multicast points from one to another according to locations of the mobile terminal in conjunction with movement thereof.

An object of the present invention is, therefore, to implement finding of an optimal multicast point and dynamic switching from one multicast point to another, thereby enabling efficient utilization of resources without any redundant path.

In order to achieve the above object, a mobile communication system according to the present invention is a mobile communication system comprising a plurality of relay routers, a plurality of access routers, a server apparatus, and a mobile terminal, the mobile communication system being constructed in a configuration wherein a router existing on paths for delivery of data (e.g., a packet) from a correspondent terminal to the mobile terminal via each of access routers used in a multipath handover state by the mobile terminal, multicasts the data, wherein the server apparatus performs such a control as to dynamically switch one router to multicast the data (a multicast point), to another in conjunction with movement of the mobile terminal or the correspondent terminal, wherein the server apparatus includes: acquiring means for acquiring from each access router, path information between a router connected to the correspondent terminal and each of the access routers used in the multipath handover state by the mobile terminal; selecting means for making a comparison of the path information acquired by the acquiring means and selecting a router to multicast the data, based on a result of the comparison; and instructing means for instructing the router selected by the selecting means, to multicast the data; wherein the selecting means of the server apparatus is configured to: make sequential comparisons of the path information acquired by the acquiring means, hop by hop from a start point; if about a hop as a target for the comparisons, routers passed in all the paths are identical, perform a comparison about a next hop; select as a router to multicast the data, a router in one hop before a path against which there exists no other path passing an identical router; and thereafter eliminate said path, then repeat the comparison and selecting processes before there remains one or less path as a comparison target or before a comparison is completed for a hop of an end point, and thereby select another router to multicast the data.

A data transmission method according to the present invention is a data transmission method in a mobile communication system comprising a plurality of relay routers, a plurality of access routers, and a server apparatus, the mobile communication system being constructed in a configuration wherein a router existing on paths for delivery of data from a correspondent terminal to a mobile terminal via each of access routers used in a multipath handover state by the mobile terminal, multicasts the data, the data transmission method comprising: a control step wherein the server apparatus dynamically switches one router to multicast the data, to another in conjunction with movement of the mobile terminal or the correspondent terminal; an acquiring step wherein acquiring means of the server apparatus acquires from each access router, path information between a router connected to the correspondent terminal and each of the access routers used in the multipath handover state by the mobile terminal; a selecting step wherein selection means of the server apparatus makes a comparison of the path information acquired by the acquiring means and selecting a router to multicast the data, based on a result of the comparison; and an instructing step wherein instructing means of the server apparatus instructs the router selected in the selecting step, to multicast the data: wherein the selecting steps performed by the server apparatus includes: making sequential comparisons of the path information acquired in the acquiring step, hop by hop from a start point; if about a hop as a target for the comparisons, routers passed in all the paths are identical, performing a comparison about a next hop; selecting as a router to multicast the data, a router in one hop before a path against which there exists no other path passing an identical router; and thereafter eliminating said path, then repeating the comparison and selecting processes before there remains one or less path as a comparison target or before a comparison is completed for a hop of an end point, and thereby selecting another router to multicast the data.

The routers herein encompass relay routers and access routers. The multipath handover state is one of three states described below. Namely, the three states are a state in which the mobile terminal transmits or receives identical data while being connected to multiple access routers (soft handover state); a state in which, while multiple access routers transmit identical data to the mobile terminal, the mobile terminal receives the data from only one access router among them; and a state in which, while data is routed through multiple paths in a network, the data is transmitted from one of multiple access routers to the mobile terminal and the mobile terminal receives the data from only the one access router.

According to these aspects of the invention, in conjunction with movement of the mobile terminal or the correspondent terminal, an optimal multicast point is found out and the router to multicast the data (multicast point) is dynamically switched from one to another, so that the data is multicast at an optimal router. As a consequence, it becomes feasible to implement efficient utilization of resources without any redundant path.

In the mobile communication system according to the present invention, the server apparatus comprises: acquiring means for acquiring from each access router, path information between a router connected to the correspondent terminal and each of the access routers used in the multipath handover state by the mobile terminal; selecting means for making a comparison of the path information acquired by the acquiring means and selecting a router to multicast the data, based on a result of the comparison; and instructing means for instructing the router selected by the selecting means, to multicast the data.

A server apparatus according to the present invention is a server apparatus for connection to a plurality of relay routers and to a plurality of access routers, the server apparatus being configured to perform such a control as to dynamically switch one router to multicast the data, to another in conjunction with movement of the mobile terminal or the correspondent terminal, wherein a router existing on paths for delivery of data from a correspondent terminal to a mobile terminal via each of access routers used in a multipath handover state by the mobile terminal, multicasts the data, the server apparatus comprising: acquiring means for acquiring from each access router, path information between a router connected to the correspondent terminal and each of the access routers used in the multipath handover state by the mobile terminal; selecting means for making a comparison of the path information acquired by the acquiring means and selecting a router to multicast the data, based on a result of the comparison; and instructing means for instructing the router selected by the selecting means, to multicast the data; wherein the selecting means of the server apparatus is configured to: make sequential comparisons of the path information acquired by the acquiring means, hop by hop from a start point; if about a hop as a target for the comparisons, routers passed in all the paths are identical, perform a comparison about a next hop; select as a router to multicast the data, a router in one hop before a path against which there exists no other path passing an identical router; and thereafter eliminate said path, then repeat the comparison and selecting processes before there remains one or less path as a comparison target or before a comparison is completed for a hop of an end point, and thereby select another router to multicast the data.

The data transmission method according to the present invention comprises an acquiring step wherein acquiring means of the server apparatus acquires from each access router, path information between a router connected to the correspondent terminal and each of the access routers used in the multipath handover state by the mobile terminal; a selecting step wherein selecting means of the server apparatus makes a comparison of the path information acquired by the acquiring means and selects a router to multicast the data, based on a result of the comparison; and an instructing step wherein instructing means of the server apparatus instructs the router selected by the selecting means, to multicast the data.

Here the router terminating the path information request is, for example, a gateway router, an access router, or a router. Specifically, in the case where the correspondent terminal is present at another network (foreign network) different from the network where the mobile terminal is present (home network), the router terminating the path information request is a home-network-side gateway router located on routing paths of data transmitted and received between the correspondent terminal and the mobile terminal. In the case where the correspondent terminal is present at the home network, the router terminating the path information request is an access router in the home network or a router in the home network.

According to these aspects of the invention, the server apparatus is able to dynamically select a router optimal for multicast, based on the result of the comparison of the path information acquired from the routers. Furthermore, the server apparatus instructs the selected router to multicast the data, thereby enabling efficient utilization of resources without any redundant path.
Another potential configuration is that a router, instead of the server apparatus, dynamically selects a router optimal for multicast, based on the result of the comparison of the path information.

In the mobile communication system according to the present invention, more preferably, a router connected to the correspondent terminal transmits path information to each of the access routers used in the multipath handover state by the mobile terminal; and each path information is routed through a shortest path from the router as a start point to each of the access routers as an end point, a router passed by each path information sequentially records (or adds) identification information of the router in each path information, and each of the access routers refers to the path information received, so as to acquire routers on the shortest path from the start point to the end point, and a passing order thereof on the shortest path.

The data transmission method, in an example, comprises a step wherein a router connected to the correspondent terminal transmits path information to each of the access routers used in the multipath handover state by the mobile terminal; and a step wherein each path information is routed through a shortest path from the router as a start point to each of the access routers as an end point, a router passed by each path information records identification information of the router in each path information, and each of the access routers refers to the path information received, so as to acquire routers on the shortest path from the start point to the end point, and a passing order thereof on the shortest path.

According to these aspects of the invention, the communication path of data from the correspondent terminal to each access router is determined based on the path information routed through the shortest path. Therefore, each multicast point corresponding to each access router must also be present on the shortest path, whereby any redundant path can be eliminated on the occasion of data transmission utilizing the variable multicast points.

In the mobile communication system according to the present invention, the selecting means of the server apparatus is configured to: make sequential comparisons of the path information acquired by the acquiring means, hop by hop from a start point; if about a hop as a target for the comparisons, routers passed in all the paths are identical, perform a comparison about a next hop; select as a router to multicast the data, a router (identical in all the paths) in one hop before a path against which there exists no other path passing an identical router; and thereafter eliminate the path, then repeat the comparison and selecting processes before there remains one or less path as a comparison target or before a comparison is completed for a hop of an end point (an access router used by the mobile terminal), and thereby select another router to multicast the data.

In the data transmission method according to the present invention, in the selecting step, the selecting means of the server apparatus is configured to: make sequential comparisons of the path information acquired by the acquiring means, hop by hop from a start point; if about a hop as a target for the comparisons, routers passed in all the paths are identical, perform a comparison about a next hop; select as a router to multicast the data, a router in one hop before a path against which there exists no other path passing an identical router; and thereafter eliminate the path, then repeat the comparison and selecting processes before there remains one or less path as a comparison target or before a comparison is completed for a hop of an end point, and thereby select another router to multicast the data.

According to these aspects of the invention, the comparisons are made among the shortest paths from the router connected to the correspondent terminal, to the respective access routers to detect overlapping partial paths in each of the shortest paths. Then a router nearest to the mobile terminal in the overlapping paths is selected as an optimal multicast point, based on the result of the detection. Excepting the route in which the multicast point has already been selected, these comparison and selecting processes are repeated, whereby an optimal multicast point can be selected for the mobile terminal undergoing a multipath handover between two access routers, as a matter of course, or even among three or more access routers.

In the mobile communication system according to the present invention, more preferably, the instructing means of the server apparatus is configured to: instruct the router newly selected by the selecting means, to start multicasting the data; and instruct a router removed from the router to multicast the data, in conjunction with the selection of the router, to cancel multicast of the data.

In the data transmission method, in an example, in the instructing step, the instructing means of the server apparatus is configured to: instruct the router newly selected by the selecting means, to start multicasting the data; and instruct a router removed from the router to multicast the data, in conjunction with the selection of the router, to cancel multicast of the data.

According to these aspects of the invention, it becomes feasible to switch from a current multicast point to a new multicast point. Namely, variable control of multicast points is substantialized.

In the mobile communication system according to the present invention, more preferably, at an opportunity of a change in the access routers used in the multipath handover state by the mobile terminal, the server apparatus sequentially executes the acquiring process, the selecting process, and the instructing process.

The data transmission method, in an example, comprises a step wherein at an opportunity of a change in the access routers used in the multipath handover state by the mobile terminal, the server apparatus sequentially executes the acquiring process, the selecting process, and the instructing process.
The change in the access routers embraces an increase or a decrease in the number of access routers used by the mobile terminal.

Since the multicast point of data is present on the routes between the correspondent terminal and the mobile terminal, where the correspondent terminal is a stationary terminal not changing its location, the switch of multicast points is effectively implemented on occasions when the mobile terminal changes its using access routers. At an opportunity of a change in the access routers, the server apparatus sequentially executes the acquiring process, the selecting process, and the instructing process, whereby the dynamic control of multicast points can be performed at appropriate timing accordingly.

In the mobile communication system according to the present invention, more preferably, one of the access routers used in the multipath handover state by the mobile terminal sends a path information request to the correspondent terminal under communication with the mobile terminal; and the router connected to the correspondent terminal terminates the path information request and at this opportunity, the router sends path information to each of the access routers used in the multipath handover state by the mobile terminal.

The data transmission method, in an example, comprises a step wherein one of the access routers used in the multipath handover state by the mobile terminal sends a path information request to the correspondent terminal under communication with the mobile terminal; and a step wherein the router connected to the correspondent terminal terminates the path information request and at this opportunity, the router sends path information to each of the access routers used in the multipath handover state by the mobile terminal.

According to these aspects of the invention, at the opportunity of the request from the access router used by the mobile terminal, the transmission of path information is started, which gives an opportunity for selection of the optimal multicast point. Therefore, it becomes feasible to implement highly flexible selection of the multicast point according to the locations of the access routers used by the mobile terminal. For example, the system and method can quickly be adapted even for cases where there occurs a change in the used access routers in conjunction with movement of the mobile terminal.

In the mobile communication system according to the present invention, more preferably, each access router receiving the path information records identification information of the access router itself in the path information and sends the path information to the server apparatus.

The data transmission method, in an example, comprises a step wherein each access router receiving the path information records identification information of the access router itself in the path information and sends the path information to the server apparatus.

According to these aspects of the invention, the server apparatus is able to readily recognize both the routers on the shortest paths from the correspondent terminal to the respective access routers, and the access routers as multicast destinations. Accordingly, it is able to quickly notify the multicast point of the multicast destinations.

In the mobile communication system according to the present invention, more preferably, the router newly selected by the selecting means receives a multicast start request from the server apparatus, retains information (multicast destinations) included in the multicast start request, and multicasts data addressed to the mobile terminal; and the router removed from the router to multicast the data, in conjunction with the selection of the router receives a multicast stop request from the server apparatus and stops multicasting the data.

The data transmission method, in an example, comprises a step wherein the router newly selected by the selecting means receives a multicast start request from the server apparatus, retains information (multicast destinations) included in the multicast start request, and multicasts data addressed to the mobile terminal; and a step wherein the router removed from the router to multicast the data, in conjunction with the selection of the router receives a multicast stop request from the server apparatus and stops multicasting the data.

According to these aspects of the invention, the router receiving the multicast start request is able to readily acknowledge that the router itself was selected as a new multicast point, and also acknowledge the multicast destinations of the received data directed to the mobile terminal. In addition, the router receiving the multicast stop request is able to readily acknowledge that the multicast of the received data directed to the mobile terminal should be stopped thereafter, in connection with the removal of the router itself from the multicast point.

In the mobile communication system according to the present invention, more preferably, when receiving the data addressed to the mobile terminal, the router newly selected by the selecting means makes copies of the data by the number of routers as multicast destinations and transmits the data copies to the respective multicast destinations.

The data transmission method, in an example, comprises a step wherein, when receiving the data addressed to the mobile terminal, the router newly selected by the selecting means makes copies of the data by the number of routers as multicast destinations and transmits the data copies to the respective multicast destinations.

According to these aspects of the invention, the router as a multicast point is able to simultaneously transmit the data identical with the received data addressed to the mobile terminal, to each of the access routers of the multicast destinations. This results in transmitting the plurality of identical data from the access routers to the mobile terminal. The mobile terminal becomes able to perform stabler data reception, for example, by receiving those data while combining them.

In the mobile communication system according to the present invention, more preferably, the path information request contains identification information of a sender and a recipient of the path information request and also contains identification information of the mobile terminal and identification information of the access routers to be designated as destinations of the path information.

In the data transmission method, in an example, the path information request contains identification information of a sender and a recipient of the path information request and also contains identification information of the mobile terminal and identification information of the access routers to be designated as destinations of the path information.

According to these aspects of the invention, the router connected to the correspondent terminal is able to readily recognize the mobile terminal as a destination of the data and the plurality of access routers as destinations of the path information, as well as the sender and recipient of the path information request.

In the mobile communication system according to the present invention, more preferably, the path information contains identification information of a sender and a recipient of the path information and also contains identification information of the mobile terminal, identification information of the correspondent terminal, and identification information of the router as a start point of a path indicated by the path information.

In the data transmission method, in an example, the path information contains identification information of a sender and a recipient of the path information and also contains identification information of the mobile terminal, identification information of the correspondent terminal, and identification information of the router as a start point of a path indicated by the path information.

According to these aspects of the invention, each router is able to readily recognize the mobile terminal as a destination of the data, the correspondent terminal as a source of the data, and the router connected to the correspondent terminal (a start point of the route), as well as the sender and recipient of the path information.

In the mobile communication system according to the present invention, more preferably, the multicast start request contains identification information of a sender and a recipient of the multicast start request and also contains identification information of the mobile terminal and identification information of routers of multicast destinations; and the multicast stop request contains identification information of a sender and a recipient of the multicast stop request and also contains identification information of the mobile terminal.

In the data transmission method, in an example, the multicast start request contains identification information of a sender and a recipient of the multicast start request and also contains identification information of the mobile terminal and identification information of routers of multicast destinations; and the multicast stop request contains identification information of a sender and a recipient of the multicast stop request and also contains identification information of the mobile terminal.

According to these aspects of the invention, the router receiving the multicast start request is able to readily acknowledge that the start of multicast is requested for the data addressed to the mobile terminal identified by the identification information, and recognize the multicast destinations of the received data, as well as the sender and the recipient of the multicast start request. The router receiving the multicast stop request is able to readily acknowledge that the stop of multicast is requested for the data addressed to the mobile terminal identified by the identification information, as well as the sender and recipient of the multicast stop request.

Another mobile communication system according to the present invention includes a plurality of relay routers, a plurality of access routers, and a server apparatus, the mobile communication system being constructed in a configuration wherein a router existing on paths for delivery of data from a correspondent terminal to a mobile terminal via each of access routers used in a multipath handover state by the mobile terminal, multicasts the data, wherein the server apparatus performs such a control as to dynamically switch one router to multicast the data, to another in conjunction with movement of the mobile terminal or the correspondent terminal" wherein the server apparatus comprises: acquiring means for acquiring path information between a router connected to the correspondent terminal and each of the access routers used in the multipath handover state by the mobile terminal, based on information in a link state database of OSPF, which was acquired from the router or the access router; selecting means for making a comparison of the path information acquired by the acquiring means and selecting a router to multicast the data, based on a result of the comparison; and instructing means for instructing the router selected by the selecting means, to multicast the data; wherein the acquiring means of the server apparatus is configured to: acquire from at least one router belonging to each management area of OSPF used by a network, information in the link state database made in the management area to which said router belongs; change all cost values between routers or access routers, recorded in the link state database, to an identical numeral larger than 0 according to need; receive from a router connected to the correspondent terminal, a start point search response indicating that said router is a start point of path information; activate a shortest path algorithm with the router indicated by the start point search response, as a start point, and thereby generate a shortest hop tree with said router at a start point; and refer to the shortest hop tree to acquire as path information, routers on a shortest path from the router as a start point to each access router as an end point, and a passing order thereof.

Another server apparatus according to the present invention is a server apparatus for connection to a plurality of relay routers and to a plurality of access routers, the server apparatus being configured to perform such a control as to dynamically switch one router to multicast the data, to another in conjunction with movement of the mobile terminal or the correspondent terminal , wherein a router existing on paths for delivery of data from a correspondent terminal to a mobile terminal via each of access routers used in a multipath handover state by the mobile terminal, multicasts the data, the server apparatus comprising: acquiring means for acquiring path information between a router connected to the correspondent terminal and each of the access routers used in the multipath handover state by the mobile terminal, based on information in a link state database of OSPF, which was acquired from the router or the access router; selecting means for making a comparison of the path information acquired by the acquiring means and selecting a router to multicast the data, based on a result of the comparison; and instructing means for instructing the router selected by the selecting means, to multicast the data; wherein acquiring means of the server apparatus is configured to: acquire from at least one router belonging to each management area of OSPF used by a network, information in the link state database made in the management area to which said router belongs; change all cost values between routers or access routers, recorded in the link state database, to an identical numeral larger than 0 according to need; receive from a router connected to the correspondent terminal, a start point search response indicating that said router is a start point of path information; activate a shortest path algorithm with the router indicated by the start point search response, as a start point, and thereby generate a shortest hop tree with said router at a start point; and refer to the shortest hop tree to acquire as path information, routers on a shortest path from the router as a start point to each access router as an end point, and a passing order thereof.

Another data transmission method according to the present invention is a data transmission method in a mobile communication system including a plurality of relay routers, a plurality of access routers, and a server apparatus, the mobile communication system being constructed in a configuration wherein a router existing on paths for delivery of data from a correspondent terminal to a mobile terminal via each of access routers used in a multipath handover state by the mobile terminal, multicasts the data, said data transmission method including: a control step wherein the server apparatus dynamically switches one router to multicast the data, to another in conjunction with movement of the mobile terminal or the correspondent terminal; an acquiring step wherein acquiring means of the server apparatus acquires path information between a router connected to the correspondent terminal and each of the access routers used in the multipath handover state by the mobile terminal, based on information in a link state database of OSPF, which was acquired from the router or the access router; a selecting step wherein selecting means of the server apparatus makes a comparison of the path information acquired in the acquiring step and selects a router to multicast the data, based on a result of the comparison; and an instructing step wherein instructing means of the server apparatus instructs the router selected in the selecting step, to multicast the data; wherein the acquiring means of the server apparatus: acquires from at least one router belonging to each management area of OSPF used by a network, information in the link state database made in the management area to which said router belongs; changes all cost values between routers or access routers, recorded in the link state database, to an identical numeral larger than 0 according to need; receives from a router connected to the correspondent terminal, a start point search response indicating that said router is a start point of path information; activates a shortest path algorithm with the router indicated by the start point search response, as a start point, and thereby generates a shortest hop tree with said router at a start point; and refers to the shortest hop tree to acquire as path information, routers on a shortest path from the router as a start point to each access router as an end point, and a passing order thereof.

In the mobile communication system according to the present invention, in order to implement acquisition of path information with reference to a link state database of OSPF, the acquiring means of the server apparatus is configured to: acquire from at least one router belonging to each management area of OSPF used by a network, information in a link state database made in the management area to which the router belongs; change all cost values between routers or access routers, recorded in the link state database, to an identical numeral larger than 0 according to need; receive from a router connected to the correspondent terminal, a start point search response indicating that the router is a start point of path information; activate a shortest path algorithm with the router indicated by the start point search response, as a start point, and thereby generate a shortest hop tree (optimal path) with the router at a start point; and refer to the shortest hop tree to acquire as path information, routers on a shortest path from the router as a start point to each access router as an end point, and a passing order thereof.

Similarly, in the data transmission method according to the present invention, in order to implement the acquisition of path information with reference to a link state database of OSPF, in the acquiring step, the acquiring means of the server apparatus is configured to: acquire from at least one router belonging to each management area of OSPF used by a network, information in a link state database made in the management area to which the router belongs; change all cost values between routers or access routers, recorded in the link state database, to an identical numeral larger than 0 according to need; receive from a router connected to the correspondent terminal, a start point search response indicating that the router is a start point of path information; activate a shortest path algorithm with the router indicated by the start point search response, as a start point, and thereby generate a shortest hop tree (optimal path) with the router at a start point; and refer to the shortest hop tree to acquire as path information, routers on a shortest path from the router as a start point to each access router as an end point, and a passing order thereof.

According to these aspects of the invention, the path information is acquired on the basis of the information in the link state database of OSPF, which was acquired from the router or access router. Therefore, in order for the server apparatus to acquire the path information, there is no need for the processes of transmitting and receiving the path information to and from the routers and access routers and the process of updating the path information. This reduces the processing load and communication load on the nodes in the network. As a result, it becomes feasible to implement efficient utilization of resources without any redundant path, which is the object of the present invention, while reducing the load on the network.

The mobile communication system according to the present invention may be configured so that one of the access routers used in the multipath handover state by the mobile terminal sends a start point search request to the correspondent terminal as a correspondent under communication with the mobile terminal, and so that the router connected to the correspondent terminal terminates the start point search request thereat and at this opportunity, the router sends the start point search response in which identification information of the router is recorded, to the server apparatus.

The data transmission method, in an example, may further comprise a step wherein one of the access routers used in the multipath handover state by the mobile terminal sends a start point search request to the correspondent terminal as a correspondent under communication with the mobile terminal; and a step wherein the router connected to the correspondent terminal terminates the start point search request thereat and at this opportunity, the router sends the start point search response in which identification information of the router is recorded, to the server apparatus.

According to these aspects of the invention, in response to the start point research request from the access router, the start point search response is transmitted from the router connected to the correspondent terminal, to the server apparatus. The server apparatus, receiving this start point search response, is able to readily comprehend the router at the start point necessary for activation of the shortest path algorithm. Furthermore, the server apparatus generates the shortest hop tree with the router at a start point, and it becomes feasible to acquire the path information with reference to the shortest hop tree.

In the mobile communication system according to the present invention, preferably, the start point search request contains identification information of a sender and a recipient of the start point search request and also contains identification information of the mobile terminal.
In the data transmission method, in an example, the start point search request contains identification information of a sender and a recipient of the start point search request and also contains identification information of the mobile terminal.

According to these aspects of the invention, the start point search request, which is transmitted from one of the access routers used in the multipath handover state by the mobile terminal, to the correspondent terminal, contains the identification information of the mobile terminal, as well as the identification information of the sender and recipient of the request. Therefore, the start point search request always passes the router connected to the correspondent terminal, and by receiving the start point search request, the pertinent router is able to readily comprehend that the request concerns the path whose terminal is the mobile terminal identified by the identification information.

In the mobile communication system according to the present invention, preferably, the start point search response contains identification information of a sender and a recipient of the start point search response and also contains identification information of the mobile terminal, identification information of the correspondent terminal, and identification information of a router as a start point obtained by a search.
In the data transmission method, in an example, the start point search response contains identification information of a sender and a recipient of the start point search response and also contains identification information of the mobile terminal, identification information of the correspondent terminal, and identification information of a router as a start point obtained by a search.

According to these aspects of the invention, the start point search response transmitted from the router connected to the correspondent terminal and terminating the start point search request, to the server apparatus, contains the identification information of the sender and recipient thereof, and also contains the identification information of the mobile terminal and the identification information of the correspondent terminal. Therefore, when receiving the start point search response, the server apparatus is able to readily comprehend that the response concerns the path between the mobile terminal and the correspondent terminal identified by their respective identification information. The start point search response also contains the identification information of the router as a start point obtained by a search. Therefore, when receiving the start point search response, the server apparatus is able to readily comprehend that the router identified by the identification information is a start point necessary in activation of the shortest path algorithm.

The present invention has achieved the efficient utilization of resources without any redundant path, based on the finding of the optimal multicast point and the dynamic change of the multicast point.

The present invention will become more fully understood from the detailed description given herein below and the accompanying drawings which are given by way of illustration only, and thus are not to be considered as limiting the present invention.
Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1A is an illustration for explaining the Intra-RNC handover in the conventional UMTS. Fig. 1B is an illustration for explaining the Inter-RNC handover in the conventional UMTS.

Fig. 2A is an illustration for explaining the process up to selection of a multicast point in the mobile communication system of the first embodiment in the case where the mobile terminal is connected to two access routers. Fig. 2B is an illustration for explaining the process up to execution of multicast in the same situation.

Fig. 3 is a block diagram showing the functional configuration of the control server.

Fig. 4 is a diagram showing a data storage example of the path information table in the case where the mobile terminal is connected to two access routers.

Fig. 5 is a flowchart for explaining the path information comparison process.

Fig. 6A is an illustration for explaining the process up to selection of multicast points in the mobile communication system of the first embodiment in the case where there is an increase in the number of access routers used by the mobile terminal. Fig. 6B is an illustration for explaining the process up to execution of multicast in the same situation.

Fig. 7 is a diagram showing a data storage example of the path information table in the case where there is an increase in the number of access routers used by the mobile terminal.

Fig. 8A is an illustration for explaining the process up to selection of a multicast point in the mobile communication system of the first embodiment in the case where there is a decrease in the number of access routers used by the mobile terminal. Fig. 8B is an illustration for explaining the process up to execution of multicast in the same situation.

Fig. 9 is a diagram showing a data storage example of the path information table in the case where there is a decrease in the number of access routers used by the mobile terminal.

Fig. 10 is an illustration for explaining the process of transmitting the path information request in the mobile communication system of the second embodiment.

Fig. 11A is an illustration for explaining the process of transmission of the path information request on the mobile terminal side in the mobile communication system of the third embodiment. Fig. 11B is an illustration for explaining the process of transmission of the path information request on the correspondent terminal side in the same system.

Fig. 12 is an illustration for explaining the process of execution of the path information acquiring step in the mobile communication system of the fourth embodiment in the case where the mobile terminal is connected to two access routers.

Fig. 13 is a flowchart for explaining specific processing of the path information acquiring step in the fourth embodiment.

Fig. 14A is a diagram showing the LSDB information of area 0 in the fourth embodiment. Fig. 14B is a diagram showing the LSDB information of area 1 in the same embodiment. Fig. 14C is a diagram showing the LSDB information of area 2 in the same embodiment.

Fig. 15A is a diagram showing a state in which 1 is set at all the cost values in the LSDB information of area 0 in the fourth embodiment. Fig. 15B is a diagram showing a state in which 1 is set at all the cost values in the LSDB information of area 1 in the same embodiment. Fig. 15C is a diagram showing a state in which 1 is set at all the cost values in the LSDB information of area 2 in the same embodiment.

Fig. 16A is an illustration showing the shortest hop tree with RT 21 at a start point, generated based on the LSDB information of Fig. 15A. Fig. 16B is an illustration showing the shortest hop tree with RT 24 at a start point, generated based on the LSDB information of Fig. 15B. Fig. 16C is an illustration showing the shortest hop tree with RT 25 at a start point, generated based on the LSDB information of Fig. 15C.

Fig. 17 is an illustration showing the shortest hop tree generated by piecing together the shortest hop trees shown in Figs. 16A to 16C.

Fig. 18 is an illustration for explaining the process of execution of the path information acquiring step in the mobile communication system of the fourth embodiment in the case where there is an increase in the number of access routers connected to the mobile terminal.

Fig. 19 is an illustration for explaining the process of execution of the path information acquiring step in the mobile communication system of the fourth embodiment in the case where there is a decrease in the number of access routers connected to the mobile terminal.

Fig. 20 is an illustration showing the shortest hop tree generated by piecing together the shortest hop trees shown in Figs. 16A and 16C.

Fig. 21 is an illustration for explaining the process of transmission of the start point search request in the mobile communication system of the fifth embodiment.

Fig. 22A is an illustration for explaining the process of transmission of the start point search request on the mobile terminal side in the mobile communication system of the sixth embodiment. Fig. 22B is an illustration for explaining the process of transmission of the start point search request on the correspondent terminal side in the same system.

Fig. 23A is an illustration showing the shortest hop tree with AR 34 at a start point, generated based on the LSDB information of Fig. 15C. Fig. 23B is an illustration showing the shortest hop tree with RT 25 at a start point, generated based on the LSDB information of Fig. 15A. Fig. 23C is an illustration showing the shortest hop tree with RT 24 at a start point, generated based on the LSDB information of Fig. 15B.

Fig. 24 is an illustration showing the shortest hop tree generated by piecing together the shortest hop trees shown in Figs. 23A to 23C.

Fig. 25A is an illustration showing the shortest hop tree with RT 24 at a start point, generated based on the LSDB information of Fig. 15A. Fig. 25B is an illustration showing the shortest hop tree with RT 25 at a start point, generated based on the LSDB information of Fig. 15C.

Fig. 26 is an illustration showing the shortest hop tree generated by piecing together the shortest hop trees shown in Figs. 25A and 25B.

### DESCRIPTION OF THE PREFERRED EMBODIMENTS

### First Embodiment

The first embodiment of the present invention will be described below in detail with reference to the drawings.

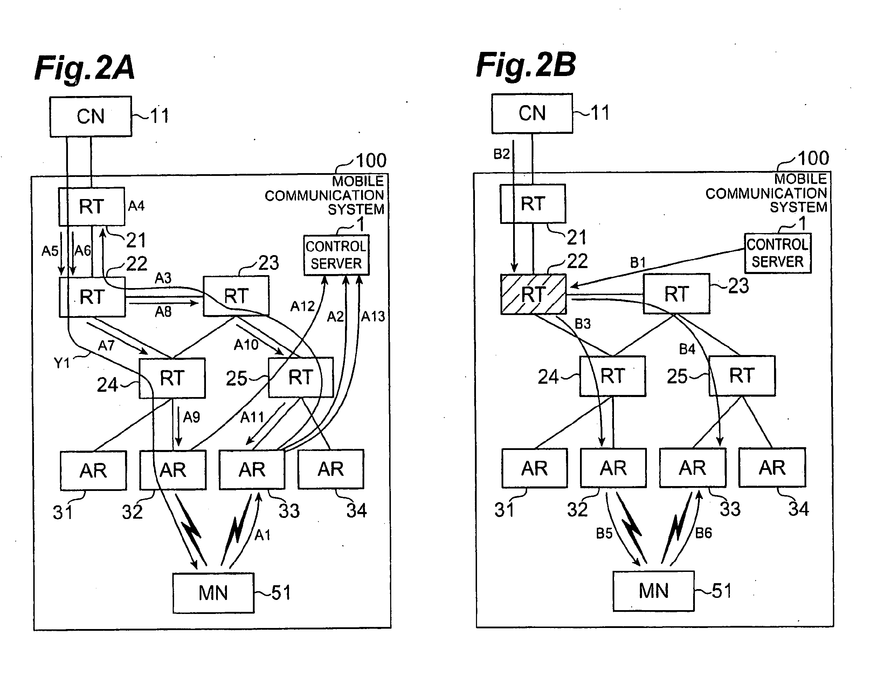

Fig. 2A is an illustration showing a state of the multicast point selection applied to the case where CN 11 is connected to a router in a network to which MN 51 is connected (the network will be referred to hereinafter as a "home network"). As shown in Fig. 2A, mobile communication system 100 according to the present invention is comprised of control server 1, a plurality of RTs 21-25, a plurality of ARs 31-34, and MN 51. CN 11 is connected to relay router RT 21 in the home network.

The correspondence is as follows between the constituent elements in the embodiments of the invention and in the scope of claims. Control server 1 corresponds to the server apparatus, CN (Correspondent Node) 11 to the correspondent terminal, RTs (RouTers) 21-25 to the relay routers, ARs (Access Routers) 31-34 to the access routers, and MN (Mobile Node) 51 to the mobile terminal. In the description hereinafter, RTs and ARs will be represented together by routers as occasion may demand.

At a start of communication with CN 11, MN 51 uses only AR 32 as an access router, and data from CN 11 to MN 51 is routed through the shortest path as indicated by arrow Y1. Since AR 32 is an access router used at the start of communication by MN 51, the mobile communication system 100 does not always have to execute the multicast point selection process. Even if the selection process is executed, no multicast point will be selected, because the access router used by the MN 51 is only AR 32.

Subsequently, MN 51 becomes able to receive radio waves from AR 33, whereupon MN 51 comes to use two access routers. Therefore, the selection of the multicast point is carried out.

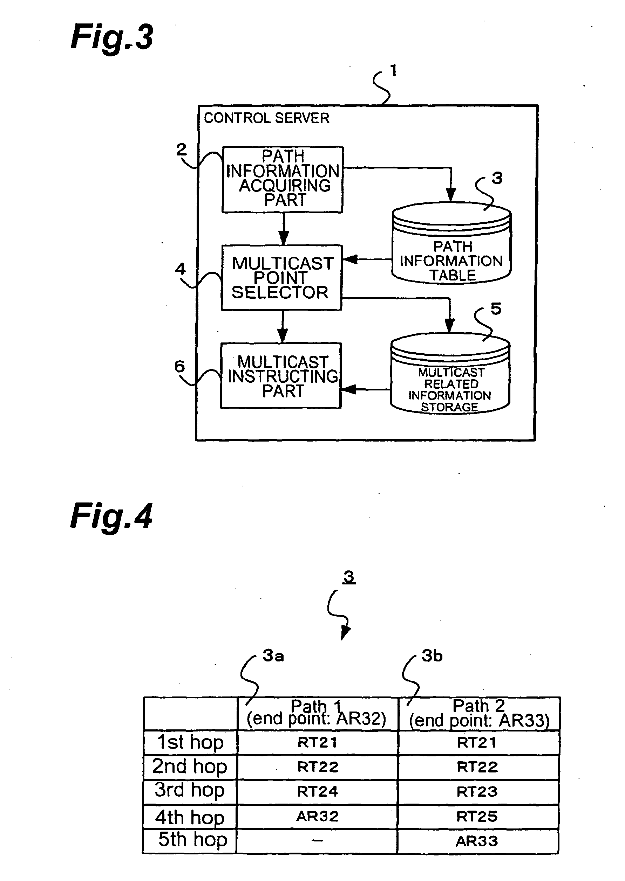

Here the control server 1 is a constituent element of the mobile communication system 100 according to the present invention and principal entity of executing the dynamic control of the multicast point, and thus the configuration thereof will be detailed below. Fig. 3 is a block diagram showing the functional configuration of control server 1. As shown in Fig. 3, the control server 1 is provided with at least path information acquiring part 2, path information table 3, multicast point selector 4, multicast related information storage 5, and multicast instructing part 6.

The path information acquiring part 2 acquires, for example, from AR 32 and AR 33 the path information from RT 21 each collected at AR 32 and AR 33, and stores it into the path information table 3.

The path information table 3 stores identification information of routers present on shortest paths with an end point being each access router used by MN 51, as hops in each of the paths. The identification information of each router is, for example, an IP address, a MAC address, or the like of the router.

The multicast point selector 4 selects a multicast point for providing the shortest paths from CN 11 to ARs 32, 33, with reference to the hops in each of the paths stored in the path information table 3.

The multicast related information storage 5 retains the multicast point selected by the multicast point selector 4, and the multicast destinations in correlation with each other, as updatable multicast related information.

The multicast instructing part 6 instructs the multicast point selected by the multicast point selector 4, to multicast data directed to MN 51.

The following is the description of the multicast point selection in a transition of MN 51 into a state where it receives data while simultaneously using ARs 32, 33 (the multipath handover state), and the state of multicast.

### (Path Information Acquiring Step)

First, steps up to acquisition of path information by control server 1 will be described with reference to Fig. 2A. In conjunction with the addition of AR 33 used as an access router, MN 51 detects a change in usage of access routers, and then, in order to activate the multicast point selection process, it transmits the identification information of the access routers presently under use (ARs 32, 33) and the identification information of the correspondent terminal currently under communication (CN 11) to one of the access routers presently under use (e.g., AR 33) (cf. A1). Here the identification information of the correspondent terminal is, for example, an IP address or the like of the correspondent terminal.

Receiving the identification information of AR 32, AR 33, and CN 11 from MN 51 at A1, AR 33 notifies the control server 1 that the multicast point selection process was activated in communication paths between CN 11 and MN 51. This notification is implemented by collectively transmitting and receiving the identification information (e.g., an IP address) of MN 51 as a sender of the above identification information, and the identification information of AR 32, AR 33, and CN 11 (A2).

Receiving the identification information of MN 51, AR 32, AR 33, and CN 11 from AR 33 at A2, the control server 1 acknowledges that the multicast point selection process was activated, and awaits transmission of path information from each access router (AR 32, AR 33).

At A3, AR 33 refers to the identification information of CN 11 received at A1, and transmits a path information request to CN 11. This path information request contains the identification information of MN 51 being a mobile terminal of a data recipient, and the identification information of ARs 32, 33 being recipients of path information. This transmission process may be executed after completion of the notification process at A2, or may be executed in parallel with the notification process at A2.

The path information request is routed to CN 11, but RT 21 terminates the path information request at the point where the path information request arrives at RT 21, because RT 21 preliminarily acknowledges that CN 11 as a destination of the path information request is connected under the command of its own (A4).

Then RT 21 refers to the identification information of ARs 32, 33 received at A3, and transmits path information to both ARs 32, 33. This path information contains the identification information of CN 11 being a sender of data, the identification information of MN 51 being a destination of data, and the identification information of RT 21 itself. Each path information is routed through a shortest path for arrival at the recipient access router.

In the present embodiment, each path information is first transmitted to RT 22 (A5 and A6). RT 22 determines whether the information received from RT 21 is path information, then adds the identification information of RT 22 itself into each path information, and transmits this path information to next routers on the shortest paths. Namely, the path information is transmitted from RT 22 to each of RT 23 and RT 24 (A7 and A8).

Thereafter, similarly, RT 24, receiving the path information, adds the identification information of RT 24 itself into the path information, and then transmits this path information to AR 32 being the next router on the shortest path (A9). RT 23, receiving the path information, adds the identification information of RT 23 itself into the path information, and then transmits this path information to RT 25 being the next router on the shortest path (A10). Furthermore, RT 25 adds the identification information of RT 25 itself into the path information, and then transmits this path information to AR 33 being the next router on the shortest path (A11).

As a result of the above processing, each path information arrives at AR 32 and AR 33, which are the end points of the respective paths. ARs 32, 33 also add their identification information into the received path information. Then AR 32 transmits the complete path information to control server 1 (A12). Likewise, AR 33 transmits the complete path information to control server 1 (A13). This results in aggregating the path information containing the description of the shortest path from RT 21 to AR 32 and the path information containing the description of the shortest path from RT 21 to AR 33, at the control server 1.

Fig. 4 is a diagram showing a configuration example of path information table 3 storing the path information aggregated at control server 1. As shown in Fig. 4, the path information table 3 stores the identification information of the routers existing on the shortest paths with the access routers used by MN 51, at end points in each of the paths (path 1 and path 2). In the present embodiment, for simplicity, the identification information of the routers is assumed to be identical with the reference symbols of the routers in the drawing.

More specifically, the path information table 3 has route 1 storage area 3a and route 2 storage area 3b. The route 1 storage area 3a stores RT 21, RT 22, RT 24, and AR 32, which are the identification information of the routers passed by the path from the first hop (start point) to the end-point hop (fourth hop), in their passing order. The route 2 storage area 3b stores RT 21, RT 22, RT 23, RT 25, and AR 33, which are the identification information of the routers passed by the path from the first hop (start point) to the end-point hop (fifth hop), in their passing order.

### (Path Information Comparison Step)

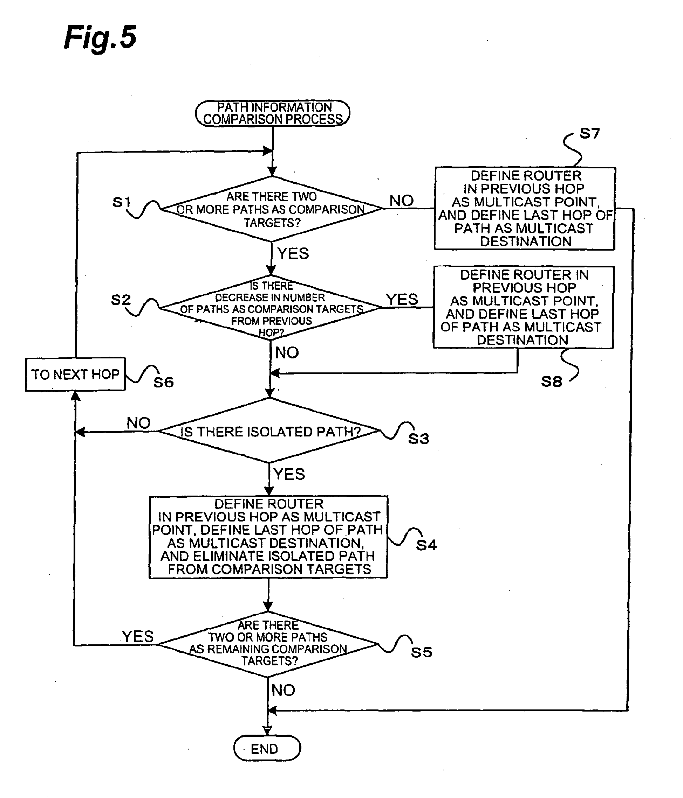

Next, the step wherein control server 1 makes comparisons of the path information with reference to the path information table 3 will be described with reference to Fig. 5. Fig. 5 is a flowchart for explaining the path information comparison process.

The path information comparison process is started from the first hop, i.e., from the router as a start point of the path information. At step S1 in Fig. 5, it is determined whether there exist two or more paths as targets for a comparison. When the result of the determination is that there exist two or more paths, the control server moves to step S2. When the number of paths is not more than 1, the control server moves to step S7.

At step S2, it is determined whether the number of paths as targets for the comparison is decreased from the number of paths having been comparison targets in the hop compared immediately before the current comparison process. It is, however, noted that the determination is made after elimination of a decrease due to exception of a path at after-described step S4. When the result of the determination is no decrease, the control server moves to step S3. When a decrease is acknowledged, the control server moves to step S8.

At step S3, identity is determined of passing routers (RT or AR) on the respective paths in a hop presently under a comparison, so as to determine whether there exists a path against which there is no other path passing a router identical with a router on the path itself (such a path will be referred to hereinafter as an "isolated path"). When the result of the determination is that there exists an isolated path, the control server goes to step S4. When there exists no isolated path, the control server goes to step S6.

At step S4, since passing routers on the respective paths up to the hop compared immediately before the current process are identical and since passing routers are different in the hop presently under a comparison, a router located between the hops is determined as a multicast point. In other words, an RT or AR passed by each path in the hop compared immediately before is selected as a multicast point. The multicast destinations of data from the multicast point are determined to be an access router as a last hop on the isolated path and an access router as a last hop on any one path out of the paths other than the isolated path. Furthermore, the isolated path is eliminated from the target paths for comparisons, and then the control server transfers to step S5.

At step S5, it is determined whether there remain two or more comparison target paths as a result of the elimination of the above isolated path from the comparison targets. When the result of the determination is that there exist two or more target paths, the control server shifts to step S6. When the number of paths is not more than 1 on the other hand, the control server determines that there is no need for a further comparison, selects all the multicast points selected by the sequential comparison processing, as multicast points in the path information comparison step, and terminates the path information comparison process.

At step S6, the hop as a target for a comparison proceeds to the next hop and the processes at and after step S 1 are again executed.

At step S7, a passing router on each path in the hop compared immediately before (all the passing routers must be identical among the paths) is selected as a multicast point. An access router as a last hop on the remaining path is selected as a multicast destination from the selected router. Furthermore, since the number of paths as comparison targets is one, the control server selects all the multicast points selected by the sequential comparison processing, as multicast points in the path information comparison step, and terminates the path information comparison process.

At step A8, a passing router on each path corresponding to the hop compared immediately before (all the routers must be identical among the paths) is selected as a multicast point. Access routers corresponding to the last hops on the remaining paths are selected as multicast destinations from the selected router. Furthermore, since there exist two or more paths as comparison targets, the control server moves to step S3 to continue the path information comparison step.

A process of selection of a multicast point based on the path information table shown in Fig. 4 will be described below as a specific processing example of the above-stated path information comparison step.
1. The path information comparison step is started from RT 21 being the first hop.
2. Since the paths compared in the first hop are two paths indicated by A5 and A6 in Fig. 2A, the control server moves to step S2 (corresponding to step S1 in Fig. 5).
3. There is no hop before the first hop, and this corresponds to the case where the number of compared paths is not decreased from the number of paths in the hop immediately before. Therefore, the control server goes to step S3 (corresponding to step S2 in Fig. 5).
4. Path A6 shown in Fig. 2A, with respect to path A5 shown in Fig. 2A, and path A5 with respect to path A6 pass RT 21 being an identical router, and thus there exists no isolated path. Therefore, the control server shifts to step S6 (corresponding to step S3 in Fig. 5).
5. With a transition to RT 22 corresponding to the second hop, the control server transfers to step S1 (corresponding to step S6 in Fig. 5).
6. In this case, the paths to be compared are two paths indicated by A7 and A8 in Fig. 2A, and thus the control server goes to step S2 (corresponding to step S1 in Fig. 5).
7. Since the number of compared paths is still unchanged from the number of compared paths in the first hop, i.e., since there is no decrease, the control server shifts to step S3 (corresponding to step S2 in Fig. 5).
8. At this point, path A8 with respect to the path A7 shown in Fig. 2A, and path A7 with respect to path A8 pass RT 22 being an identical router, and there exists no isolated path. Therefore, the control server moves to step S6 (corresponding to step S3 in Fig. 5).
9. With a transition to RT 24 and RT 23 corresponding to the third hop, the control server goes to step S1 (corresponding to step S6 in Fig. 5).
10. In this case, the compared paths are also two paths indicated by A9 and A10 in Fig. 2A, and thus the control server moves to step S2 (corresponding to step S1 in Fig. 5).
11. Since the number of compared paths still remains unchanged from the number of compared paths in the second hop, i.e., since there is no decrease, the control server transfers to step S3 (corresponding to step S2 in Fig. 5).
12. Path A10 with respect to path A9 shown in Fig. 2A and path A9 with respect to path A10 pass no identical router, and here appear isolated paths. Therefore, the control server moves to step S4 (corresponding to step S3 in Fig. 5).
13. RT 22 corresponding to the hop immediately before (second hop) is selected as a multicast point. The multicast destinations from RT 22 are determined to be AR 32 of the last hop of the path A9 as an isolated path and AR 33 of the last hop of the path A10 as another isolated path. Furthermore, path A9 and path A10 of the isolated paths are eliminated from the comparison targets, and the control server transfers to step S5 (corresponding to step S4 in Fig. 5).
14. Since path A9 and path A10 are eliminated from the comparison targets at step S4, the number of paths as comparison targets is one, path A11 shown in Fig. 2A, i.e., this situation corresponds to the case where the number of paths is not more than 1, and thus the path information comparison step is terminated.

In the path information comparison step in the present embodiment, as described above, TR 22 (the relay router indicated by hatching in Fig. 2B) is selected as a multicast point, and AR 32 and AR 33 are determined as multicast destinations from the selected multicast point.

### (Instruction Step)

In the instruction step, control server 1 sends to each router an instruction indicating that the multicast point selected in the path information comparison step, is instructed to multicast data to the determined multicast destinations. The instruction step will be described below with reference to Fig. 2B.

Control server 1 determines recipients of messages to order a start and a stop of the multicast function, based on the information acquired in the path information comparison step and based on the information retained from before it, and updates the information retained about the multicast point.

In the present embodiment, there is no multicast point previously used before MN 51 uses AR 33, and control server 1 also acknowledges it. For this reason, there is no need for transmission of the message to order a stop of the multicast function, and the control server needs to only transmit the message to order a start of the multicast function (hereinafter referred to as "multicast start request"), to the multicast point.

Therefore, control server 1 transmits a multicast start request to RT 22 (arrow B1 in Fig. 2B). The multicast start request contains the identification information of MN 51 as a destination of multicast data, and the identification information of AR 32 and AR 33 as multicast destinations.

Receiving the multicast start request from control server 1, RT 22 saves the various information included in the multicast start request (e.g., the information about the multicast destinations) into a built-in cache, and starts the multicast function. Namely, thereafter, when receiving data addressed to MN 51, RT 22 makes copies of the data and sends the copies to the both access routers of ARs 32, 33.

Control server 1 updates the information retained about the multicast point. In the present embodiment, there exists no multicast point previously used about MN 51. For this reason, the multicast related information about MN 51 at this time is updated to "point: RT 22, multicast destinations: AR 32, AR 33" and the updated information is stored.

Let us assume here that CN 11 sends data addressed to MN 51 and the data is delivered via RT 21 to RT 22 (arrow B2 in Fig. 2B).

Receiving the data addressed to MN 51, RT 22 refers to the various information (e.g., the information about the multicast destinations) retained in its built-in cache, makes copies of the above data, and multicasts the copies to AR 32 and AR 33. This causes the data to be delivered through the shortest paths to AR 32 and AR 33 (arrows B3, B4 in Fig. 2B).

In the mobile communication system 100 of the first embodiment, as described above, RT 22 is selected as a multicast point out of the plurality of relay routers RT 21-25. This permits the data to be multicast through the optimal paths without any redundant portion up to the recipient access routers AR 32, AR 33. MN 51 receives the desired data while simultaneously using the plurality of access routers (AR 32, AR 33) (arrows B5, B6 in Fig. 2B), with a sufficient gain of multipath handover.

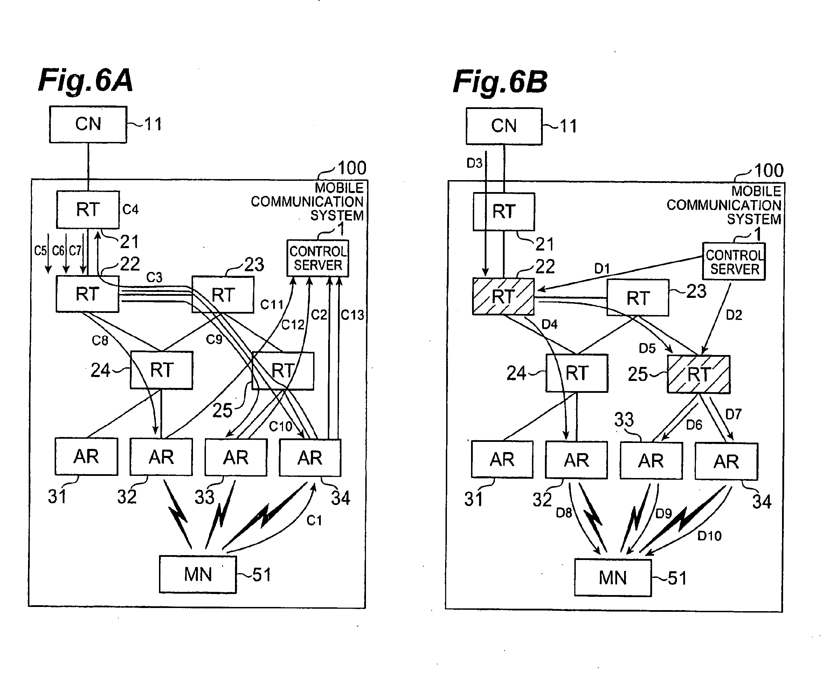

Next, Fig. 6A is an illustration showing a state of multicast point selection in a transition of MN 51 from the state shown in Fig. 2B to a state in which MN 51 receives data while further using AR 34 in addition to ARs 32, 33. Namely, before MN 51 adds use of AR 34, data from CN 11 to MN 51 is multicast at RT 22 to ARs 32, 33 to be routed through the paths indicated by arrows B2-B6 in Fig. 2B. When MN 51 becomes able to receive radio waves from AR 34 to enter the multipath handover state also using new AR 34, the selection of multicast point is carried out as described below.

### (Path Information Acquiring Step)

First, the steps up to acquisition of path information by control server 1 will be described. In conjunction with the addition of AR 34 used as an access router, MN 51 detects a change in usage of access routers, and then, in order to activate the multicast point selection process, it transmits the identification information of the access routers presently under use (ARs 32, 33, 34) and the identification information of CN 11 currently under communication to one of the access routers presently under use (e.g., AR 34) (cf. C1).

Receiving the identification information transmitted from MN 51 at C1, AR 34 notifies the control server 1 that the multicast point selection process was activated in communication paths between CN 11 and MN 51. This notification is implemented by collectively transmitting and receiving the identification information of MN 51 as a sender of the above identification information, and the identification information of AR 32, AR 33, AR 34, and CN 11 (C2).

Receiving the identification information transmitted from AR 34 at C2, the control server 1 acknowledges that the multicast point selection process was activated, and awaits transmission of path information from each access router (AR 32, AR 33, AR 34).

At C3, AR 34 refers to the identification information of CN 11 received at C1, and transmits a path information request to CN 11. This path information request contains the identification information of MN 51 being a mobile terminal of a data recipient, and the identification information of ARs 32, 33, 34 being recipients of path information. This transmission process may be executed after completion of the notification process at C2, or may be executed in parallel with the notification process at C2.

The path information request is routed to CN 11, but RT 21 terminates the path information request at the point where the path information request arrives at RT 21, because RT 21 preliminarily acknowledges that CN 11 as a destination of the path information request is connected under the command of its own (C4).

Then RT 21 refers to the identification information of ARs 32, 33, 34 received at C3, and transmits the path information to all ARs 32, 33, 34. This path information contains the identification information of CN 11 being a sender of data, the identification information of MN 51 being a destination of data, and the identification information of RT 21 itself. Each path information is routed through the shortest path for arrival at the recipient access router.

In the present embodiment, each path information is first transmitted to RT 22 (C5, C6, and C7). RT 22 determines whether the information received from RT 21 is path information, then adds the identification information of RT 22 itself into each path information, and transmits this path information to the next routers on the shortest paths. Namely, the path information transmitted from RT 22 is delivered via RT 24 to AR 32 (C8), and is also delivered via RT 23 and RT 25 to each of AR 33 and AR 34 (C9 and C10).

Specifically, RT 24, receiving the path information, adds the identification information of RT 24 itself into the path information, and then transmits this path information to AR 32 being the next router on the shortest path (C8). RT 23, receiving the path information, adds the identification information of RT 23 itself into the path information, and then transmits this path information to RT 25 being the next router on the shortest path. Furthermore, RT 25 adds the identification information of RT 25 itself into the path information, and then transmits this path information to AR 33 being the next router on the shortest path to AR 33 (C9). Similarly, RT 25 adds the identification information of RT 25 itself into the path information, and then transmits this path information to AR 34 being the next router on the shortest path to AR 34 (C10).

As a result of the above processing, each path information arrives at AR 32 to AR 34, which are the end points of the respective paths. AR 32 to AR 34 also add their identification information into the received path information. Then AR 32 transmits the complete path information to control server 1 (C11). Likewise, AR 33 transmits the complete path information to control server 1 (C12). Likewise, AR 34 transmits the complete path information to control server 1 (C13). These transmission processes result in aggregating the path information containing the description of the shortest path from RT 21 to AR 32, the path information containing the description of the shortest path from RT 21 to AR 33, and the path information containing the description of the shortest path from RT 21 to AR 34, at the control server 1.

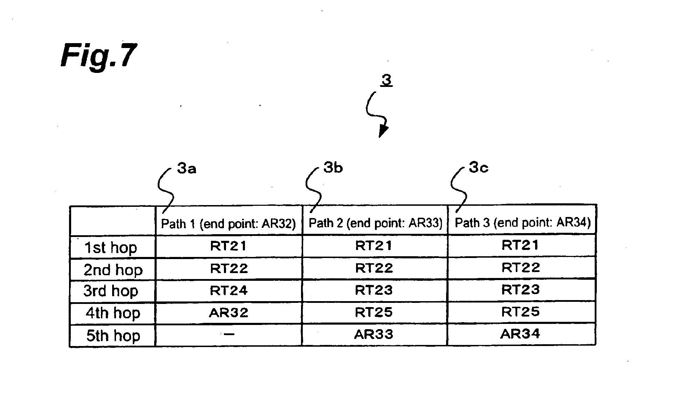

Fig. 7 is a diagram showing a state in which the path information aggregated at control server 1 is stored in the path information table 3. As shown in Fig. 7, the path information table 3 stores the identification information of the routers existing on the shortest paths with the end points of the access routers used by MN 51, as first to fifth hops in each of paths. In the present embodiment, for simplicity, the identification information of the routers is assumed to be identical with the reference symbols of the routers in the drawing.

More specifically, the path information table 3 has route 3 storage area 3c, in addition to route 1 storage area 3a and route 2 storage area 3b. The route 1 storage area 3a stores "RT 21, RT 22, RT 24, and AR 32," as the identification information of the routers passed by the path from the first hop (start point) to the end-point hop (fourth hop), in their passing order. The route 2 storage area 3b stores "RT 21, RT 22, RT 23, RT 25, and AR 33," as the identification information of the routers passed by the path from the first hop (start point) to the end-point hop (fifth hop), in their passing order. Furthermore, the route 3 storage area 3c stores "RT 21, RT 22, RT 23, RT 25, and AR 34," as the identification information of the routers passed by the path from the first hop (start point) to the end-point hop (fifth hop), in their passing order.

### (Path Information Comparison Step)

Described next is the step wherein the control server 1 makes the comparisons of the path information with reference to the path information table 3. The path information comparison process executed in the present step is the same as the path information comparison process described with reference to the flowchart of Fig. 5. Therefore, the description thereof is omitted herein and the following presents the description of a process of selecting a multicast point on the basis of the path information table shown in Fig. 7, as a specific processing example of the path information comparison step.
1. The path information comparison step is started from RT 21 as the first hop.
2. Since the paths compared in the first hop are three paths indicated by C5-C7 in Fig. 6A, the control server moves to step S2 (corresponding to step S1 in Fig. 5).
3. There is no hop before the first hop, and this corresponds to the case where the number of compared paths is not decreased from the number of paths in the hop immediately before. Therefore, the control server goes to step S3 (corresponding to step S2 in Fig. 5).
4. C5-C7 in Fig. 6A all pass RT 21 as an identical router, and thus there exists no isolated path. Therefore, the control server shifts to step S6 (corresponding to step S3 in Fig. 5).
5. With a transition to RT 22 being the second hop, the control server transfers to step S 1 (corresponding to step S6 in Fig. 5).
6. In this case, the paths to be compared are three paths indicated by C8-C10 in Fig. 6A, and thus the control server goes to step S2 (corresponding to step S1 in Fig. 5).
7. Since the number of compared paths is still unchanged from the number of compared paths in the first hop, i.e., since there is no decrease, the control server shifts to step S3 (corresponding to step S2 in Fig. 5).
8. At this point, C8-C10 in Fig. 6A all pass RT 22 being an identical router, and thus there exists no isolated path. Therefore, the control server moves to step S6 (corresponding to step S3 in Fig. 5).
9. With a transition to RT 24 and RT 23 as the third hop, the control server goes to step S1 (corresponding to step S6 in Fig. 5).
10. In this case, the compared paths are also three paths indicated by C8-C10, and thus the control server moves to step S2 (corresponding to step S1 in Fig. 5).
11. Since the number of compared paths still remains unchanged from the number of compared paths in the second hop, i.e., since there is no decrease, the control server transfers to step S3 (corresponding to step S2 in Fig. 5).
12. At this point, path C8 does not pass the same router as paths C9 and C10 do, and here appears an isolated path (path 1 in Fig. 7). Therefore, the control server moves to step S4 (corresponding to step S3 in Fig. 5).
13. RT 22 in the hop immediately before (second hop) is selected as a multicast point. The multicast destinations from RT 22 are determined to be AR 32 corresponding to the last hop on the path C8 of the isolated path, and the last hop in any one path out of the paths other than it (e.g., AR 33). Furthermore, path C8 being the isolated path is eliminated from the comparison targets, and the control server transfers to step S5 (corresponding to step S4 in Fig. 5).
14. At step S4 path C8 was eliminated from the comparison targets, but the situation at this point corresponds to the case where the comparison target paths are still two or more, i.e., two paths of paths C9, C10. Therefore, the control server moves again to step S6 (corresponding to step S5 in Fig. 5).
15. With a transition to RT 25 corresponding to the fourth hop, the control server transfers to step S1 (corresponding to step S6 in Fig. 5).
16. The paths to be compared are two paths indicated by C9 and C10 in Fig. 6A, and thus the control server goes to step S2 (corresponding to step S1 in Fig. 5).
17. Since the number of compared paths is still unchanged from the number of compared paths in the third hop, except for the decrease due to the elimination of the isolated path, i.e., since there is no decrease, the control server shifts to step S3 (corresponding to step S2 in Fig. 5).
18. Path C10 with respect to path C9 and path C9 with respect to path C10 pass RT 25 being an identical router, and thus there exists no isolated path. Therefore, the control server moves to step S6 (corresponding to step S3 in Fig. 5).
19. With a transition to AR 33 and AR 34 corresponding to the fifth hop, the control server goes to step S1 (corresponding to step S6 in Fig. 5).
20. In this case, the compared paths are two paths indicated by path C9 and path C10, and thus the control server moves to step S2 (corresponding to step S1 in Fig. 5).
21. Since the number of compared paths still remains unchanged from the number of compared paths in the fourth hop, i.e., since there is no decrease, the control server transfers to step S3 (corresponding to step S2 in Fig. 5).
22. At this point, paths C9, C10 each are isolated paths. Therefore, the control server moves to step S4 (corresponding to step S3 in Fig. 5).
23. RT 25 corresponding to the hop immediately before (the fourth hop) is selected as a multicast point. The multicast destinations from RT 25 are determined to be AR 33 corresponding to the last hop on the path C9 of an isolated path and AR 34 corresponding to the last hop on path C10 of another isolated path. Furthermore, path C9 and path C10 of the isolated paths are eliminated from the comparison targets, and the control server transfers to step S5 (corresponding to step S4 in Fig. 5).
24. Since path C9 and path C10 are eliminated from the comparison targets at step S4, the situation here corresponds to the case where there is no comparison target path, i.e., the number of paths is not more than one, and thus the path information comparison step is terminated.

In the path information comparison step of the present embodiment, as described above, RT 22 and RT 25 (the relay routers indicated by hatching in Fig. 6B) are selected as multicast points. Furthermore, AR 32, AR 33 are determined as multicast destinations from RT 22, and AR 33, AR 34 as multicast destinations from RT 25.

### (Instruction Step)

In the instruction step, control server 1 sends to each router (RT or AR) an instruction indicating that the multicast points selected in the path information comparison step are instructed to multicast data to the determined multicast destinations. The instruction step will be described below with reference to Fig. 6B.

Control server 1 determines recipients of messages to instruct a start and a stop of the multicast function, based on the information acquired in the path information comparison step and based on the information retained from before it, and updates the information retained about the multicast point.

Here the multicast point previously used before the use of AR 34 by MN 51 was RT 22, and the multicast destinations from RT 22 were AR 32 and AR 33. These information is retained in control server 1 and part thereof is equivalent to one of the latest multicast points determined in the path information comparison step, including its multicast destinations.

For this reason, control server 1 does not have to send a message to stop the multicast function (hereinafter referred to as a "multicast stop request"), to RT 22. A new multicast start request may be sent (arrow D1 in Fig. 6B), or may not be sent. When not sent, RT 22 continues the multicast function before receiving a multicast stop request.

Subsequently, control server 1 sends a multicast start request to RT 25 of the new multicast point (arrow D2 in Fig. 6B). The multicast start request contains the identification information of MN 51 as a destination of multicast data, and the identification information of AR 33 and AR 34 as multicast destinations.

Receiving the multicast start request from control server 1, RT 25 saves the various information included in the multicast start request (e.g., the information about the multicast destinations), into its built-in cache, and thereafter starts the multicast function.

Control server 1 updates the information retained about the multicast point. Namely, control server 1 updates the multicast related information about MN 51 at this point to "point: RT 22, multicast destinations: AR 32, AR 33" and "point: RT 25, multicast destinations: AR 33, AR 34," and stores them.

Let us assume here that CN 11 sends data addressed to MN 51 and the data is delivered via RT 21 to RT 22 (arrow D3 in Fig. 6B).

Receiving the data addressed to MN 51, RT 22 refers to the various information (e.g., the information about the multicast destinations) retained in its built-in cache, makes copies of the above data, and multicasts the copies to AR 32 and AR 33. This causes the data to AR 32 to be delivered through the shortest path via RT 24 to AR 32 (arrow D4 in Fig. 6B). On the other hand, the data to AR 33 is delivered through the shortest path via RT 23 to AR 33, while passing RT 25 midway (arrow D5 in Fig. 6B).

RT 25, receiving the data via RT 23, refers to the information about multicast destinations retained in its built-in cache, makes copies of the data, and multicasts the copies to AR 33, AR 34. This results in delivering the data through the shortest paths from RT 25 to AR 33 and AR 34 (arrows D6, D7 in Fig. 6B).

In the mobile communication system 100 in the first embodiment, as described above, even in the case where there is an increase in the number of access routers used by the mobile terminal, RT 22 and RT 25 are selected as optimal multicast points out of the plurality of relay routers RT 21-25. This permits the data to be delivered through the optimal paths without any redundant portion up to the recipient access routers AR 32, AR 33, and AR 34. MN 51 receives the desired data while simultaneously using the plurality of access routers (AR 32-AR 34), with a sufficient gain of multipath handover (arrows D8, D9, D10 in Fig. 6B).

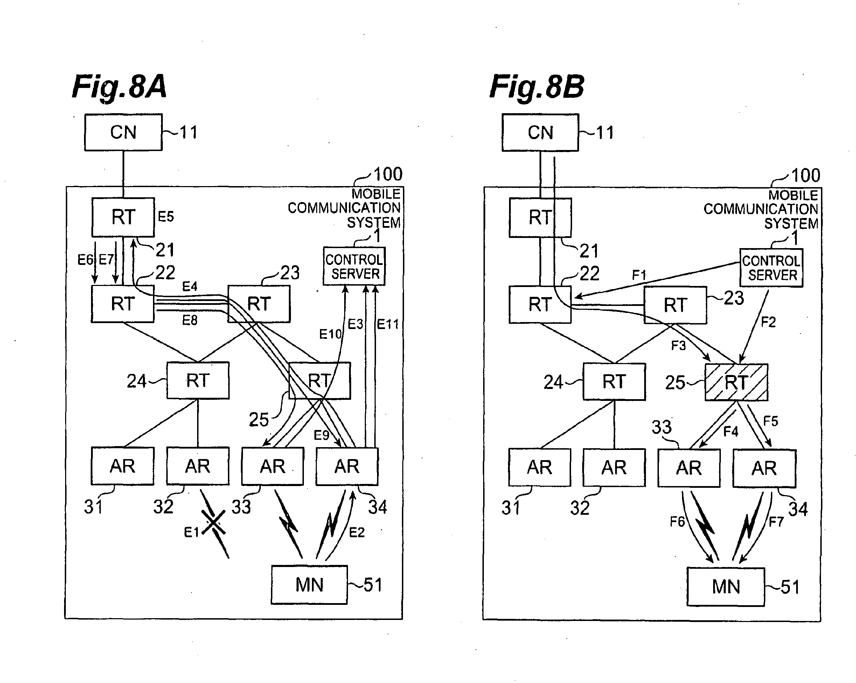

Next, Fig. 8A is an illustration showing a state of the multicast point selection in the case where MN 51 stops the use of AR 32 in the state shown in Fig. 6B. Namely, before MN 51 stops the use of AR 32, the data from CN 11 to MN 51 is multicast to ARs 32, 33, 34 at RT 22 and RT 25 and routed through the paths indicated by arrows D3-D10 in Fig. 6B. When such a factor as deterioration of the radio wave condition between MN 51 and AR 32 brings MN 51 into a multipath handover state using only AR 33 and AR 34 by stopping the use of AR 32, the multicast point selection as described below is initiated.

### (Path Information Acquisition Step)

First, the steps up to acquisition of path information by control server 1 will be described.

At E1, MN 51 stops the use of AR 32. This stop process may be executed in the initial stage of the path information acquisition step, or may be executed after selection of a new multicast point.

When MN 51 detects a change in the usage of access routers due to the stop of the use of AR 32, in order to start the multicast point selection process, it sends the identification information of the access routers presently under use (AR 33, 34) and the identification information of CN 11 presently under communication to one of the access routers presently under use (e.g., AR 34) (cf. E2).

Receiving the identification information transmitted from MN 51 at E2, AR 34 notifies the control server 1 that the multicast point selection process was activated in the communication paths between CN 11 and MN 51. This notification process is implemented by collectively transmitting and receiving the identification information of MN 51 as a sender of the above identification information, and the identification information of AR 33, AR 34, and CN 11 (E3).

Receiving the identification information transmitted from AR 34 at E3, the control server 1 acknowledges that the multicast point selection process was activated, and awaits transmission of path information from each access router (AR 33, AR 34).

At E4, AR 34 refers to the identification information of CN 11 received at E2, and transmits a path information request to CN 11. This path information request contains the identification information of MN 51 being a mobile terminal of a data recipient, and the identification information of ARs 33, 34 being recipients of path information. This transmission process may be executed after completion of the notification process at E3, or may be executed in parallel with the notification process at E3.

The path information request is routed to CN 11, but RT 21 terminates the path information request at the point where the path information request arrives at RT 21, because RT 21 preliminarily acknowledges that CN 11 as a destination of the path information request is connected under the command of its own (E5).

Then RT 21 refers to the identification information of ARs 33, 34 received at E4, and transmits the path information to both ARs 33, 34. This path information contains the identification information of CN 11 being a sender of data, the identification information of MN 51 being a destination of data, and the identification information of RT 21 itself. Each path information is routed through the shortest path for arrival at the recipient access router.

In the present embodiment, each path information is first transmitted to RT 22 (E6 and E7). RT 22 determines whether the information received from RT 21 is path information, then adds the identification information of RT 22 itself into each path information, and transmits this path information to the next routers on the shortest paths. Namely, the path information transmitted from RT 25 is delivered via RT 23 and RT 25 to each of AR 33 and AR 34 (E8 and E9).

Specifically, RT 23, receiving the path information, adds the identification information of RT 23 itself into the path information, and then transmits this path information to RT 25 being the next router on the shortest path. RT 25, receiving the path information, adds the identification information of RT 25 itself into the path information, and then transmits this path information to AR 33 being the next router on the shortest path (E8). Similarly, RT 25 adds the identification information of RT 25 itself into the path information, and then transmits this path information to AR 34 being the next router on the shortest path to AR 34 (E9).

As a result of the above processing, each path information arrives at AR 33 and AR 34, which are the end points of the respective paths. AR 33 and AR 34 also add their identification information into the received path information. Then AR 33 transmits the complete path information to control server 1 (E10). Likewise, AR 34 transmits the complete path information to control server 1 (E11). This results in aggregating the path information containing the description of the shortest path from RT 21 to AR 33 and the path information containing the description of the shortest path from RT 21 to AR 34, at control server 1.

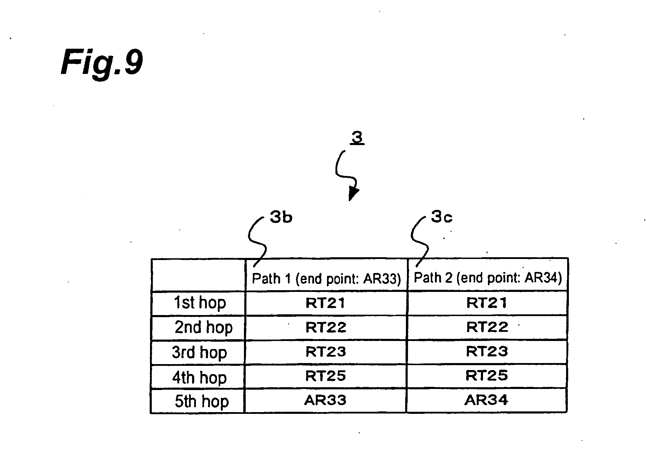

Fig. 9 is a diagram showing a state in which the path information aggregated at control server 1 is stored in the path information table 3. As shown in Fig. 9, the path information table 3 stores the identification information of the routers existing on the shortest paths with the end points of the access routers used by MN 51, as first to fifth hops in each of the paths.

More specifically, the path information table 3 has path 1 storage area 3b and path 2 storage area 3c. The path 1 storage area 3b stores "RT 21, RT 22, RT 23, RT 25, and AR 33" as the identification information of the routers passed by the path from the first hop (start point) to the end-point hop (fifth hop), in their passing order. The path 2 storage area 3c stores "RT 21, RT 22, RT 23, RT 25, and AR 34" as the identification information of the routers passed by the path from the first hop (start point) to the end-point hop (fifth hop), in their passing order.

### (Pass Information Comparison Step)

Described below is the step wherein control server 1 makes the comparisons of the path information with reference to the path information table 3. The path information comparison process executed in the present step is the same as the path information comparison process described with reference to the flowchart of Fig. 5, and thus the detailed description thereof is omitted herein. However, it is noted that in this path information comparison step RT 25 (the relay router indicated by hatching in Fig. 8B) is selected as a multicast point. In addition, AR 33, AR 34 are determined as multicast destinations from RT 25.

### (Instruction Step)

In the instruction step, control server 1 sends to each router an instruction indicating that the multicast point selected in the path information comparison step is instructed to multicast data to the determined multicast destinations. The instruction step will be described below with reference to Fig. 8B.

As a premise, RT 22, which was the multicast point before the stop of the use of AR 32, is eliminated from the current multicast point, and thus the control server 1 sends a multicast stop request to RT 22 (arrow F1 in Fig. 8B). This multicast stop request contains the identification information of MN 51 which is the destination of multicast data.

Receiving the multicast stop request from control server 1, RT 22 stops the multicast function about MN 51 and deletes the information retained in its built-in cache.

RT 25 continuously operates as a multicast point before MN 51 stops the use of AR 32, and there is no change in the multicast destinations. Therefore, control server 1 does not have to send a multicast stop request to RT 25. A new multicast start request may be sent (arrow F2 in Fig. 8B), or may not be sent. When not sent, RT 25 continues the multicast function before receiving a multicast stop request.

Control server 1 updates the information retained about the multicast point. Namely, control server 1 updates the multicast related information about MN 51 at this point to "point: RT 25, multicast destinations: AR 33, AR 34," and then stores it.

Data sent from CN 11 to MN 51 is delivered successively via RT 21, RT 22, and RT 23 to RT 25 (arrow F3 in Fig. 8B).

Receiving the data to MN 51, RT 25 refers to the information about the multicast destinations retained in its built-in cache, makes copies of the above data, and multicasts the copies to AR 33 and AR 34. This causes the data to AR 33 to be delivered through the shortest path from RT 25 to AR 33 (arrow F4 in Fig. 8B). On the other hand, the data to AR 34 is delivered through the shortest path from RT 25 to AR 34 (arrow F5 in Fig. 8B).

In the mobile communication system 100 in the first embodiment, as described above, even in the case where there is a decrease in the number of access routers used by the mobile terminal, RT 25 is selected as an optimal multicast point out of the plurality of relay routers RT 21-25. Therefore, the data is multicast through the optimal paths without any redundant portion up to the recipient access routers AR 33, AR 34. MN 51 receives the desired data while simultaneously using the plurality of access routers (AR 33, AR 34), with a sufficient gain of multipath handover (arrows F6, F7 in Fig. 8B).

### Second Embodiment

The second embodiment of the present invention will be described below in detail with reference to the drawings.

The first embodiment was based on the assumption that CN 11 as a correspondent terminal was connected to relay router RT 21 in the same network (the home network) as MN 51 as a mobile terminal was connected. In contrast to it, the present embodiment is based on the assumption that CN 11 is connected to a router in another network (hereinafter referred to as a "foreign network") different from the home network of MN 51.

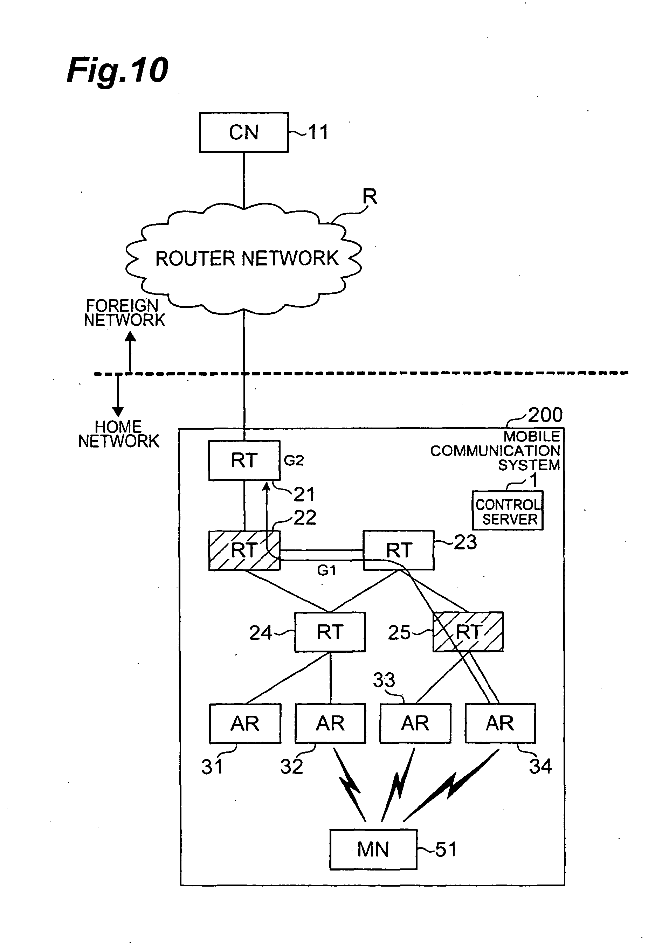

Fig. 10 is an illustration showing one process of multicast point selection in the case where CN 11 is connected to a router in the foreign network. Since the major configuration of the mobile communication system in the present embodiment is much the same as that of mobile communication system 100 described with reference to Fig. 2A, each constituent element will be denoted by the same reference symbol and the illustration and detailed description of the configuration will be omitted. Since the major configuration of the control server is also much the same as that of control server 1 described with reference to Fig. 3, each constituent element will be denoted by the same reference symbol, and the illustration and detailed description of the configuration will be omitted.

The difference in the mobile communication system 200 of the second embodiment from the mobile communication system 100 will be detailed below. As shown in Fig. 10, CN 11 is connected to a router network R constituting the foreign network, and RT 21 is one of home-network-side gateway routers connecting the home network to the foreign network. The mobile communication system 200 is different from the mobile communication system 100 only in that the path information request is not terminated at the router directly connected to CN 11, but at the router located at the last passing point in the home network (RT 21), so as to cause a change in the router as a sender of path information.

The present embodiment will be described using an example of a case where MN 51 adds use of AR 34 during communication with CN 11 present in the foreign network, using AR 32 and AR 33. First, when MN 51 detects the addition of AR 34 used as an access router, similarly as in the process indicated by C1 in Fig. 6A, MN 51 sends the identification information of AR 32, AR 33, and AR 34 presently under use, and the identification information of CN 11 presently under communication, to AR 34.

Thereafter, AR 34 sends a path information request to CN 11 and, in the case of the transmission of the path information request from the home network to the foreign network, this path information request is terminated by a router as a last passing point in the home network (RT 21), i.e., a home-network-side gateway router connecting the home network to the foreign network. When there exist a plurality of gateway routers, the path information request is terminated by a router located on the shortest path connecting MN 51 to CN 11, i.e., a gateway router on the path in routing the path information request through the shortest path to CN 11, out of the gateway routers.

More specifically, in the present embodiment, the path information request is routed through the path indicated by arrow G1 in Fig. 10 and is then terminated by RT 21 being the gateway router present on the shortest path from MN 51 to CN 11 (cf. G2). Subsequently, RT 21 sends the path information to each AR 32, 33, 34, followed by execution of the aforementioned path information acquiring step, path information comparing step, and instructing step.

As a consequence, RT 22 and RT 25 are selected as multicast points (the relay routers indicated by hatching in Fig. 10). Furthermore, AR 32 and AR 33 are determined as multicast destinations from RT 22, and AR 33 and AR 34 as multicast destinations from RT 25. As described above, the dynamic control of the multicast point according to the present invention can also be applied to communication between terminals connected to their respective networks different from each other.

### Third Embodiment

The third embodiment of the present invention will be described below in detail with reference to the drawings.

In the first and second embodiments CN 11 as a correspondent terminal was a stationary terminal, whereas the present embodiment is based on the assumption that CN 11 is a mobile terminal existing in the same network (home network) as that of MN 51, i.e., data is transmitted and received between mobile terminals.

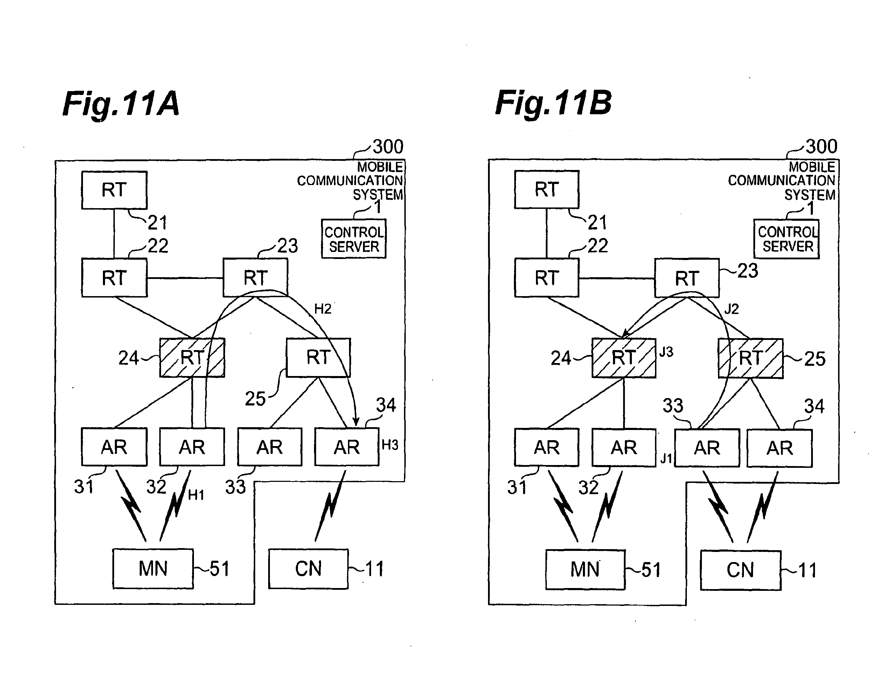

Fig. 11A is an illustration showing one process of the multicast point selection in the case where CN 11 as a mobile terminal is connected to a router in the home network. Since the major configuration of the mobile communication system in the present embodiment is much the same as the configuration of mobile communication system 100 described with reference to Fig. 2A, each constituent element will be denoted by the same reference symbol, and the illustration and detailed description of the configuration will be omitted. Since the major configuration of the control server is also similarly much the same as the configuration of control server 1 described with reference to Fig. 3, each constituent element will be denoted by the same reference symbol, and the illustration and detailed description of the configuration will be omitted.

The difference in the mobile communication system 300 of the third embodiment from mobile communication system 100 will be detailed below. The present embodiment will be described using an example of a case where MN 51 and CN 11 use only AR 31 and AR 34, respectively, at a start of communication and where MN 51 adds use of AR 32 (cf. H1) before CN 11 adds use of the second access router (or if CN 11 is not compliant to the multipath handover).

First, when MN 51 detects the addition of AR 32 used as an access router, similarly as in the process indicated by C1 in Fig. 6A, MN 51 sends the identification information of AR 31 and AR 32 presently under use and the identification information of CN 11 presently under communication, to AR 32. Thereafter, a path information request is sent from AR 32 through the path indicated by arrow H2 in Fig. 11A, to CN 11 and, at the time when the request arrives at AR 34 connected to CN 11, the request is terminated by AR 34 (cf. H3).

Thereafter, AR 34 sends the path information to each AR 31, 32, followed by execution of the aforementioned path information acquiring step, path information comparing step, and instructing step. As a consequence, RT 24 is selected as a multicast point (the router indicated by hatching in Fig. 11A). Furthermore, AR 31 and AR 32 are determined as multicast destinations from RT 24. As described, the dynamic control of the multicast point according to the present invention can also be applied to communication between mobile terminals connected to the same network.

Next, Fig. 11B is an illustration showing a state of the multicast point selection in the case where CN 11 adds the use of AR 33 (cf. J1) from the state shown in Fig. 11A. First, when CN 11 detects the addition of AR 33 used as an access router, similarly as in the process indicated by C1 in Fig. 6A, CN 11 sends the identification information of AR 33, AR 34 presently under use and the identification information of MN 51 presently under communication, to AR 33. Thereafter, AR 33 sends a path information request through the path indicated by arrow J2 in Fig. 11B, to MN 51.

At this point, RT 24 has already been selected as a multicast point for transmission of data from MN 51 to CN 11. For this reason, the path information request itself is transmitted to both AR 31 and AR 32 as the data to MN 51 is, and there is the concern that the transmission control of data becomes complicated. Therefore, this concern is eliminated in such a way that the path information request is terminated by RT 24 as a multicast point for MN 51 of the destination (cf. J3) whereby the path information is sent from only RT 24.

Thereafter, RT 24 sends the path information to each AR 33, 34, followed by execution of the aforementioned path information acquiring step, path information comparing step, and instructing step. As a consequence, RT 25 is selected as a multicast point for data from MN 51 to CN 11 (the router indicated by hatching in Fig. 11B). Furthermore, AR 33 and AR 34 are determined as multicast destinations from RT 25.

In the mobile communication system 300, as described above, the path information request is terminated at the multicast point for the mobile terminal being the recipient of data, during transmission and reception of data between a mobile terminal and another mobile terminal in the home network. This also permits the dynamic control of the multicast point according to the present invention to be applied to communication with the mobile terminal which is in the multipath handover state and for which the multicast point has already been selected.

The modes described in the above first to third embodiments are just the preferred examples of the mobile communication system according to the present invention, but the present invention is not limited to these examples.

For example, the control server was a constituent element independent of the other nodes such as the routers in the first to third embodiments, but any desired node may be provided with the function of control server 1. Specifically, the server function is realized at an access router to which the mobile terminal first sends the information for the purpose of starting the multicast point selection process. Furthermore, the server function is realized at a router terminating the path information request (RT or AR), i.e., at a router as a sender of the path information.

In the first to third embodiments, the path information was transmitted at the opportunity of receiving the path information request from the access router. However, the transmission of path information may be initiated according to the procedure described below. Namely, the mobile terminal sends a path information request to control server 1 or another server in the network (these servers will be referred to hereinafter together as "server"). Subsequently, the server receiving the path information request manages the topology of the network and discriminates a router connected to the correspondent terminal. Then the server instructs the router discriminated as a router connected to the correspondent terminal, to transmit the path information.

Furthermore, in the case where there simultaneously exist a plurality of correspondent terminals, the mobile terminal notifies the access router of the identification information of all these correspondent terminals. Thereafter, the mobile communication system executes the aforementioned path information acquiring step, path information comparing step, and instructing step independently for each of the correspondent terminals. This enables the multicast point optimal for each correspondent terminal to be selected, even in the case of the plurality of correspondent terminals.

### Fourth Embodiment

The fourth embodiment of the present invention will be described below in detail with reference to the drawings.

In the first to third embodiments, control server 1 was configured to acquire the path information by actually receiving the path information containing the description of the shortest path from the router to the access router. In these embodiments, however, there is the concern that increase in the number of handovers by MN 51 results in increasing the number of transmissions and receptions of path information in the mobile communication system, so as to place some load on the network. In the present embodiment, therefore, control server 1 acquires the path information, using the information stored in a link state database (hereinafter referred to as "LSDB": Link State Data Base) created by OSPF (Open Shortest Path First) being one of routing protocols, instead of receiving the path information.

Here the LSDB is a database having the graph structure created by OSPF and contains the description of the connection relationship among routers in a management area and costs in transmitting data on links. In the steady state, all the routers in any management area share the same LSDB about the management area. For example, all routers RT 21-25 existing in area 0 retain the LSDB of area 0, and the contents thereof all are identical. Therefore, when there is a need for acquisition of information in the LSDB of a certain management area (hereinafter referred to as "LSDB information"), the need can be met by simply acquiring the LSDB information from an arbitrary router belonging to the management area.

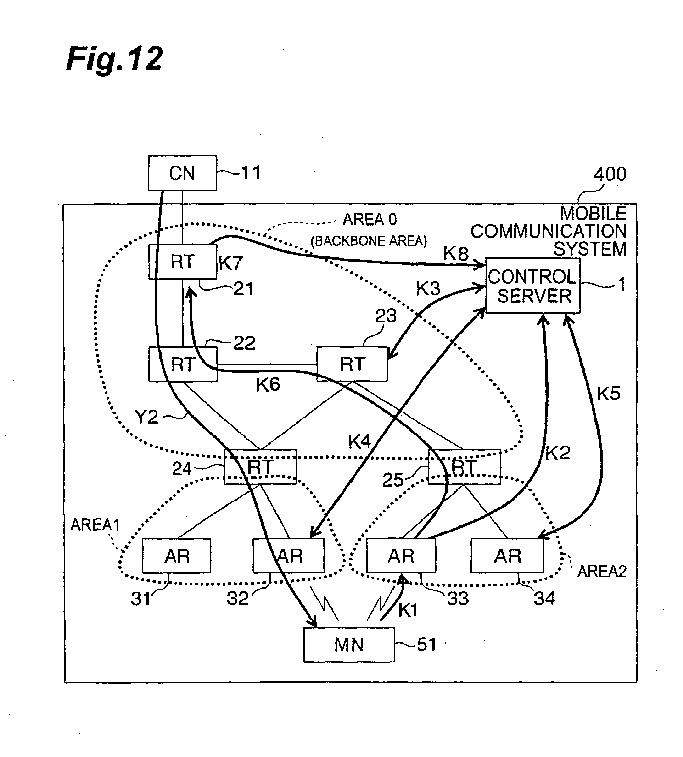

Fig. 12 is an illustration showing a state of the path information acquiring step applied to a case where CN 11 is connected to a router in the home network. In mobile communication system 400, the OSPF is used as a routing protocol, and its management area is divided into three management areas of area 0 (backbone area), area 1, and area 2, as shown in Fig. 12.

MN 51 uses only AR 32 as an access router at a start of communication with CN 11, and data transmitted from CN 11 to MN 51 is routed through the optimal path as indicated by arrow Y2. Since AR 32 is an access router used at the start of communication by MN 51, mobile communication system 400 does not always have to execute the process of selecting the multicast point. Even if it is executed, no multicast point will be selected, because MN 51 uses only AR 32 as an access router.

Subsequently, MN 51 becomes able to receive radio waves from AR 33, whereupon MN 51 comes to use two access routers; therefore, the selection of the multicast point is carried out.

The functional configuration of control server 1 is similar to the configuration shown in Fig. 3, but in the present embodiment the path information acquiring part 2 has a function different from that in the first embodiment. Namely, path information acquiring part 2 acquires LSDB information of each management area from routers existing in the respective management areas of area 0, area 1, and area 2 (e.g., RT 23, AR 32, and AR 33), generates a shortest hop tree on the basis of the information, acquires desired path information from the tree, and stores it into path information table 3. Since the other component part of control server 1 in the present embodiment is identical to the component part and functions in the first embodiment, the description thereof is omitted herein.

The following is the description of the multicast point selection in a transition of MN 51 into a state where it transmits and receives data while simultaneously using ARs 32, 33 (the multipath handover state).

### (Path Information Acquiring Step)

First, the steps up to acquisition of path information by control server 1 will be described with reference to Fig. 12. In conjunction with the addition of AR 33 used as an access router, MN 51 detects a change in usage of access routers, and then, in order to activate the multicast point selection process, it transmits the identification information of the access routers presently under use (ARs 32, 33) and the identification information of the correspondent terminal currently under communication (CN 11) to one of the access routers presently under use (e.g., AR 33) (cf. K1). Here the identification information of the correspondent terminal is, for example, an IP address or the like of the correspondent terminal.

Receiving the identification information of AR 32, AR 33, and CN 11 from MN 51 at K1, AR 33 sends a request for a start of the multicast point selecting process in the communication paths between CN 11 and MN 51, to control server 1. The request is implemented by collectively transmitting and receiving the identification information (e.g., an IP address) of MN 51 as a sender of the above identification information, and the identification information of AR 32, AR 33, and CN 11 (K2).

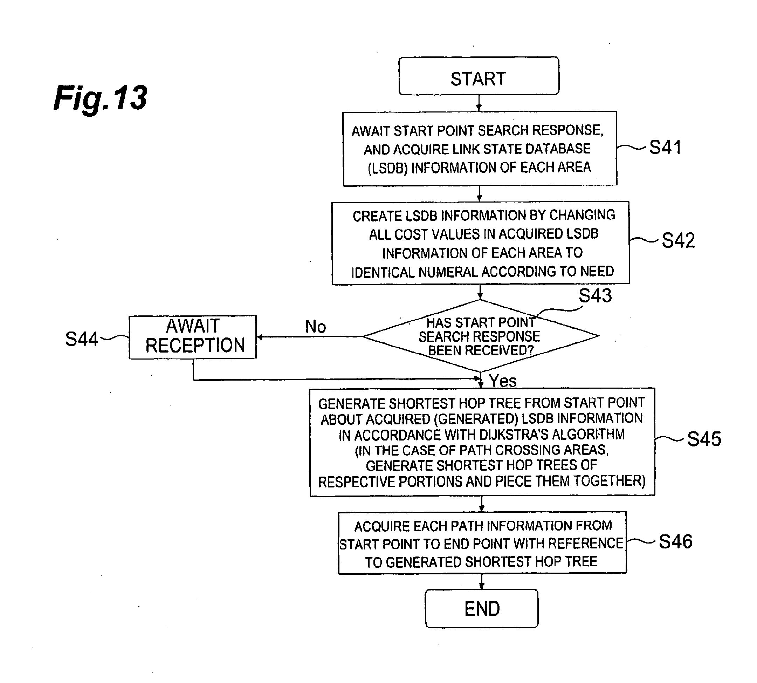

Receiving the start request at K2, control server 1 starts the multicast point selecting process. The first step is to execute the path information acquiring step. Fig. 13 shows a flowchart for explaining specific processing executed in the path information acquiring step.

The path information acquiring step is initiated at a point of receiving the request for the start of the multicast point selecting process. At step S41 in Fig. 13, control server 1 awaits a start point search response from the router (RT 21 in the present embodiment) connected to the correspondent terminal CN 11, and makes path information acquiring part 2 acquire from arbitrary routers belonging to the respective management areas 0, 1, 2, the LSDB information corresponding to the management areas.

At step S42, control server 1 creates LSDB information by changing all the written cost values to an identical numeral greater than 0, about the LSDB information of each management area acquired at step S41, in accordance with need. Portions without description of any cost remain unchanged. Here the need in the term "in accordance with need" refers to a case where control server 1 needs information of "shortest hop path." By handling subsequent processing without any change in cost values, control server 1 is able to acquire information of "optimal (minimum cost) path generated by OSPF." As described, the cost values may or may not be changed, depending upon the contents of the path information needed by control server 1.

At step S43, path information acquiring part 2 determines whether a start point search response has been received. When the result of the determination is no, a transition is made to step S44. When the determination result is yes, a transition is made to step S45. At step S44, control server 1 awaits reception of a start point search response, and, when receiving, control server 1 moves to step S45.

At step S45, control server 1 makes path information acquiring part 2 generate a shortest hop tree from a start point confirmed by the above start point search response, about the LSDB information itself acquired at S1 or about the LSDB information created at S2, using the conventional Dijkstra's algorithm.

A tree purely shortest in a hop count regardless of the original cost values can be created by applying the Dijkstra's algorithm to the LSDB information obtained by changing all the cost values to an identical numeral, as described previously. In contrast to it, a tree of "optimal path by OSPF" can be created by applying the Dijkstra's algorithm to the original LSDB" information without any change in the cost values. In the case where the path from the start point to the end point runs across two or more management areas, control server 1 once creates a shortest hop tree from a start point to a boundary of a management area, a shortest hop tree from the boundary of the management area to a boundary of another management area, ..., a shortest hop tree from a boundary of a management area to each end point, and then pieces these trees together to generate a shortest hop tree including the paths from the start point to each end point.

At step S46, control server 1 makes path information acquiring part 2 refer to the shortest hop tree (optimal path tree) finally created at step S45 and acquire the paths from the start point to the respective end points. These paths are shortest hop paths (optimal paths) and path information needed by control server 1.

The description will be given below about processing after the point where control server 1 receives the notification of identification information indicated at K2, with reference to Fig. 12, as a specific processing example of the aforementioned path information acquiring step. In the present embodiment, the path information needed by control server 1 is assumed to be the information of "shortest hop paths."

Control server 1, having started the multicast point selecting process, awaits a start point search response transmitted from the router (RT 21 in the present embodiment) connected to CN 11 and acquires the information stored in the LSDB of each management area (LSDB information). Namely, control server 1 receives the LSDB information of area 0 from RT 23 (K3), the LSDB information of area 1 from AR 32 (K4), and the LSDB information of area 2 from AR 34 (K5), as responses to the LSDB information transmission request to each router (S41 in Fig. 13).

In the present embodiment the control server 1 is configured to acquire the LSDB information of all the management areas, but it may also be configured not to acquire the LSDB information of an unnecessary management area.

The process for control server 1 to acquire each LSDB information may also be started upon reception of the start point search response. For example, the control server may also be configured to perform such a control as not to acquire the LSDB information of a management area judged as irrelevant to the current multicast point selection (a management area not passed by a shortest path between a start point and an end point), from the relationship between the router (RT 21) at a start point notified of by the start point search response and the router (AR 33) at an end point notified of at K2.

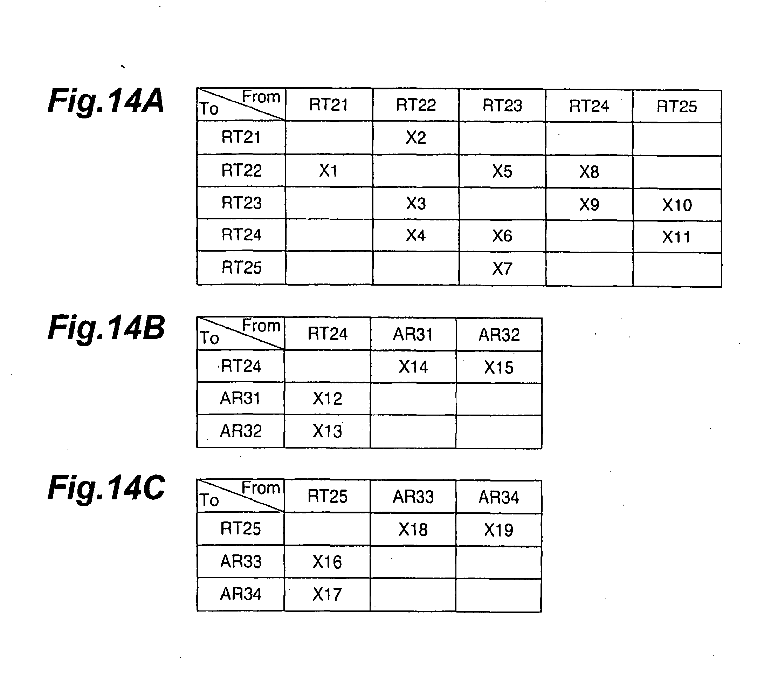

In the present embodiment, specifically, the LSDB of area 0 is as shown in Fig. 14A, the LSDB of area 1 as shown in Fig. 14B, and the LSDB of area 2 as shown in Fig. 14C; values (X1-X19) are written in only cells in relationship of connection. The values of X1-X19 are cost values preliminarily set in corresponding paths and directions. Control server 1 acquires this information as LSDB information at S1.

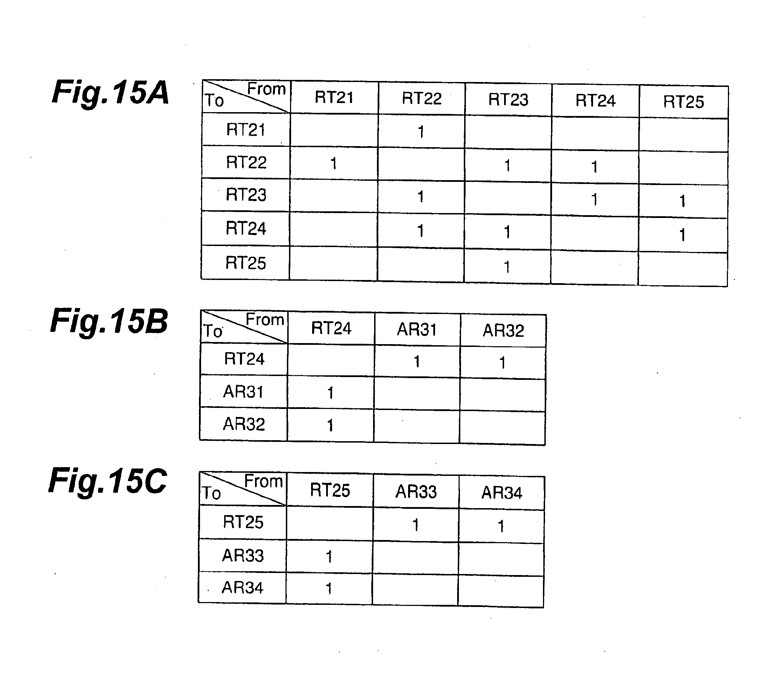

At next step S42, control server 1 changes all the cost values of X1-X19 in the LSDB information acquired at step S41, to an identical numeral ("1" in the present embodiment) greater than 0 to create LSDB information. The LSDB information of management areas 0, 1, and 2 created at step S42 is shown in Fig. 15A, Fig. 15B, and Fig. 15C, respectively. At this time, there is no change in the cells originally having no entry in the LSDBs of the routers (the cells other than X1-X19 shown in Figs. 14A-14C).

On the other hand, AR 33, having received the identification information at K1 from MN 51, transmits a start request at K2 to control server 1 and, at the same time as it, or before or after it, AR 33 transmits a start point search request to CN 11 as a correspondent notified of at K1 (K6). This start point search request contains the identification information of MN 51 being a recipient mobile terminal to receive data from CN 11. This start point search request is routed to CN 11, but RT 21 preliminarily acknowledges that CN 11 as a destination of the start point search request is connected under the command of its own, and thus terminates the start point search request at the point where the start point search request arrives at RT 21 (K7).

At the opportunity of the termination of the start point search request at K7, RT 21 sends a start point search response to control server 1 (K8). This start point search response contains the identification information of MN 51, which was included in the start point search request at K6, and the identification information of the sending router RT 21 as a start point obtained by the search.

At step S43, control server 1 monitors reception of a start point search response, but it is assumed in the present embodiment that at this point the control server already has received the start point search response (K8) from RT 21. Therefore, the control server transfers to step S45.

At step S45, control server 1 generates the shortest hop tree from the start point to the end points by the Dijkstra's algorithm, on the basis of the LSDB information shown in Figs. 15A-15C. The start point of this shortest hop tree is the identification information of RT 21, which was included in the start point search response K8, and the end points are the identification information of AR 32 and AR 33, which was included in the request for the start of the multicast point selecting process K2.

In mobile communication system 400 in the present embodiment, the path from RT 21 to AR 32 crosses area 0 and area 1, and the path from RT 21 to AR 33 does area 0 and area 2. Control server 1 preliminarily acknowledges this fact, and the fact that RT 24 is a router located at the boundary between area 0 and area 1 (hereinafter referred to as a "boundary router") and RT 25 a boundary router between area 0 and area 2. For this reason, control server 1 first generates a shortest hop tree with RT 21 at a start point in area 0, a shortest hop tree with RT 24 at a start point in area 1, and a shortest hop tree with RT 25 as a start point in area 2, and thereafter pieces the trees together to generate a shortest hop tree from RT 21 to AR 32 and from RT 21 to AR 33.

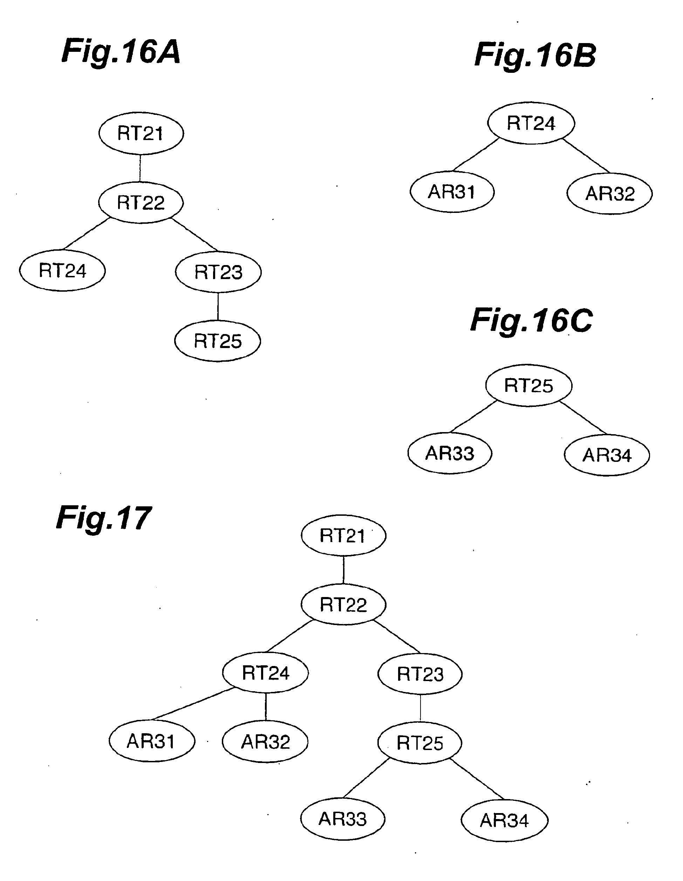

Namely, as a result of execution of the Dijkstra's algorithm, the shortest hop trees of area 0 (RT 21 at a start point), area 1 (RT 24 at a start point), and area 2 (RT 25 at a start point) are as shown in Fig. 16A, Fig. 16B, and Fig. 16C, respectively. Furthermore, these three shortest hop trees are pieced together at RT 24 and RT 25 of the boundary routers, thereby generating a desired shortest hop tree (cf. Fig. 17).

At last step S46, control server 1 refers to the tree shown in Fig. 17 to determine that the shortest path and passing order from RT 21 to AR 32 are "RT 21, RT 22, RT 24, and AR 32" and that the shortest path and passing order from RT 21 to AR 33 are "RT 21, RT 22, RT 23, RT 25, and AR 33." The shortest paths and passing orders associated with this determination correspond to the path information needed by control server 1, and this path information is stored into path information table 3, as shown in Fig. 4.

The processes executed in the subsequent path information comparing step and instructing step are similar to those executed in the path information comparing step and instructing step detailed in the first embodiment, and thus the illustration and detailed description thereof are omitted herein.

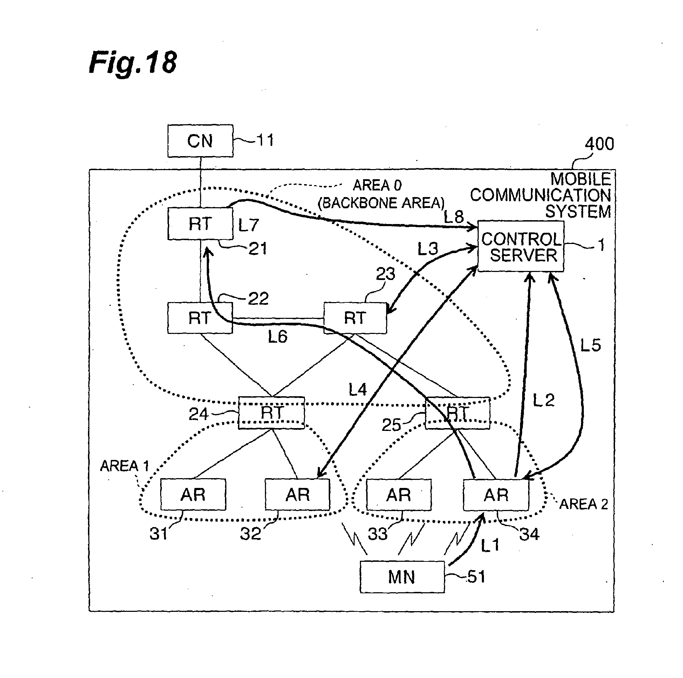

Described below is a state of the multicast point selection upon a transition of MN 51 shown in Fig. 12 into a state in which MN 51 receives data while further using AR 34 in addition to AR 32 and AR 33. Fig. 18 is an illustration for explaining the path information acquiring step executed after the transition into such a state.

### (Path Information Acquiring Step)

In conjunction with the addition of AR 34 used as an access router, MN 51 detects a change in usage of access routers, and then, in order to activate the multicast point selection process, it transmits the identification information of the access routers presently under use (ARs 32, 33, 34) and the identification information of CN 11 currently under communication to one of the access routers presently under use (e.g., AR 34) (L1 in Fig. 18).

Receiving the identification information transmitted from MN 51 at L1, AR 34 sends to control server 1 a request for a start of the multicast point selecting process in the communication paths between CN 11 and MN 51. The request is implemented by collectively transmitting and receiving the identification information of MN 51 as a sender of the above identification information, and the identification information of AR 32, AR 33, AR 34, and CN 11 (L2).

Receiving the start request at L2, control server 1 starts the multicast point selecting process. As the first step of the multicast point selecting process, the path information acquiring step is first executed according to the flowchart shown in Fig. 13. Specific processing in the path information acquiring step will be described below.

Control server 1, having started the multicast point selecting process, awaits a start point search response transmitted from the router (RT 21 in the present embodiment) connected to CN 11 and acquires the information (LSDB information) stored in the LSDB of each management area. Namely, control server 1 receives the LSDB information of area 0 from RT 23 (L3), the LSDB information of area 1 from AR 32 (L4), and the LSDB information of area 2 from AR 34 (L5), as responses to the LSDB information transmission request to the respective routers (step S41 in Fig. 13).

In the present embodiment the control server 1 was configured to acquire the LSDB information of each management area in the path information acquiring step, but the control server does not always have to be configured to acquire the LSDB information every time the path information acquiring step is executed. The LSDB of each management area is updated with a change in the cost values of the links in the management area or with a change in the relationship of connection between routers, but the connection relationship of routers is conceivably unlikely to change frequently. For this reason, if control server 1 already has the LSDB information of every necessary management area and if it is expected or assured that the information about the connection relationship of routers (and the information about the cost values according to need) is fully reliable (unchanged), the control server does not have to again receive the LSDB information from each router and may be configured to handle subsequent processing using the already-retained LSDB information. In this case, control server 1 does not have to again generate the shortest hop tree (optimal path tree) and acquires the path information with reference to the already-generated shortest hop tree (optimal path tree).

In the present embodiment, the subsequent processing will be described on the assumption that control server 1 again acquired the LSDB information from the routers in the respective management areas. At this point, the LSDB information is in the states shown in Figs. 14A to 14C.

As shown at step S42 in Fig. 13, control server 1 changes all the cost values of X1-X19 in the LSDB information acquired at step S41, to 1 to create the LSDB information. The LSDB information of the management areas 0, 1, and 2 created at this point is the contents shown in Figs. 15A, 15B, and 15C, respectively. At this time, there is no change in the cells originally having no entry (the cells other than X1-X19 shown in Figs. 14A-14C) in the LSDBs of the respective routers.

On the other hand, AR 34, having received the identification information at L1 from MN 51, transmits a start request at L2 to control server 1 and, at the same time as it, or before or after it, AR 34 transmits a start point search request to CN 11 as a correspondent notified of at L1 (L6). This start point search request contains the identification information of MN 51 being a recipient mobile terminal to receive data from CN 11. This start point search request is routed to CN 11, but RT 21 preliminarily acknowledges that CN 11 as a destination of the start point search request is connected under the command of its own, and thus terminates the start point search request at the point where the start point search request arrives at RT 21 (L7).

At the opportunity of the termination of the start point search request at L7, RT 21 sends a start point search response to control server 1 (L8). This start point search response contains the identification information of MN 51, which was included in the start point search request at L6, and the identification information of the sending router RT 21 as a start point obtained by the search.

At step S43, control server 1 monitors reception of a start point search response, but it is assumed in the present embodiment that at this point the control server already has received the start point search response (K8) from RT 21, and the control server transfers to step S45.

At step S45, control server 1 generates the shortest hop tree from the start point to the end points by the Dijkstra's algorithm, on the basis of the LSDB information shown in Figs. 15A to 15C. As a result, the shortest hop tree shown in Fig. 17 is finally generated, similarly as in the case where MN 51 is in the state shown in Fig. 12.

At step S46, control server 1 refers to the shortest hop tree to determine that the shortest path and passing order from RT 21 to AR 32 are "RT 21, RT 22, RT 24, and AR 32," that the shortest path and passing order from RT 21 to AR 33 are "RT 21, RT 22, RT 23, RT 25, and AR 33," and that the shortest path and passing order from RT 21 to AR 34 are "RT 21, RT 22, RT 23, RT 25, and AR 34." The shortest paths and passing orders associated with this determination correspond to the path information needed by control server 1, and this path information is stored into path information table 3, as shown in Fig. 4.

The processes executed in the subsequent path information comparing step and instructing step are similar to those executed in the path information comparing step and instructing step detailed in the first embodiment, and thus the illustration and detailed description thereof are omitted herein.

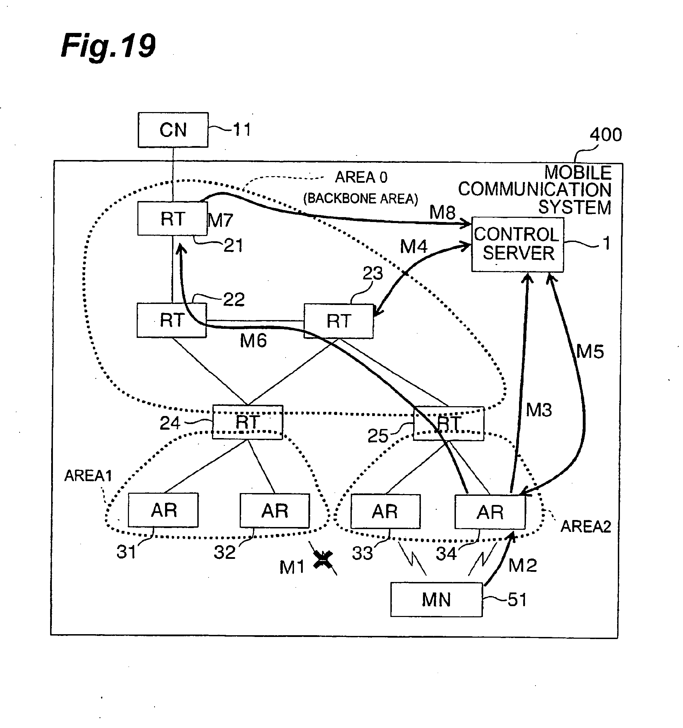

Described below is a state of the multicast point selection in a case where MN 51 shown in Fig. 18 suspends the reception of data using AR 32. Fig. 19 is an illustration for explaining the path information acquiring step executed after a transition into such a state.

### (Path Information Acquiring Step)

When MN 51 detects a change in usage of the access routers in conjunction with the suspension of the use of AR 32 (M1), in order to activate the multicast point selection process, it transmits the identification information of the access routers presently under use (AR 33, AR 34) and the identification information of CN 11 currently under communication to one of the access routers presently under use (e.g., AR 34) (M2 in Fig. 19).

Receiving the identification information transmitted from MN 51 at M2, AR 34 sends to control server 1 a request for a start of the multicast point selecting process in the communication paths between CN 11 and MN 51. The request is implemented by collectively transmitting and receiving the identification information of MN 51 as a sender of the above identification information, and the identification information of AR 33, AR 34, and CN 11 (M3).

Receiving the start request at M3, control server 1 starts the multicast point selecting process. As the first step of the multicast point selecting process, the path information acquiring step is first executed according to the flowchart shown in Fig. 13. Specific processing in the path information acquiring step will be described below.

Control server 1, having started the multicast point selecting process, awaits a start point search response transmitted from the router (RT 21 in the present embodiment) connected to CN 11 and acquires the LSDB information of each management area. Namely, control server 1 receives the LSDB information of area 0 from RT 23 (M4) and the LSDB information of area 2 from AR 34 (M5), as responses to the LSDB information transmission request to the respective routers (step S41 in Fig. 13).

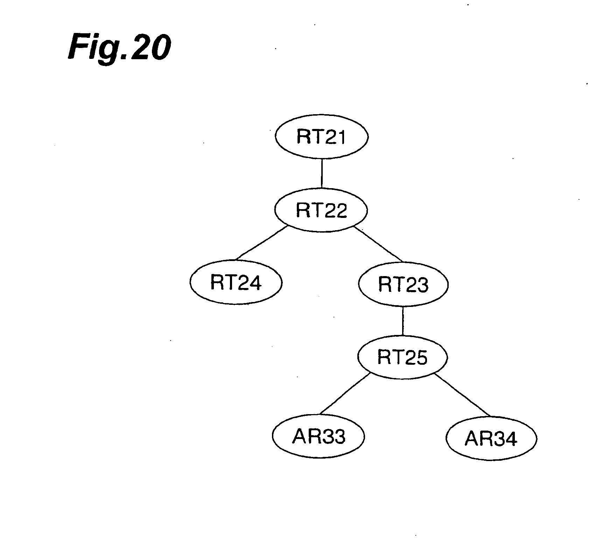

At this point, similarly as in the case of the state shown in Fig. 18, if the LSDB information of areas 0, 2 is fully reliable, the control server 1 does not have to again acquire the LSDB information. In that case, control server 1 first generates the shortest hop trees shown in Figs. 16A and 16C on the basis of the already-retained LSDB information (cf. Figs. 14A and 14C), and thereafter pieces these together at RT 25 of the boundary router to generate the shortest hop tree shown in Fig. 20. Alternatively, the control server may generate the shortest hop tree shown in Fig. 20 from the already-generated shortest hop trees shown in Figs. 16A and 16C.

In the present embodiment, the subsequent processing will be described on the assumption that control server 1 again acquired the LSDB information from the routers in the respective management areas. At this point, the LSDB information is in the states shown in Figs. 14A and 14C.

As shown at step S42 in Fig. 13, control server 1 changes all the cost values of X1-X19 in the LSDB information acquired at step S41, to 1 to create the LSDB information. The LSDB information of the management areas 0, 1, and 2 created at this point is the contents shown in Figs. 15A, 15B, and 15C, respectively. At this time, there is no change in the cells originally having no entry (the cells other than X1-X11 shown in Figs. 14A and X16-X19 shown in Figs. 14C) in the LSDBs of the respective routers.

On the other hand, AR 34, having received the identification information at M2 from MN 51, transmits a start request at M3 to control server 1 and, at the same time as it, or before or after it, AR 34 transmits a start point search request to CN 11 as a correspondent notified of at M2 (M6). This start point search request contains the identification information of MN 51 being a recipient mobile terminal to receive data from CN 11. This start point search request is routed to CN 11, but RT 21 preliminarily acknowledges that CN 11 as a destination of the start point search request is connected under the command of its own, and thus terminates the start point search request at the point where the start point search request arrives at RT 21 (M7).

At the opportunity of the termination of the start point search request at M7, RT 21 sends a start point search response to control server 1 (M8). This start point search response contains the identification information of MN 51, which was included in the start point search request at M6, and the identification information of the sending router RT 21 as a start point obtained by the search.

At step S43, control server 1 monitors reception of a start point search response, but it is assumed in the present embodiment that at this point the control server already has received the start point search response (M8) from RT 21. Therefore, the control server transfers to step S45.

At step S45, control server 1 generates the shortest hop tree from the start point to the end points by the Dijkstra's algorithm, on the basis of the LSDB information shown in Figs. 15A and 15C. As a result, the shortest hop trees shown in Figs. 16A and 16C are first generated and these trees are finally pieced together at the boundary router (RT 25) to generate the shortest hop tree of Fig. 20.

At last step S46, control server 1 refers to the shortest hop tree of Fig. 20 to determine that the shortest path and passing order from RT 21 to AR 33 are "RT 21, RT 22, RT 23, RT 25, and AR 33," and that the shortest path and passing order from RT 21 to AR 34 are "RT 21, RT 22, RT 23, RT 25, and AR 34." The shortest paths and passing orders associated with this determination correspond to the path information needed by control server 1, and this path information is stored into path information table 3, as shown in Fig. 9.

The processes executed in the subsequent path information comparing step and instructing step are similar to those executed in the path information comparing step and instructing step detailed in the first embodiment, and thus the illustration and detailed description thereof are omitted herein.

### Fifth Embodiment

The fifth embodiment of the present invention will be described below in detail with reference to the drawings.

The fourth embodiment was based on the assumption that CN 11 was connected to the router RT 21 in the home network. In contrast to it, the present embodiment is based on the assumption that CN 11 is connected to a router in a foreign network.

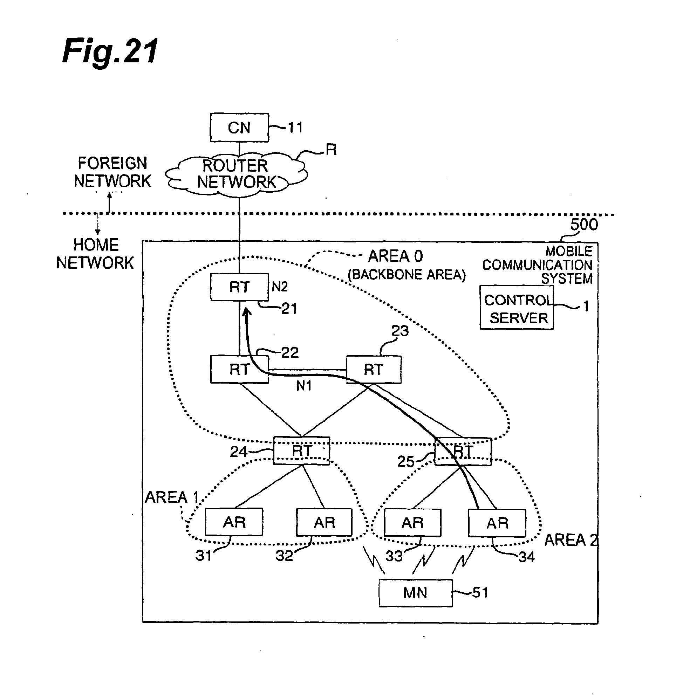

With reference to Fig. 21, the difference will be detailed below between mobile communication system 500 in the fifth embodiment and mobile communication system 400 in the fourth embodiment. Fig. 21 is an illustration showing one process of the multicast point selection in the case where CN 11 is connected to a router in a foreign network. As shown in Fig. 21, CN 11 is connected to a router network R constituting the foreign network, and RT 21 is one of gateway routers on the home network side for connecting the home network to the foreign network.

Mobile communication system 500 is different from mobile communication system 400 only in that the router terminating the start point search request and serving as a sender of the start point search response is not the router directly connected to CN 11. Namely, in mobile communication system 500, the router located at the last passing point of the home network (RT 21) terminates the start point search request and sends the start point search response to control server 1.

The present embodiment will be described using an example of a case where MN 51 adds use of AR 34 during communication with CN 11 present in the foreign network, using AR 32 and AR 33. First, when MN 51 detects the addition of AR 34 used as an access router, similarly as in the process indicated at L1 in Fig. 18, MN 51 sends the identification information of AR 32, AR 33, and AR 34 presently under use, and the identification information of CN 11 presently under communication, to AR 34.

Thereafter, AR 34 sends a start point search request to CN 11 and, in the case of the transmission of the start point search request from the home network to the foreign network, this start point search request is terminated by the router as a last passing point in the home network (RT 21), i.e., a home-network-side gateway router connecting the home network to the foreign network. When there exist a plurality of gateway routers, the start point search request is terminated by a router located on the shortest path connecting MN 51 to CN 11, i.e., a gateway router on the path of routing the start point search request through the shortest path to CN 11, out of the gateway routers.

More specifically, in the present embodiment, the start point search request is routed through the path indicated by arrow N1 in Fig. 21 and is then terminated by RT 21 being the gateway router present on the shortest path from MN 51 to CN 11 (N2). Thereafter, RT 21 sends a start point search response to control server 1. Control server 1, receiving the response, executes the path information acquiring step detailed in the fourth embodiment, and the path information comparing step and instructing step detailed in the first embodiment. As described, the present invention can also be applied to cases where the mobile terminal and the correspondent terminal are connected to their respective networks different from each other.

### Sixth Embodiment

The sixth embodiment of the present invention will be described below in detail with reference to the drawings.

In the fourth and fifth embodiments CN 11 as a correspondent terminal was a stationary terminal, whereas the present embodiment is based on the assumption that CN 11 is a mobile terminal existing in the home network, i.e., data is transmitted and received between mobile terminals.

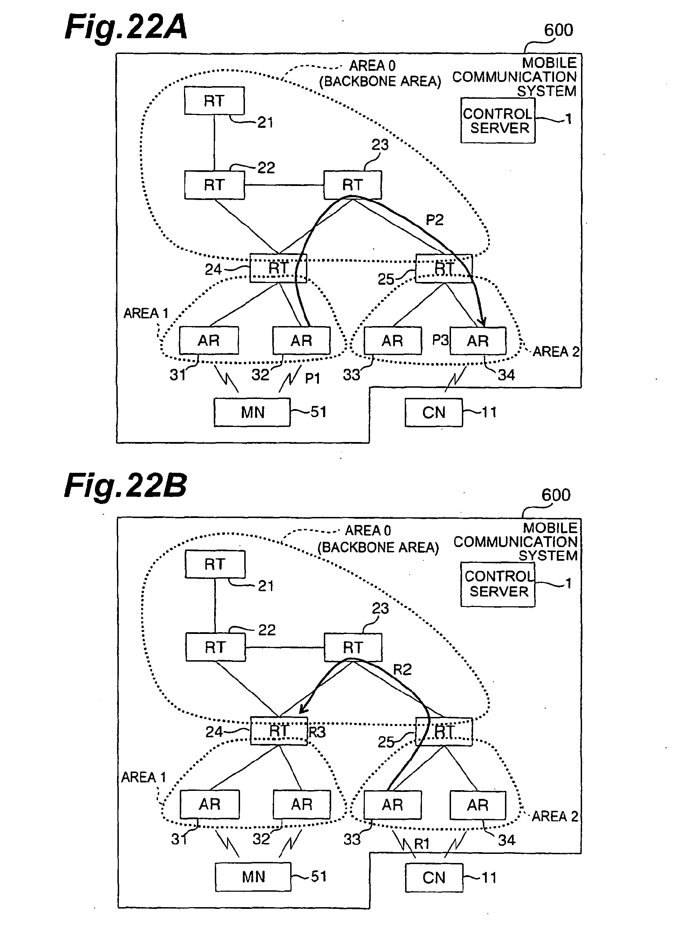

The difference will be detailed below between mobile communication system 600 in the sixth embodiment and mobile communication system 400 in the fourth embodiment. Fig. 22A is an illustration showing a process of the multicast point selection in a case where CN 11 as a mobile terminal is connected to a router in the home network. The present embodiment will be described using an example of a case where MN 51 and CN 11 use only AR 31 and AR 34, respectively, at a start of communication and where MN 51 adds use of AR 32 (cf. P1), as shown in Fig 22A, before CN 11 adds use of the second access router (or if CN 11 is not compliant to the multipath handover).

First, when MN 51 detects the addition of AR 32 used as an access router, similarly as in the process indicated at L1 in Fig. 18, MN 51 sends the identification information of AR 31 and AR 32 presently under use, and the identification information of CN 11 presently under communication, to AR 32. Thereafter, a start point search request is sent from AR 32 through the path indicated by arrow P2 in Fig. 22A, to CN 11 and, at the time when the request arrives at AR 34 connected to CN 11, the request is terminated by AR 34 (P3).

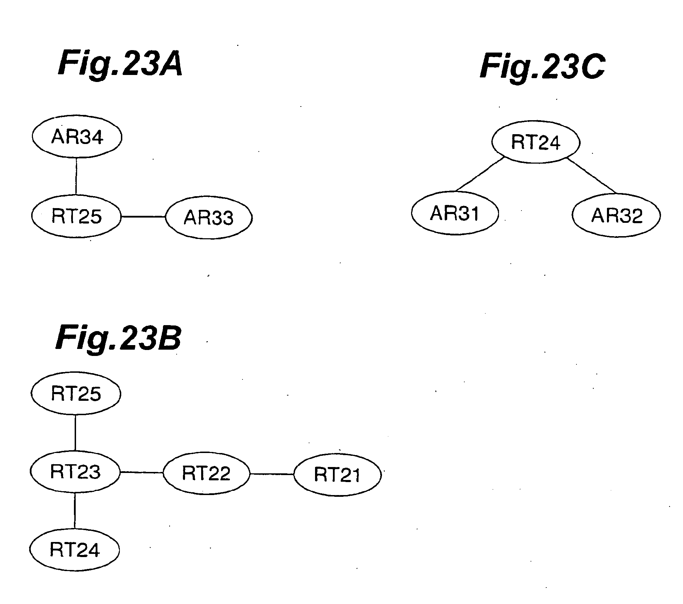

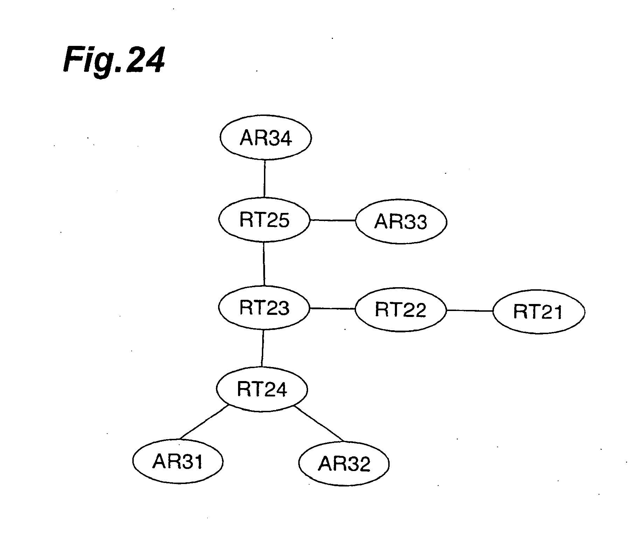

Thereafter, AR 34 sends a start point search response to control server 1, and control server 1, receiving the response, executes the path information acquiring step described in the fourth embodiment. In the present embodiment, the start point of the path information needed by the control server 1 is AR 34 in area 2, and the end points are AR 31 and AR 32 in area 1. The paths from the start point to the end points cross areas 2, 0, and 1. Therefore, in order for control server 1 to generate the shortest hop trees of the respective management areas, the start point in area 2 must be AR 34, the start point in area 0 RT 25 of the boundary router to area 2, and the start point in area 1 RT 24 of the boundary router to area 0. The shortest hop trees of areas 2, 0, and 1 generated with these routers at the start points are presented in Figs. 23A to 23C, respectively. The control server 1 pieces these trees together at RT 25 and RT 24 of the boundary routers, thereby generating the shortest hop tree shown in Fig. 24.

Control server 1 acquires the necessary path information with reference to this shortest hop tree. Thereafter, control server 1 executes the path information comparing step and instructing step detailed in the first embodiment. As a consequence, RT 24 is selected as a multicast point.

Subsequently, Fig. 22B is an illustration showing a state of the multicast point selection in a case where CN 11 in the state shown in Fig. 22A added the use of AR 33 (cf. R1). First, when CN 11 detects the addition of AR 33 used as an access router, similarly as in the process indicated at L1 in Fig. 18, CN 11 sends the identification information of AR 33 and AR 34 presently under use and the identification information of MN 51 presently under communication, to AR 33. Thereafter, AR 33 sends a start point search request through the path indicated by arrow R2 in Fig. 22B, to MN 51.

At this point, RT 24 has already been selected as a multicast point for transmission of data from CN 11 to MN 51. For this reason, the start point search request itself is transmitted to both AR 31 and AR 32 as the data to MN 51 is, and there is the concern that the transmission control of data becomes complicated. Therefore, this concern is eliminated in such a way that the start point search request is terminated by RT 24 as a multicast point for MN 51 of the destination (cf. R3) whereby the start point search response is sent from only RT 24.

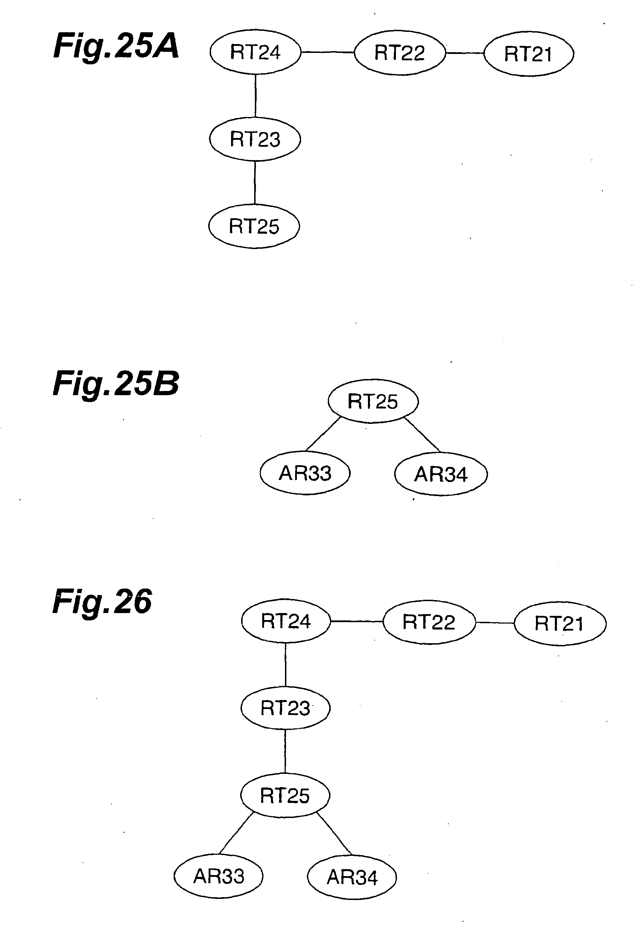

Thereafter, RT 24 sends a start point search response to control server 1, and control server 1, receiving the response, executes the path information acquiring step described in the fourth embodiment. In the present embodiment, the start point of path information needed by control server 1 is RT 24, and the end points are AR 33 and AR 34. The paths from the start point to the end points cross the areas 0, 2. Therefore, control server 1 once generates the shortest hop tree with RT 24 at a start point in area 0 (cf. Fig. 25A) and the shortest hop tree with RT 25 at a start point in area 2 (cf. Fig. 25B) and pieces them together to generate the shortest hop tree shown in Fig. 26.

Control server 1 acquires the necessary path information with reference to this shortest hop tree. Thereafter, control server 1 executes the path information comparing step and instructing step detailed in the first embodiment. As a consequence, RT 25 is selected as a multicast point. As described, the present invention can also be applied to transmission and reception of data between mobile terminals.

The modes described in the above fourth to sixth embodiments are just the preferred examples of the mobile communication system according to the present invention, and the present invention is not limited to these examples. For example, the function of the control server may be realized by the router terminating the start point search request (RT or AR). In this case, the start point search request contains the identification information of all the access routers currently under connection to the mobile terminal.

In the fourth to sixth embodiments, the start point search response was transmitted to the control server at the opportunity of receiving the start point search request from the access router, and the control server determined the start point of the shortest hop tree from this start point search response. However, the start point of the shortest hop tree may also be determined in accordance with the procedure described below. Namely, the mobile terminal first sends a notification of urging a start of execution of the multicast point selecting process to control server 1 or another server apparatus different therefrom (these servers will be called together "server apparatus"). Subsequently, at the opportunity of receiving this notification, the server apparatus determines the router connected to the correspondent terminal, from the topology of the network connected to the mobile terminal, and settles the router as a start point. Thereafter, the server apparatus executes processing similar to the processing executed by control server 1 after reception of the start point search response.

From the invention thus described, it will be obvious that the embodiments of the invention may be varied in many ways. Such variations are not to be regarded as a departure from the scope of the invention, and all such modifications as would be obvious to one skilled in the art are intended for inclusion within the scope of the following claims.

## Claims

1. A mobile communication system (100, 200, 300, 400, 500, 600) comprising a plurality of relay routers (21, 22, 23, 24, 25), a plurality of access routers (31, 32, 33, 34), and a server apparatus (1),
the mobile communication system (100, 200, 300, 400, 500, 600) being constructed in a configuration wherein a router (22, 24, 25) existing on paths for delivery of data from a correspondent terminal (11) to a mobile terminal (51) via each of access routers (31, 32, 33, 34) used in a multipath handover state by the mobile terminal (51), multicasts the data (31, 32, 33, 34),
wherein the server apparatus (1) performs such a control as to dynamically switch one router (22) to multicast the data (31, 32, 33, 34), to another (25) in conjunction with movement of the mobile terminal (51) or the correspondent terminal (11),
wherein the server apparatus (1) comprises:
acquiring means (2) for acquiring from each access router (31, 32, 33, 34), path information between a router (21) connected to the correspondent terminal (11) and each of the access routers (31, 32, 33, 34) used in the multipath handover state by the mobile terminal (51);
selecting means (4) for making a comparison of the path information acquired by the acquiring means (2) and selecting a router (22, 24, 25) to multicast the data, based on a result of the comparison; and
instructing means (6) for instructing the router selected by the selecting means (4), to multicast the data;
wherein the selecting means (4) of the server apparatus (1) is configured to:
make sequential comparisons of the path information acquired by the acquiring means (2), hop by hop from a start point;
if about a hop as a target for the comparisons, routers passed in all the paths are identical, perform a comparison about a next hop;
select as a router to multicast the data, a router in one hop before a path against which there exists no other path passing an identical router; and
thereafter eliminate said path, then repeat the comparison and selecting processes before there remains one or less path as a comparison target or before a comparison is completed for a hop of an end point, and thereby select another router to multicast the data.

2. The mobile communication (100, 200, 300, 400, 500, 600) system according to Claim 1, wherein a router (21) connected to the correspondent terminal (11) transmits path information to each of the access routers (31, 32, 33, 34) used in the multipath handover state by the mobile terminal (11), and
wherein each path information is routed through a shortest path from said router (21) as a start point to each of the access routers (31, 32, 33, 34) as an end point, a router (21, 22, 23, 24, 25, 31, 32, 33, 34) passed by each path information records identification information of said router (21, 22, 23, 24, 25, 31, 32, 33, 34) in each path information, and each of the access routers (31, 32, 33, 34) refers to the path information received, so as to acquire routers (21, 22, 23, 24, 25, 31, 32, 33, 34) on the shortest path from the start point (21) to the end point (31, 32, 33, 34), and a passing order thereof on the shortest path.

3. The mobile communication system (100, 200, 300, 400, 500, 600) according to Claim 1, wherein the instructing means (6) of the server apparatus (1) is configured to:
instruct the router (25) newly selected by the selecting means (4), to start multicasting the data; and
instruct a router (22) removed from the router to multicast the data, in conjunction with the selection of the router, to cancel multicast of the data.

4. The mobile communication system (100, 200, 300, 400, 500, 600) according to Claim 1, wherein at an opportunity of a change in the access routers used in the multipath handover state by the mobile terminal (11), the server apparatus (1) sequentially executes the acquiring process, the selecting process, and the instructing process.

5. The mobile communication system (100, 200, 300, 400, 500, 600) according to Claim 2, wherein one of the access routers (31, 32, 33, 34) used in the multipath handover state by the mobile terminal (11) sends a path information request to the correspondent terminal (11) under communication with the mobile terminal (51), and
wherein the router (21) connected to the correspondent terminal (11) terminates the path information request and at this opportunity, said router (21) sends path information to each of the access routers (31, 32, 33, 34) used in the multipath handover state by the mobile terminal (51).

6. The mobile communication system (100, 200, 300, 400, 500, 600) according to Claim 5, wherein each access router (31, 32, 33, 34) receiving the path information records identification information of the access router (31, 32, 33, 34) itself in the path information and sends the path information to the server apparatus (1).

7. The mobile communication system (100, 200, 300, 400, 500, 600) according to Claim 3, wherein said router (25) newly selected by the selecting means (4) receives a multicast start request from the server apparatus (1), retains information included in the multicast start request, and multicasts data addressed to the mobile terminal (51), and
wherein the router (22) removed from the router to multicast the data, in conjunction with the selection of the router receives a multicast stop request from the server apparatus (1) and stops multicasting the data.

8. The mobile communication system (100, 200, 300, 400, 500, 600) according to Claim 7, wherein, when receiving the data addressed to the mobile terminal (51), the router (25) newly selected by the selecting means (4) makes copies of the data by the number of routers (31, 32, 33, 34) as multicast destinations and transmits the data copies to the respective multicast destinations (31, 32, 33, 34).

9. The mobile communication system (100, 200, 300, 400, 500, 600) according to Claim 5, wherein said path information request contains identification information of a sender and a recipient of the path information request and also contains identification information of the mobile terminal and identification information of the access routers to be designated as destinations of the path information.

10. The mobile communication system (100, 200, 300, 400, 500, 600) according to Claim 5, wherein the path information contains identification information of a sender and a recipient of the path information and also contains identification information of the mobile terminal, identification information of the correspondent terminal, and identification information of the router as a start point of a path indicated by the path information.

11. The mobile communication system (100, 200, 300, 400, 500, 600) according to Claim 7, wherein the multicast start request contains identification information of a sender and a recipient of the multicast start request and also contains identification information of the mobile terminal and identification information of routers as multicast destinations, and
wherein the multicast stop request contains identification information of a sender and a recipient of the multicast stop request and also contains identification information of the mobile terminal.

12. A server apparatus (1) for connection to a plurality of relay routers (21, 22, 23, 24, 25) and to a plurality of access routers (31, 32, 33, 34), the server apparatus (1) being configured to perform such a control as to dynamically switch one router (22) to multicast the data (31, 32, 33, 34), toanother (25) in conjunction with movement of the mobile terminal (51) or the correspondent terminal (11), wherein a router (21, 22, 23, 24, 25) existing on paths for delivery of data from a correspondent terminal (11) to a mobile terminal (51) via each of access routers (31, 32, 33, 34) used in a multipath handover state by the mobile terminal (51) multicasts the data,
said server apparatus (1) comprising:
acquiring means (2) for acquiring from each access router (31, 32, 33, 34), path information between a router (21) connected to the correspondent terminal (11) and each of the access routers (31, 32, 33, 34) used in the multipath handover state by the mobile terminal (51);
selecting means (4) for making a comparison of the path information acquired by the acquiring means (2) and selecting a router (22, 24, 25) to multicast the data (31, 32, 33, 34), based on a result of the comparison; and instructing means (6) for instructing the router (22, 24, 25) selected by the selecting means (4), to multicast the data;
wherein the selecting means (4) of the server apparatus (1) is configured to:
make sequential comparisons of the path information acquired by the acquiring means (2), hop by hop from a start point;
if about a hop as a target for the comparisons, routers passed in all the paths are identical, perform a comparison about a next hop;
select as a router to multicast the data, a router in one hop before a path against which there exists no other path passing an identical router; and
thereafter eliminate said path, then repeat the comparison and selecting processes before there remains one or less path as a comparison target or before a comparison is completed for a hop of an end point, and thereby select another router to multicast the data.

13. A data transmission method in a mobile communication system (100, 200, 300, 400, 500, 600) comprising a plurality of relay routers (21, 22, 23, 24, 25), a plurality of access routers (31, 32, 33, 34), and a server apparatus,
the mobile communication system (100, 200, 300, 400, 500, 600) being constructed in a configuration wherein a router (22, 24, 25) existing on paths for delivery of data from a correspondent terminal (11) to a mobile terminal (51) via each of access routers (31, 32, 33, 34) used in a multipath handover state by the mobile terminal (51), multicasts the data (31, 32, 33, 34), said data transmission method comprising:
a control step wherein the server apparatus (1) dynamically switches one router (22) to multicast the data (31, 32, 33, 34, 35), to another (25) in conjunction with movement of the mobile terminal (51) or the correspondent terminal (11);
an acquiring step wherein acquiring means (2) of the server apparatus (1) acquires from each access router (31, 32, 33, 34), path information between a router (21) connected to the correspondent terminal (11) and each of the access routers (31, 32, 33, 34) used in the multipath handover state by the mobile terminal (51);
a selecting step wherein selection means (4) of the server apparatus (1) makes a comparison of the path information acquired by the acquiring means (2) and selecting a router (22, 24, 25) to multicast the data, based on a result of the comparison; and
an instructing step wherein instructing means (6) of the server apparatus (1) instructs the router selected in the selecting step, to multicast the data;
wherein the selecting step (4) performed by the server apparatus (1) includes:
making sequential comparisons of the path information acquired in the acquiring step, hop by hop from a start point;
if about a hop as a target for the comparisons, routers passed in all the paths are identical, performing a comparison about a next hop;
selecting as a router to multicast the data, a router in one hop before a path against which there exists no other path passing an identical router; and
thereafter eliminateing said path, then repeating the comparison and selecting processes before there remains one or less path as a comparison target or before a comparison is completed for a hop of an end point, and thereby selecting another router to multicast the data.

14. A mobile communication system (100, 200, 300, 400, 500, 600) comprising a plurality of relay routers (21, 22, 23, 24, 25), a plurality of access routers (31, 32, 33, 34), and a server apparatus (1),
the mobile communication system (100, 200, 300, 400, 500, 600) being constructed in a configuration wherein a router (22, 24, 25) existing on paths for delivery of data from a correspondent terminal (11) to a mobile terminal (51) via each of access routers (31, 32, 33, 34) used in a multipath handover state by the mobile terminal (51), multicasts the data (31, 32, 33, 34),
wherein the server apparatus (1) performs such a control as to dynamically switch one router (22) to multicast the data (31, 32, 33, 34), to another (25) in conjunction with movement of the mobile terminal (51) or the correspondent terminal (11),
wherein the server apparatus (1) comprises:
acquiring means (2) for acquiring path information between a router (21) connected to the correspondent terminal (11) and each of the access routers (31, 32, 33, 34) used in the multipath handover state by the mobile terminal (51), based on information in a link state database of OSPF, which was acquired from the router (21) or the access router (31, 32, 33, 34);
selecting means (4) for making a comparison of the path information acquired by the acquiring means (2) and selecting a router (22, 24, 25) to multicast the data, based on a result of the comparison; and
instructing means (6) for instructing the router (22, 24, 25) selected by the selecting means (4), to multicast the data;
wherein the acquiring means (2) of the server apparatus (1) is configured to:
acquire from at least one router (23, 32, 34) belonging to each management area of OSPF used by a network, information in the link state database made in the management area to which said router (23, 32, 34) belongs;
change all cost values between routers (21, 22, 23, 24, 25) or access routers (31, 32, 33, 34), recorded in the link state database, to an identical numeral larger than 0 according to need;
receive from a router (21) connected to the correspondent terminal (11), a start point search response indicating that said router (21) is a start point of path information;
activate a shortest path algorithm with the router (21) indicated by the start point search response, as a start point, and thereby generate a shortest hop tree with said router (21) at a start point; and
refer to the shortest hop tree to acquire as path information, routers on a shortest path from the router as a start point to each access router as an end point, and a passing order thereof.

15. The mobile communication system (100, 200, 300, 400, 500, 600) according to Claim 14, wherein one of the access routers (31, 32, 33, 34) used in the multipath handover state by the mobile terminal (51) sends a start point search request to the correspondent terminal (11) as a correspondent under communication with the mobile terminal (51), and
wherein the router (21) connected to the correspondent terminal (11) terminates the start point search request thereat and at this opportunity, said router (21) sends the start point search response in which identification information of the router (21) is recorded, to the server apparatus (1).

16. The mobile communication system (100, 200, 300, 400, 500, 600) according to Claim 15, wherein the start point search request contains identification information of a sender and a recipient of the start point search request and also contains identification information of the mobile terminal.

17. The mobile communication system (100, 200, 300, 400, 500, 600) according to Claim 14, wherein the start point search response contains identification information of a sender and a recipient of the start point search response and also contains identification information of the mobile terminal, identification information of the correspondent terminal, and identification information of a router as a start point obtained by a search.

18. A server apparatus (1) for connection to a plurality of relay routers (21, 22, 23, 24, 25) and to a plurality of access routers (31, 32, 33, 34), the server apparatus (1) being configured to perform such a control as to dynamically switch one router (22) to multicast the data (31, 32, 33, 34), toanother (25) in conjunction with movement of the mobile terminal (51) or the correspondent terminal (11), wherein a router (21, 22, 23, 24, 25) existing on paths for delivery of data from a correspondent terminal (11) to a mobile terminal (51) via each of access routers (31, 32, 33, 34) used in a multipath handover state by the mobile terminal (31, 32, 33, 34) multicasts the data,
said server apparatus (1) comprising:
acquiring means (2) for acquiring path information between a router (21) connected to the correspondent terminal (11) and each of the access routers (31, 32, 33, 34) used in the multipath handover state by the mobile terminal (51), based on information in a link state database of OSPF, which was acquired from the router (21) or the access router (31, 32, 33, 34);
selecting means (4) for making a comparison of the path information acquired by the acquiring means (2) and selecting a router (22, 24, 25) to multicast the data, based on a result of the comparison; and
instructing means (6) for instructing the router (22, 24, 25) selected by the selecting means (4), to multicast the data;
wherein acquiring means (2) of the server apparatus (1) is configured to:
acquire from at least one router (23, 32, 34) belonging to each management area of OSPF used by a network, information in the link state database made in the management area to which said router (23, 32, 34) belongs;
change all cost values between routers (21, 22, 23, 24, 25) or access routers (31, 32, 33, 34), recorded in the link state database, to an identical numeral larger than 0 according to need;
receive from a router (21) connected to the correspondent terminal (11), a start point search response indicating that said router (21) is a start point of path information;
activate a shortest path algorithm with the router (21) indicated by the start point search response, as a start point, and thereby generate a shortest hop tree with said router (21) at a start point; and
refer to the shortest hop tree to acquire as path information, routers on a shortest path from the router as a start point to each access router as an end point, and a passing order thereof.

19. A data transmission method in a mobile communication system (100, 200, 300, 400, 500, 600) comprising a plurality of relay routers (21, 22, 23, 24, 25), a plurality of access routers (31, 32, 33, 34), and a server apparatus,
the mobile communication system (100, 200, 300, 400, 500, 600) being constructed in a configuration wherein a router (22, 24, 25) existing on paths for delivery of data from a correspondent terminal (11) to a mobile terminal (51) via each of access routers (31, 32, 33, 34) used in a multipath handover state by the mobile terminal (51), multicasts the data (31, 32, 33, 34), said data transmission method comprising:
a control step wherein the server apparatus (1) dynamically switches one router (22) to multicast the data (31, 32, 33, 34, 35), to another (25) in conjunction with movement of the mobile terminal (51) or the correspondent terminal (11);
an acquiring step wherein acquiring means (2) of the server apparatus (1) acquires path information between a router (21) connected to the correspondent terminal (11) and each of the access routers (31, 32, 33, 34) used in the multipath handover state by the mobile terminal (51), based on information in a link state database of OSPF, which was acquired from the router (21) or the access router (31, 32, 33, 34);
a selecting step in which selecting means (4) of the server apparatus (1) makes a comparison of the path information acquired in the acquiring step and selects a router (22, 24, 25) to multicast the data, based on a result of the comparison; and
an instructing step wherein instructing means (6) of the server apparatus (1) instructs the router (22, 24, 25) selected in the selecting step, to multicast the data;
wherein the acquiring step (2) performed by the server apparatus (1) includes:
acquireing (S41) from at least one router (23, 32, 34) belonging to each management area of OSPF used by a network, information in the link state database made in the management area to which said router (23, 32, 34) belongs;
changeing (S42) all cost values between routers (21, 22, 23, 24, 25) or access routers (31, 32, 33, 34), recorded in the link state database, to an identical numeral larger than 0 according to need;
receiving from a router (21) connected to the correspondent terminal (11), a start point search response indicating that said router (21) is a start point of path information;
activating (S45) a shortest path algorithm with the router (21) indicated by the start point search response, as a start point, and thereby generating a shortest hop tree with said router (21) at a start point; and
referring (S46) to the shortest hop tree to acquire as path information, routers on a shortest path from the router as a start point to each access router as an end point, and a passing order thereof.

## Patentansprüche

1. Mobilkommunikationssystem (100, 200, 300, 400, 500, 600) aufweisend eine Mehrzahl von Relais-Routern (21, 22, 23, 24, 25), eine Mehrzahl von Zugriffs-Routern (31, 32, 33, 34), und eine Server-Vorrichtung (1),
das Mobilkommunikationssystem (100, 200, 300, 400, 500, 600) eingerichtet seiend in einer Konfiguration, in der ein Roter (22, 24, 25) existierend auf Pfaden zum Ausliefern von Daten von einem Korrespondenz-Endgerät (11) zu einem Mobil-Endgerät (51) über jeden von Zugriffs-Routern (31, 32, 33, 34) verwendet in einem Mehr-Pfad-Handover-Zustand von dem Mobil-Endgerät (51), die Daten (31, 32, 33, 34) multicastet,
wobei die Server-Vorrichtung (1) solch eine Kontrolle durchführt, dass dynamisch ein Router (22) zum Multicasten der Daten (31, 32, 33, 34) auf einen anderen (25) umgeschaltet wird in Verbindung mit Bewegung des Mobil-Endgeräts (51) oder des Korrespondenz-Endgeräts (11),
wobei die Server-Vorrichtung (1) aufweist:
Akquirierungs-Mittel (2) zum Pfad-Information zwischen einem Router (21) verbunden mit dem Korrespondenz-Endgerät (11) und jedem der Zugriffs-Router (31, 32, 33, 34) verwendet in dem Mehr-Pfad-Handover-Zustand von dem Mobil-Endgerät (51) Akquirieren von jedem Zugriffs-Router (31, 32, 33, 34);
Auswahl-Mittel (4) zum Machen eines Vergleichs der von demAkquirierungs-Mittel (2) akquirierten Pfad-Information und Auswählen eines Routers (22, 24, 25) zum Multicasten der Daten, basierend auf einem Resultat des Vergleichs; und
Instruktions-Mittel (6) zum Instruieren des von dem Auswahl-Mittel (4) ausgewählten Routers, die Daten zu multicasten;
wobei das Auswahl-Mittel (4) der Server-Vorrichtung (1) eingerichtet ist zum:
Machen von sequentiellen Vergleichen der von dem Akquirierungs-Mittel (2) akquirierten Pfad-Information, Hop-für-Hop von einem Start-Punkt;
falls über einen Hop als ein Ziel der Vergleiche Router passiert in all den Pfaden identisch sind, Durchführen eines Vergleichs über einen nächsten Hop;
Auswählen als einen Router zum Multicasten der Daten einen Router in einem Hop vor einem Pfad gegen den kein anderer Pfad passierend einen identischen Router existiert; und
danach Eliminieren des Pfades, dann wiederholen des Vergleich- und Auswahl-Prozesses bevor ein oder weniger Pfade als ein Vergleichs-Ziel übrigbleiben oder bevor ein Vergleich vollendet ist für einen Hop eines End-Punktes, und **dadurch** Auswählen eines anderen Routers zum Multicasten der Daten.

2. Mobilkommunikationssystem (100, 200, 300, 400, 500, 600) gemäß Anspruch 1, wobei ein Router (21) verbunden mit dem Korrespondenz-Endgerät (11) Pfad-Information überträgt zu jedem der Zugriffs-Router (31, 32, 33, 34) verwendet in dem Mehr-Pfad-Handover-Zustand von dem Mobil-Endgerät (11), und
wobei jede Pfad-Information geroutet wird durch einen kürzesten Pfad von dem Router (21) als einem Start-Punkt zu jedem der Zugriffs-Router (31, 32, 33, 34) als einem Endpunkt, ein Router (21, 22, 23, 24, 25, 31, 32, 33, 34) passiert von jeder Pfad-Information Identifikations-Information des Routers (21, 22, 23, 24, 25, 31, 32, 33, 34) speichert in jeder Pfad-Information, und jeder der Access-Router (31, 32, 33, 34) sich auf die empfangene Pfad-Information bezieht, so dass Router (21, 22, 23, 24, 25, 31, 32, 33, 34) akquiriert werden auf dem kürzesten Pfad von dem Start-Punkt (21) zu dem End-Punkt (31, 32, 33, 34), und eine Passier-Reihenfolge davon auf dem kürzesten Pfad.

3. Mobilkammunikationssystem (100, 200, 300, 400, 500, 600) gemäß Anspruch 1, wobei das Instruktions-Mittel (6) der Server-Vorrichtung (1) eingerichtet ist zum:
Instruieren des neu von dem Auswahl-Mittel (4) ausgewählten Routers (25), Multicasten der Daten zu starten; und
Instruieren eines von dem Router zum Multicasten der Daten entfernten Routers (22), in Verbindung mit der Auswahl des Routers, Multicasten der Daten zu abzubrechen.

4. Mobilkommunikationssystem (100, 200, 300, 400, 500, 600) gemäß Anspruch 1, wobei zu einer Gelegenheit eines Wechsels in den Zugriffs-Routern verwendet in dem Mehr-Pfad-Handover-Zustand von dem Mobil-Endgerät (11), die Server-Vorrichtung (1) sequentiell den Akquirierungs-Prozess, den Auswahl-Prozess und den Instruktions-Prozess durchführt.

5. Mobilkommunikationssystem (100, 200, 300, 400, 500, 600) gemäß Anspruch 2, wobei einer der Zugriffs-Router (31, 32, 33, 34) verwendet in dem Mehr-Pfad-Handover-Zustand von dem Mobil-Endgerät (11) eine Pfad-Information-Anforderung sendet an das Korrespondenz-Endgerät (11) unter Kommunikation mit dem Mobil-Endgerät (51), und
wobei der Router (21) verbunden mit dem Korrespondenz-Endgerät (11) die Pfad-Information-Anforderung terminiert und bei dieser Gelegenheit der Router (21) Pfad-Information zu jedem der Zugriffs-Router (31, 32, 33, 34) verwendet in dem Mehr-Pfad-Handover-Zustand von dem Mobil-Endgerät (51) sendet.

6. Mobilkommunikationssystem (100, 200, 300, 400, 500, 600) gemäß Anspruch 5, wobei jeder die Pfad-Information empfangende Zugriffs-Router (31, 32, 33, 34) Identifikations-Information des Zugriffs-Routers (31, 32, 33, 34) selbst speichert in der Pfad-Information und die Pfad-Information zu der Server-Vorrichtung (1) sendet.

7. Mobilkommunikationssystem (100, 200, 300, 400, 500, 600) gemäß Anspruch 3, wobei der von dem Auswahl-Mittel (4) neu gewählte Roter (25) eine Multicast-Start-Anforderung von der Server-Vorrichtung (1) empfängt, Information enthalten in der Multicast-Start-Anforderung speichert, und zu dem Mobil-Endgerät (51) adressierte Daten multicastet, und
wobei der von dem Router zum Multicasten der Daten entfernte Router (22), in Verbindung mit der Auswahl des Routers eine Multicast-Stopp-Anforderung von der Server-Vorrichtung (1) empfängt und Multicasten der Daten stoppt.

8. Mobilkommunikationssystem (100, 200, 300, 400, 500, 600) gemäß Anspruch 7, wobei, wenn er die an das Mobil-Endgerät (51) adressierten Daten empfängt, der neu von dem Auswahl-Mittel (4) ausgewählte Router (25) Kopien der Daten gemäß der Anzahl der Router (31, 32, 33, 34) als Multicast-Ziele macht und die Daten-Kopien zu den jeweiligen Multicast-Zielen (31, 32, 33, 34) überträgt.

9. Mobilkommunikationssystem (100, 200, 300, 400, 500, 600) gemäß Anspruch 5, wobei die Pfad-Informations-Anforderung enthält Identifikations-Information eines Senders und eines Empfängers der Pfad-Informations-Anforderung und auch enthält Identifikations-Information des Mobil-Endgeräts und Identifikations-Information der Zugriffs-Router, vorzusehen als Ziele der Pfad-Information.

10. Mobilkommunikationssystem (100, 200, 300, 400, 500, 600) gemäß Anspruch 5, wobei die Pfad-Information enthält Identifikations-Information eines Senders und eines Empfängers der Pfad-Information und auch enthält Identifikations-Information des Mobil-Endgeräts, Identifikations-Information des Korrespondenz-Endgeräts und Identifikations-Information des Routers als ein Start-Punkt eines von der Pfad-Information angegebenen Pfades.

11. Mobilkommunikationssystem (100, 200, 300, 400, 500, 600) gemäß Anspruch 7, wobei die Multicast-Start-Anforderung enthält Identifikations-Information eines Senders und eines Empfängers der Multicast-Start-Anforderung und auch enthält Identifikations-Information des Mobil-Endgeräts und Identifikations-Information des Routers als Multicast-Ziele, und
wobei die Multicast-Stopp-Anforderung enthält Identifikations-Information eines Senders und eines Empfängers der Multicast-Stopp-Anforderung und auch enthält Identifikations-Information des Mobil-Endgeräts.

12. Server-Vorrichtung (1) für Verbindung zu einer Mehrzahl von Relais-Routern (21, 22, 23, 24, 25) und zu einer Mehrzahl von Zugriffs-Routern (31, 32, 33, 34), die Server-Vorrichtung (1) eingerichtet seiend zum Durchführen solch einer Kontrolle, dass dynamisch ein Router (22) zum Multicasten der Daten (31, 32, 33, 34) auf einen anderen (25) umgeschaltet wird in Verbindung mit Bewegung des Mobil-Endgeräts (51) oder des Korrespondenz-Endgeräts (11), wobei ein Router (21, 22, 23, 24, 25) existierend auf Pfaden zum Ausliefern von Daten von einem Korrespondenz-Endgerät (11) zu einem Mobil-Endgerät (51) über jeden von Zugriffs-Routern (31, 32, 33, 34) verwendet in einem Mehr-Pfad-Handover-Zustand von dem Mobil-Endgerät (51) die Daten (31, 32, 33, 34) multicastet,
die Server-Vorrichtung (1) aufweisend:
Akquirierungs-Mittel (2) zum Pfad-Information zwischen einem Router (21) verbunden mit dem Korrespondenz-Endgerät (11) und jedem der Zugriffs-Router (31, 32, 33, 34) verwendet in dem Mehr-Pfad-Handover-Zustand von dem Mobil-Endgerät (51) Akquirieren von jedem Zugriffs-Router (31, 32, 33, 34);
Auswahl-Mittel (4) zum Machen eines Vergleichs der von dem Akquirierungs-Mittel (2) akquirierten Pfad-Information und Auswählen eines Routers (22, 24, 25) zum Multicasten der Daten (31, 32, 33, 34), basierend auf einem Resultat des Vergleichs; und
Instruktions-Mittel (6) zum Instruieren des von dem Auswahl-Mittel (4) ausgewählten Routers (22, 24, 25), die Daten zu multicasten;
wobei das Auswahl-Mittel (4) der Server-Vorrichtung (1) eingerichtet ist zum:
Machen von sequentiellen Vergleichen der von dem Akquirierungs-Mittel (2) akquirierten Pfad-Information, Hop-für-Hop von einem Start-Punkt;
falls über einen Hop als ein Ziel der Vergleiche Router passiert in all den Pfaden identisch sind, Durchführen eines Vergleichs über einen nächsten Hop;
Auswählen als einen Router zum Multicasten der Daten einen Router in einem Hop vor einem Pfad gegen den kein anderer Pfad passierend einen identischen Router existiert; und
danach Eliminieren des Pfades, dann Wiederholen des Vergleich-und Auswahl-Prozesses bevor ein oder weniger Pfade als ein Vergleichs-Ziel übrigbleiben oder bevor ein Vergleich vollendet ist für einen Hop eines End-Punktes, und **dadurch** Auswählen eines anderen Routers zum Multicasten der Daten.

13. Daten-Übertragungs-Verfahren in einem Mobilkommunikationssystem (100, 200, 300, 400, 500, 600) aufweisend eine Mehrzahl von Relais-Routern (21, 22, 23, 24, 25), eine Mehrzahl von Zugriffs-Routern (31, 32, 33, 34) und eine Server-Vorrichtung,
das Mobilkommunikationssystem (100, 200, 300, 400, 500, 600) eingerichtet seiend in einer Konfiguration, in der ein Router (22, 24, 25) existierend auf Pfaden zum Ausliefern von Daten von einem Korrespondenz-Endgerät (11) zu einem Mobil-Endgerät (51) über jeden von Zugriffs-Routern (31, 32, 33, 34) verwendet in einem Mehr-Pfad-Handover-Zustand von dem Mobil-Endgerät (51), die Daten (31, 32, 33, 34) multicastet, das Daten-Übertragungs-Verfahren aufweisend:
einen Kontroll-Schritt, in dem die Server-Vorrichtung (1) dynamisch einen Router (22) zum Multicasten der Daten (31, 32, 33, 34) auf einen anderen (25) umschaltet in Verbindung mit Bewegung des Mobil-Endgeräts (51) oder des Korrespondenz-Endgeräts (11),
einen Akquirierungs-Schritt, in dem Akquirierungs-Mittel (2) der Server-Vorrichtung (1) von jedem Zugriffs-Router (31, 32, 33, 34) Pfad-Information zwischen einem Router (21) verbunden mit dem Korrespondenz-Endgerät (11) und jedem der Zugriffs-Router (31, 32, 33, 34) verwendet in dem Mehr-Pfad-Handover-Zustand von dem Mobil-Endgerät (51) akquiriert;
einen Auswahl-Schritt, in dem Auswahl-Mittel (4) der Server-Vorrichtung (1) einen Vergleich der von dem Akquirierungs-Mittel (2) akquirierten Pfad-Information machtundAuswähleneinesRouters (22, 24, 25) zum Multicasten der Daten, basierend auf einem Resultat des Vergleichs; und
einen Instruktions-Schritt, in dem Instruktions-Mittel (6) der Server-Vorrichtung (1) den in dem Auswahl-Schritt ausgewählten Router instruieren, die Daten zu multicasten;
wobei der Auswahl-Schritt (4) durchgeführt von der Server-Vorrichtung (1) enthält:
Machen von sequentiellen Vergleichen der in dem Akquirierungs-Schritt akquirierten Pfad-Information, Hop-für-Hop von einem Start-Punkt;
falls über einen Hop als ein Ziel der Vergleiche Router passiert in all den Pfaden identisch sind, Durchführen eines Vergleichs über einen nächsten Hop;
Auswählen als einen Router zum Multicasten der Daten einen Router in einem Hop vor einem Pfad gegen den kein anderer Pfad passierend einen identischen Router existiert; und
danach Eliminieren des Pfades, dann Wiederholen des Vergleich- und Auswahl-Prozesses bevor ein oder weniger Pfade als ein Vergleichs-Ziel übrigbleiben oder bevor ein Vergleich vollendet ist für einen Hop eines End-Punktes, und **dadurch** Auswählen eines anderen Routers zum Multicasten der Daten.

14. Mobilkommunikationssystem (100, 200, 300, 400, 500, 600) aufweisend eine Mehrzahl von Relais-Routern (21, 22, 23, 24, 25), eine Mehrzahl von Zugriffs-Routern (31, 32, 33, 34), und eine Server-Vorrichtung (1),
das Mobilkommunikationssystem (100, 200, 300, 400, 500, 600) eingerichtet seiend in einer Konfiguration, in der ein Router (22, 24, 25) existierend auf Pfaden zum Ausliefern von Daten von einem Korrespondenz-Endgerät (11) zu einem Mobil-Endgerät (51) über jeden von Zugriffs-Routern (31, 32, 33, 34) verwendet in einem Mehr-Pfad-Handover-Zustand von dem Mobil-Endgerät (51), die Daten (31, 32, 33, 34) multicastet,
wobei die Server-Vorrichtung (1) solch eine Kontrolle durchführt, dass dynamisch ein Router (22) zum Multicasten der Daten (31, 32, 33, 34) auf einen anderen (25) umgeschaltet wird in Verbindung mit Bewegung des Mobil-Endgeräts (51) oder des Korrespondenz-Endgeräts (11),
wobei die Server-Vorrichtung (1) aufweist:
Akquirierungs-Mittel (2) zum Akquirieren von Pfad-Information zwischen einem Router (21) verbunden mit dem Korrespondenz-Endgerät (11) und jedem der Zugriffs-Router (31, 32, 33, 34) verwendet in dem Mehr-Pfad-Handover-Zustand von dem Mobil-Endgerät (51), basierend auf Information in einer Verbindungs-Zustands-Datenbank von OSPF, welche von dem Router (21) oder dem Zugriffs-Router (31, 32, 33, 34) akquiriert wurde;
Auswahl-Mittel (4) zum Machen eines Vergleichs der von dem Akquirierungs-Mittel (2) akquirierten Pfad-Information und Auswählen eines Routers (22, 24, 25) zum Multicasten der Daten, basierend auf einem Resultat des Vergleichs; und
Instruktions-Mittel (6) zum Instruieren des von dem Auswahl-Mittel (4) ausgewählten Routers (22, 24, 25), die Daten zu multicasten;
wobei das Akquirierungs-Mittel (2) der Server-Vorrichtung (1) eingerichtet ist zum:
Information in der Link-Zustands-Datenbank gemacht in dem Verwaltungs-Bereich, zu dem der Router (23, 32, 34) gehört, Akquirieren von mindestens einem Router (23, 32, 34) gehörend zu jedem Verwaltungs-Bereich von OSPF verwendet von einem Netzwerk;
Ändern aller Kosten-Werte zwischen Routern (21, 22, 23, 24, 25) oder Zugrifts-Routern (31, 32, 33, 34), gespeichert in der Verbindungs-Zustands-Datenbank, auf ein identisches Zahlensymbol größer als 0 gemäß Bedarf;
von einem Router (21) verbunden mit dem Korrespondenz-Endgerät (11) Empfangen einer Start-Punkt-Such-Antwort angebend, dass der Router (21) ein Start-Punkt von Pfad-Information ist;
Aktivieren eines Kürzester-Pfad-Algorithmus mit dem Router (21) angegeben von der Start-Punkt-Such-Antwort als ein Start-Punkt, und **dadurch** Erzeugen eines Kürzester-Hop-Baums mit dem Router (21) als einem Start-Punkt; und
Bezugnehmen auf den Kürzester-Hop-Baum zum als Pfad-Information Akquirieren von Routern auf einem kürzesten Pfad von dem Router als ein Start-Punkt zu jedem Zugriffs-Router als ein Endpunkt, und eine Passier-Reihenfolge davon.

15. Mobilkommunikationssystem (100, 200, 300, 400, 500, 600) gemäß Anspruch 14, wobei einer der Zugriffs-Router (31, 32, 33, 34) verwendet in dem Mehr-Pfad-Handover-Zustand von dem Mobil-Endgerät (51) eine Start-Punkt-Such-Anforderung zu dem Korrespondenz-Endgerät (11) als einem Korrespondenten unter Kommunikation mit dem Mobil-Endgerät (51) sendet, und
wobei der Router (21) verbunden mit dem Korrespondenz-Endgerät (11) die Start -Punkt-Such-Anforderung dort terminiert und bei dieser Gelegenheit der Router (21) die Start-Punkt-Such-Antwort, in welcher Identifikations-Information des Routers (21) gespeichert ist, an die server-Vorrichtung (1) sendet.

16. Mobilkommunikationssystem (100, 200, 300, 400, 500, 600) gemäß Anspruch 15, wobei die Start-Punkt-Such-Anforderung Identifikations-Information eines Senders und eines Empfängers der Start-Punkt-Such-Anforderung enthält und auch Identifikations-Information des Mobil-Endgeräts enthält.

17. Mobilkommunikationssystem (100, 200, 300, 400, 500, 600) gemäß Anspruch 14, wobei die Start-Punkt-Such-Antwort enthält Identifikations-Information eines Senders und eines Empfängers der Start-Punkt-Such-Anforderung und auch enthält Identifikations-Information des Mobil-Endgeräts, Identifikations-Information des Korrespondenz-Endgeräts und Idantifikations-Iformation eines Router als einen durch eine Suche erhaltenen Start-Punkt.

18. Server-Vorrichtung (1) für Verbindung zu einer Mehrzahl von Relais-Routern (21, 22, 23, 24, 25) und zu einer Mehrzahl von Zugriffs-Routern (31, 32, 33, 34), die Server-Vorrichtung (1) eingerichtet seiend zum Durchführen solch einer Kontrolle, dass dynamisch ein Router (22) zum Multicasten der Daten (31, 32, 33, 34) auf einen anderen (25) umgeschaltet wird in Verbindung mit Bewegung des Mobil-Endgeräts (51) oder des Korrespondenz-Endgeräts (11), wobei ein Router (21, 22, 23, 24, 25) existierend auf Pfaden zum Ausliefern von Daten von einem Korrespondenz-Endgerät (11) zu einem Mobil-Endgerät (51) über jeden von Zugriffs-Routern (31, 32, 33, 34) verwendet in einem Mehr-Pfad-Handover-Zustand von dem Mobil-Endgerät (31, 32, 33, 34) die Daten multicastet,
die Server-Vorrichtung (1) aufweisend:
Akquirierungs-Mittel (2) zum Pfad-Information zwischen einem Router (21) verbunden mit dem Korrespondenz-Endgerät (11) und jedem der Zugriffs-Router (31, 32, 33, 34) verwendet in dem Mehr-Pfad-Handover-Zustand von dem Mobil-Endgerät (51) Akquirieren, basierend auf Information in einer Verbindungs-Zustands-Datenbank von OSPF, welche von dem Router (21) oder dem Zugriffs-Router (31, 32, 33, 34) akquiriert wurde;
Auswahl-Mittel (4) zum Machen eines Vergleichs der von dem Akquirierungs-Mittel (2) akquirierten Pfad-Information und Auswählen eines Routers (22, 24, 25) zum Multicasten der Daten, basierend auf einem Resultat des Vergleichs; und
Instruktions-Mittel (6) zum Instruieren des von dem Auswahl-Mittel (4) ausgewählten Routers (22, 24, 25), die Daten zu multicasten;
wobei Akquirierungs-Mittel (2) der Server-Vorrichtung (1) eingerichtet ist zum:
Akquirieren, von mindestens einem Router (23, 32, 34) gehörend zu jedem Verwaltungs-Bereich von OSPF verwendet von einem Netzwerk, von Information in der Link-Zustands-Datenbank gemacht in dem Verwaltungs-Bereich, zu dem der Router (23, 32, 34) gehört;
Ändern aller Kosten-werte zwischen Routern (21, 22, 23, 24, 25) oder Zugriffs-Routern (31, 32, 33, 34), gespeichert in der Verbindungs-Zustands-Datenbank, auf ein identisches Zahlensymbol größer als 0 gemäß Bedarf;
von einem Router (21) verbunden mit dem Korrespondenz-Endgerät (11) Empfangen einer Start-Punkt-Such-Antwort angebend, dass der Router (21) ein Start-Punkt von Pfad-Information ist;
Aktivieren eines Kürzester-Pfad-Algorithmus mit dem Router (21) angegeben von der Start-Punkt-Such-Antwort als ein Start-Punkt, und **dadurch** Erzeugen eines Kürzester-Hop-Baums mit dem Router (21) als einem Start-Punkt; und
Bezugnehmen auf den Kürzester-Hop-Baum zum als Pfad-Information Akquirieren von Routern auf einem kürzesten Pfad von dem Router als ein Start-Punkt zu jedem Zugriffs-Router als ein Endpunkt, und eine Passier-Reihenfolge davon.

19. Daten-Übertragungs-Verfahren in einem Mobilkommunikationssystem (100, 200, 300, 400, 500, 600) aufweisend eine Mehrzahl von Relais-Routern (21, 22, 23, 24, 25), eine Mehrzahl von Zugriffs-Routern (31, 32, 33, 34) und eine Server-Vorrichtung,
das Mobilkommunikationssystem (100, 200, 300, 400, 500, 600) eingerichtet seiend in einer Konfiguration, in der ein Router (22, 24, 25) existierend auf Pfaden zum Ausliefern von Daten von einem Korrespondenz-Endgerät (11) zu einem Mobil-Endgerät (51) über jeden von Zugriffs-Routern (31, 32, 33, 34) verwendet in einem Mehr-Pfad-Handover-Zustand von dem Mobil-Endgerät (51), die Daten (31, 32, 33, 34) multicastet, das Daten-Übertragungs-Verfahren aufweisend:
einen Kontroll-Schritt, in dem die Server-Vorrichtung (1) dynamisch einen Router (22) zum Multicasten der Daten (31, 32, 33, 34) auf einen anderen (25) umschaltet in Verbindung mit Bewegung des Mobil-Endgeräts (51) oder des Korrespondenz-Endgeräts (11),
einen Akquirierungs-Schritt, in dem Akquirierungs-Mittel (2) der Server-Vorrichtung (1) Pfad-Information zwischen einem Router (21) verbunden mit dem Korrespondenz-Endgerät (11) und jedem der Zugriffs-Router (31, 32, 33, 34) verwendet in dem Mehr-Pfad-Handover-zustand von dem Mobil-Endgerät (51) akquiriert, basierend auf Information in einer Verbindungs-Zustands-Datenbank von OSPF, welche von dem Router (21) oder dem zugriffs-Router (31, 32, 33, 34) akquiriert wurde;
einen Auswahl-Schritt, in dem Auswahl-Mittel (4) der Server-Vorrichtung (1) einen Vergleich der in dem Akquirierungs-Schritt akquirierten Pfad-Information macht und einen Router (22, 24, 25) auswählt zum Multicasten der Daten, basierend auf einem Resultat des Vergleichs; und
einen Instruktions-Schritt, in dem Instruktions-Mittel (6) der Server-Vorrichtung (1) den in dem Auswahl-Schritt ausgewählten Router (22, 24, 25) instruieren, die Daten zu multicasten;
wobei der Akquirierungs-Schritt (2) durchgeführt von der Server-Vorrichtung (1) enthält:
Akquirieren (S41) von mindestens einem Router (23, 32, 34) gehörend zu jedem Verwaltungs-Bereich von OSPF verwendet von einem Netzwerk von Information in der Link-Zustands-Datenbank gemacht in dem Verwaltungs-Bereich, zu dem der Router (23, 32, 34) gehört;
Ändern (S42) aller Kosten-Werte zwischen Routern (21, 22, 23, 24, 25) oder Zugriffs-Routern (31, 32, 33, 34), gespeichert in der Verbindungs-Zustands-Datenbank, auf ein identisches Zahlensymbol größer als 0 gemäß Bedarf;
von einem Router (21) verbunden mit dem Korrespondenz-Endgerät (11) Empfangen einer Start-Punkt-Such-Antwort angebend, dass der Router (21) ein Start-Punkt von Pfad-Information ist;
Aktivieren (S45) eines Kürzester-Pfad-Algorithmusmit dem Router (21) angegeben von der Start-Punkt-Such-Antwort als ein Start-Punkt, und **dadurch** Erzeugen eines Kürzester-Hop-Baums mit dem Router (21) als einem Start-Punkt; und
Bezugnehmen (S46) auf den Kürzester-Hop-Baum zum als Pfad-Information Akquirieren von Routern auf einem kürzesten Pfad von dem Router als ein Start-Punkt zu jedem Zugriffs-Router als ein Endpunkt, und eine Passier-Reihenfolge davon.

## Revendications

1. Système de communication mobile (100, 200, 300, 400, 500, 600) comprenant une pluralité de routeurs relais (21, 22, 23, 24, 25), une pluralité de routeurs d'accès (31, 32, 33, 34), et un appareil serveur (1) ;
le système de communication mobile (100, 200, 300, 400, 500, 600) étant construit selon une configuration dans laquelle un routeur (22, 24, 25) existant sur des chemins de remise de données en provenance d'un terminal correspondant (11) vers un terminal mobile (51) par l'intermédiaire de chacun des routeurs d'accès (31, 32, 33, 34) utilisés dans un état de transfert par chemins multiples par le terminal mobile (51), multidiffuse des données (31, 32, 33, 34) ;
dans lequel l'appareil serveur (1) exécute une commande destinée à commuter de manière dynamique un routeur (22) de façon à multidiffuser des données (31, 32, 33, 34), vers un autre (25) conjointement à un déplacement du terminal mobile (51) ou du terminal correspondant (11) ;
dans lequel l'appareil serveur (1) comprend :
des moyens d'acquisition (2) destinés à acquérir à partir de chaque routeur d'accès (31, 32, 33, 34), des informations de chemin entre un routeur (21) connecté au terminal correspondant (11) et chacun des routeurs d'accès (31, 32, 33, 34) utilisés dans l'état de transfert par chemins multiples par le terminal mobile (51) ;
des moyens de sélection (4) destinés à procéder à une comparaison des informations de chemin acquises par les moyens d'acquisition (2) et à sélectionner un routeur (22, 24, 25) de façon à multidiffuser des données, sur la base d'un résultat de la comparaison ; et
des moyens donneurs d'ordres (6) destinés à ordonner au routeur sélectionné par les moyens de sélection (4), d'multidiffuser des données ;
dans lequel les moyens de sélection (4) de l'appareil serveur (1) sont configurés de manière à :
procéder à des comparaisons séquentielles des informations de chemin acquises par les moyens d'acquisition (2), saut par saut à partir d'un point de départ ;
si pour un saut cible des comparaisons, les routeurs traversés dans tous les chemins sont identiques, exécuter une comparaison pour un saut suivant ;
sélectionner en tant que routeur destiné à multidiffuser des données, un routeur dans un saut avant un chemin où il n'existe aucun autre chemin qui passe par un routeur identique ; et
éliminer ensuite ledit chemin, puis répéter la comparaison et les processus de sélection avant qu'il ne reste qu'un seul chemin ou moins en tant que cible de comparaison ou avant qu'une comparaison soit terminée pour un saut d'un point d'extrémité, et sélectionner de ce fait un autre routeur de façon à multidiffuser des données.

2. Système de communication mobile (100, 200, 300, 400, 500, 600) selon la revendication 1, dans lequel un routeur (21) connecté au terminal correspondant (11) transmet des informations de chemin à chacun des routeurs d'accès (31, 32, 33, 34) utilisés dans l'état de transfert par chemins multiples par le terminal mobile (11) ; et
dans lequel les informations de chemin sont routées par le chemin le plus court à partir dudit routeur (21) en tant que point de départ vers chacun des routeurs d'accès (31, 32, 33, 34) en tant que point d'extrémité, un routeur (21, 22, 23, 24, 25, 31, 32, 33, 34) traversé par les informations de chemin enregistre les informations d'identification dudit routeur (21, 22, 23, 24, 25, 31, 32, 33, 34) dans les informations de chemin, et chacun des routeurs d'accès (31, 32, 33, 34) se réfère aux informations de chemin reçues, de manière à acquérir les routeurs (21, 22, 23, 24, 25, 31, 32, 33, 34) sur le chemin le plus court à partir du point de départ (21) vers le point d'extrémité (31, 32, 33, 34), et leur ordre de passage sur le chemin le plus court.

3. Système de communication mobile (100, 200, 300, 400, 500, 600) selon la revendication 1, dans lequel les moyens donneurs d'ordres (6) de l'appareil serveur (1) sont configurés de manière à :
ordonner au routeur (25) nouvellement sélectionné par les moyens de sélection (4), de commencer à multidiffuser des données ; et
ordonner à un routeur (22) retiré des routeurs destinés à multidiffuser des données, conjointement à la sélection du routeur, d'annuler la multidiffusion des données.

4. Système de communication mobile (100, 200, 300, 400, 500, 600) selon la revendication 1, dans lequel à l'occasion d'un changement de routeurs d'accès utilisés dans l'état de transfert par chemins multiples par le terminal mobile (11), l'appareil serveur (1) exécute de manière séquentielle le processus d'acquisition, le processus de sélection, et le processus de transmission d'ordres.

5. Système de communication mobile (100, 200, 300, 400, 500, 600) selon la revendication 2, dans lequel l'un des routeurs d'accès (31, 32, 33, 34) utilisés dans l'état de transfert par chemins multiples par le terminal mobile (11) envoie une demande d'informations de chemin au terminal correspondant (11) en communication avec le terminal mobile (51) ; et
dans lequel le routeur (21) connecté au terminal correspondant (11) met fin à la demande d'informations de chemin et à cette occasion, ledit routeur (21) envoie des informations de chemin à chacun des routeurs d'accès (31, 32, 33, 34) utilisés dans l'état de transfert par chemins multiples par le terminal mobile (51).

6. Système de communication mobile (100, 200, 300, 400, 500, 600) selon la revendication 5, dans lequel chaque routeur d'accès (31, 32, 33, 34) qui reçoit les informations de chemin enregistre les informations d'identification du routeur d'accès (31, 32, 33, 34) lui-même dans les informations de chemin et envoie les informations de chemin à l'appareil serveur (1).

7. Système de communication mobile (100, 200, 300, 400, 500, 600) selon la revendication 3, dans lequel ledit routeur (25) nouvellement sélectionné par les moyens de sélection (4) reçoit une demande de démarrage de multidiffusion en provenance de l'appareil serveur (1), conserve les informations incluses dans la demande de démarrage de multidiffusion, et multidiffuse des données adressées au terminal mobile (51) ; et
dans lequel le routeur (22) retiré des routeurs destinés à multidiffuser des données, conjointement à la sélection du routeur reçoit une demande d'arrêt de multidiffusion en provenance de l'appareil serveur (1) et met fin à la multidiffusion des données.

8. Système de communication mobile (100, 200, 300, 400, 500, 600) selon la revendication 7, dans lequel, lors de la réception des données adressées au terminal mobile (51), le routeur (25) nouvellement sélectionné par les moyens de sélection (4) effectue des copies des données selon le nombre de routeurs (31, 32, 33, 34) en tant que destinations de multidiffusion et transmet les copies des données aux destinations de multidiffusion respectives (31, 32, 33, 34).

9. Système de communication mobile (100, 200, 300, 400, 500, 600) selon la revendication 5, dans lequel ladite demande d'informations de chemin contient des informations d'identification d'un émetteur et d'un destinataire de la demande d'informations de chemin et contient également des informations d'identification du terminal mobile et des informations d'identification des routers d'accès à indiquer en tant que destinations des informations de chemin.

10. Système de communication mobile (100, 200, 300, 400, 500, 600) selon la revendication 5, dans lequel lesdites informations de chemin contiennent des informations d'identification d'un émetteur et d'un destinataire des informations de chemin et contiennent également des informations d'identification du terminal mobile, des informations d'identification du terminal correspondant et des informations d'identification du routeur en tant que point de départ d'un chemin indiqué par les informations de chemin.

11. Système de communication mobile (100, 200, 300, 400, 500, 600) selon la revendication 7, dans lequel ladite demande de démarrage de multidiffusion contient des informations d'identification d'un émetteur et d'un destinataire de la demande de démarrage de multidiffusion et contient également des informations d'identification du terminal mobile et des informations d'identification des routeurs en tant que destinations de la multidiffusion ; et
dans lequel la demande d'arrêt de multidiffusion contient des informations d'identification d'un émetteur et d'un récepteur de la demande d'arrêt de multidiffusion et contient également des informations d'identification du terminal mobile.

12. Appareil serveur (1) destiné à une connexion à une pluralité de routeurs relais (21, 22, 23, 24, 25) et à une pluralité de routeurs d'accès (31, 32, 33, 34), l'appareil serveur (1) étant configuré de façon à exécuter une commande destinée à commuter de manière dynamique un routeur (22) de façon à multidiffuser des données (31, 32, 33, 34), vers un autre (25) conjointement à un déplacement du terminal mobile (51) ou du terminal correspondant (11), dans lequel un routeur (21, 22, 23, 24, 25) existant sur des chemins de remise de données en provenance d'un terminal correspondant (11) vers un terminal mobile (51) par l'intermédiaire de chacun des routeurs d'accès (31, 32, 33, 34) utilisés dans un état de transfert par chemins multiples par le terminal mobile (51) multidiffuse des données ;
ledit appareil serveur (1) comprenant :
des moyens d'acquisition (2) destinés à acquérir à partir de chaque routeur d'accès (31, 32, 33, 34), des informations de chemin entre un routeur (21) connecté au terminal correspondant (11) et chacun des routeurs d'accès (31, 32, 33, 34) utilisés dans l'état de transfert par chemins multiples par le terminal mobile (51) ;
des moyens de sélection (4) destinés à procéder à une comparaison des informations de chemin acquises par les moyens d'acquisition (2) et à sélectionner un routeur (22, 24, 25) de façon à multidiffuser des données (31, 32, 33, 34), sur la base d'un résultat de la comparaison ; et
des moyens de transmission d'ordre (6) destinés à ordonner au routeur (22, 24, 25) sélectionné par les moyens de sélection (4), d'multidiffuser des données ;
dans lequel les moyens de sélection (4) de l'appareil serveur (1) sont configurés de manière à :
procéder à des comparaisons séquentielles des informations de chemin acquises par les moyens d'acquisition (2), saut par saut à partir d'un point de départ ;
si pour un saut cible des comparaisons, les routeurs traversés dans tous les chemins sont identiques, exécuter une comparaison pour un saut suivant ;
sélectionner en tant que routeur destiné à multidiffuser des données, un routeur dans un saut avant un chemin où il n'existe aucun autre chemin qui passe par un routeur identique ; et
éliminer ensuite ledit chemin, puis répéter la comparaison et les processus de sélection avant qu'il ne reste qu'un seul chemin ou moins en tant que cible de comparaison ou avant qu'une comparaison soit terminée pour un saut d'un point d'extrémité, et sélectionner de ce fait un autre routeur de façon à multidiffuser des données.

13. Procédé de transmission de données dans un système de communication mobile (100, 200, 300, 400, 500, 600) comprenant une pluralité de routeurs relais (21, 22, 23, 24, 25), une pluralité de routeurs d'accès (31, 32, 33, 34), et un appareil serveur ;
le système de communication mobile (100, 200, 300, 400, 500, 500) étant construit selon une configuration dans laquelle un routeur (22, 24, 25) existant sur des chemins de remise de données en provenance d'un terminal correspondant (11) vers un terminal mobile (51) par l'intermédiaire de chacun des routeurs d'accès (31, 32, 33, 34) utilisés dans un état de transfert par trajets multiples par le terminal mobile (51), multidiffuse des données (31, 32, 33, 34), ledit procédé de transmission de données comprenant :
une étape de commande dans laquelle l'appareil serveur (1) commute de manière dynamique un routeur (22) de façon à multidiffuser des données (31, 32, 33, 34, 35), vers un autre (25) conjointement à un déplacement du terminal mobile (51) ou du terminal correspondant (11) ;
une étape d'acquisition dans laquelle des moyens d'acquisition (2) de l'appareil serveur (1) acquièrent à partir de chaque routeur d'accès (31, 32, 33, 34), des informations de chemin entre un routeur (21) connecté au terminal correspondant (11) et chacun des routeurs d'accès (31, 32, 33, 34) utilisés dans l'état de transfert par chemins multiples par le terminal mobile (51) ;
une étape de sélection dans laquelle des moyens de sélection (4) de l'appareil serveur (1) procèdent à une comparaison des informations de chemin acquises par les moyens d'acquisition (2) et sélectionnent un routeur (22, 24, 25) de façon à multidiffuser des données, sur la base d'un résultat de la comparaison ; et
une étape de transmission d'ordres dans laquelle des moyens donneurs d'ordres (6) de l'appareil serveur (1) ordonnent au routeur sélectionné dans l'étape de sélection, d'multidiffuser des données ;
dans lequel l'étape de sélection (4) exécutée par l'appareil serveur (1) comprend :
une étape consistant à procéder à des comparaisons séquentielles des informations de chemin acquises dans l'étape d'acquisition, saut par saut à partir d'un point de départ ;
si pour un saut cible des comparaisons, les routeurs traversés dans tous les chemins sont identiques, une étape consistant à exécuter une comparaison pour un saut suivant ;
une étape consistant à sélectionner en tant que routeur destiné à multidiffuser des données, un routeur dans un saut avant un chemin où il n'existe aucun autre chemin qui passe par un routeur identique ; et
une étape consistant à éliminer ensuite ledit chemin, puis à répéter la comparaison et les processus de sélection avant qu'il ne reste qu'un seul chemin ou moins en tant que cible de comparaison ou avant qu'une comparaison soit terminée pour un saut d'un point d'extrémité, et à sélectionner de ce fait un autre routeur de façon à multidiffuser des données.

14. Système de communication mobile (100, 200, 300, 400, 500, 600) comprenant une pluralité de routeurs relais (21, 22, 23, 24, 25), une pluralité de routeurs d'accès (31, 32, 33, 34), et un appareil serveur (1) ;
le système de communication mobile (100, 200, 300, 400, 500, 600) étant construit selon une configuration dans laquelle un routeur (22, 24, 25) existant sur des chemins de remise de données en provenance d'un terminal correspondant (11) vers un terminal mobile (51) par l'intermédiaire de chacun des routeurs d'accès (31, 32, 33, 34) utilisés dans un état de transfert par trajets multiples par le terminal mobile (51), multidiffuse des données (31, 32, 33, 34) ;
dans lequel l'appareil serveur (1) exécute une commande destinée à commuter de manière dynamique un routeur (22) de façon à multidiffuser des données (31, 32, 33, 34), vers un autre (25) conjointement à un déplacement du terminal mobile (51) ou du terminal correspondant (11) ;
dans lequel l'appareil serveur (1) comprend :
des moyens d'acquisition (2) destinés à acquérir des informations de chemin entre un routeur (21) connecté au terminal correspondant (11) et chacun des routeurs d'accès (31, 32, 33, 34) utilisés dans l'état de transfert par chemins multiples par le terminal mobile (51), sur la base d'informations qui se trouvent dans une base de données d'état de liaison d'OSPF, qui ont été acquises à partir du routeur (21) ou du routeur d'accès (31, 32, 33, 34) ;
des moyens de sélection (4) destinés à procéder à une comparaison des informations de chemin acquises par les moyens d'acquisition (2) et à sélectionner un routeur (22, 24, 25) de façon à multidiffuser des données, sur la base d'un résultat de la comparaison ; et
des moyens de transmission d'ordre (6) destinés à ordonner au routeur (22, 24, 25) sélectionné par les moyens de sélection (4), d'multidiffuser des données ;
dans lequel les moyens d'acquisition (2) de l'appareil serveur (1) sont configurés de manière à :
acquérir à partir d'un routeur au moins (23, 32, 34) qui appartient à chaque région de gestion d'OSPF utilisée par un réseau, des informations qui se trouvent dans la base de données d'état de liaison obtenues dans la zone de gestion à laquelle ledit routeur (23, 32, 34) appartient ;
modifier toutes les valeurs de coût entre les routeurs (21, 22, 23, 24, 25) ou les routeurs d'accès (31, 32, 33, 34), enregistrées dans la base de données d'état de liaison, en une valeur numérique identique supérieure à 0 selon les besoins ;
recevoir en provenance d'un routeur (21) connecté au terminal correspondant (11), une réponse de recherche de point de départ qui indique que ledit routeur (21) est un point de départ d'informations de chemin ;
lancer un algorithme du plus court chemin avec le routeur (21) indiqué par la réponse de recherche de point de départ, en tant que point de départ, et générer de ce fait un arbre des sauts les plus courts avec ledit routeur (21) au niveau d'un point de départ ; et
se référer à l'arbre des sauts les plus courts de manière à acquérir en tant qu'informations de chemin, les routeurs sur le chemin le plus court à partir du routeur en tant que point de départ vers chaque routeur d'accès en tant que point d'extrémité, et leur ordre de passage.

15. Système de communication mobile (100, 200, 300, 400, 500, 600) selon la revendication 14, dans lequel l'un des routeurs d'accès (31, 32, 33, 34) utilisés dans l'état de transfert par chemins multiples par le terminal mobile (51) envoie une demande de recherche de point de départ au terminal correspondant (11) en tant que correspondant en communication avec le terminal mobile (51) ; et
dans lequel le routeur (21) connecté au terminal correspondant (11) met alors fin à la demande de recherche de point de départ et à cette occasion, ledit routeur (21) envoie la réponse de recherche de point de départ dans laquelle les informations d'identification du routeur (21) sont enregistrées, à l'appareil serveur (1).

16. Système de communication mobile (100, 200, 300, 400, 500, 600) selon la revendication 15, dans lequel ladite demande de recherche de point de départ contient des informations d'identification d'un émetteur et d'un destinataire de la demande de recherche de point de départ et contient également des informations d'identification du terminal mobile.

17. Système de communication mobile (100, 200, 300, 400, 500, 600) selon la revendication 14, dans lequel ladite réponse de recherche de point de départ contient des informations d'identification d'un émetteur et d'un destinataire de la réponse de recherche de point de départ et contient également des informations d'identification du terminal mobile, des informations d'identification du terminal correspondant et des informations d'identification d'un routeur en tant que point de départ obtenu par une recherche.

18. Appareil serveur (1) destiné à une connexion à une pluralité de routeurs relais (21, 22, 23, 24, 25) et à une pluralité de routeurs d'accès (31, 32, 33, 34), l'appareil serveur (1) étant configuré de façon à exécuter une commande destinée à commuter de manière dynamique un routeur (22) de façon à multidiffuser des données (31, 32, 33, 34), vers un autre (25) conjointement à un déplacement du terminal mobile (51) ou du terminal correspondant (11), dans lequel un routeur (21, 22, 23, 24, 25) existant sur des chemins de remise de données en provenance d'un terminal correspondant (11) vers un terminal mobile (51) par l'intermédiaire de chacun des routeurs d'accès (31, 32, 33, 34) utilisés dans un état de transfert par chemins multiples par le terminal mobile (31, 32, 33, 34) multidiffuse des données;
ledit appareil serveur (1) comprenant :
des moyens d'acquisition (2) destinés à acquérir des informations de chemin entre un routeur (21) connecté au terminal correspondant (11) et chacun des routeurs d'accès (31, 32, 33, 34) utilisés dans l'état de transfert par chemins multiples par le terminal mobile (51), sur la base d'informations qui se trouvent dans une base de données d'état de liaison OSPF, qui ont été acquises à partir du routeur (21) ou du routeur d'accès (31, 32, 33, 34) ;
des moyens de sélection (4) destinés à procéder à une comparaison des informations de chemin acquises par les moyens d'acquisition (2) et à sélectionner un routeur (22, 24, 25) de façon à raultidiffuser des données, sur la base d'un résultat de la comparaison ; et
des moyens de transmission d'ordre (6) destinés à ordonner au routeur (22, 24, 25) sélectionné par les moyens de sélection (4), d'multidiffuser des données ;
dans lequel les moyens d'acquisition (2) de l'appareil serveur (1) sont configurés de manière à :
acquérir à partir d'un routeur au moins (23, 32, 34) qui appartient à chaque région de gestion d'OSPF utilisée par un réseau, des informations qui se trouvent dans la base de données d'état de liaison obtenues dans la zone de gestion à laquelle ledit routeur (23, 32, 34) appartient ;
modifier toutes les valeurs de coût entre les routeurs (21, 22, 23, 24, 25) ou les routeurs d'accès (31, 32, 33, 34), enregistrées dans la base de données d'état de liaison, en une valeur numérique identique supérieure à 0 selon les besoins ;
recevoir en provenance d'un routeur (21) connecté au terminal correspondant (11), une réponse de recherche de point de départ qui indique que ledit routeur (21) est un point de départ d'informations de chemin ;
lancer un algorithme du plus court chemin avec le routeur (21) indiqué par la réponse de recherche de point de départ, en tant que point de départ, et générer de ce fait un arbre des sauts les plus courts avec ledit routeur (21) au niveau d'un point de départ ; et
se référer à l'arbre des sauts les plus courts de manière à acquérir en tant qu'informations de chemin, les routeurs sur le chemin le plus court à partir du routeur en tant que point de départ vers chaque routeur d'accès en tant que point d'extrémité, et leur ordre de passage.

19. Procédé de transmission de données dans un système de communication mobile (100, 200, 300, 400, 500, 600) comprenant une pluralité de routeurs relais (21, 22, 23, 24, 25), une pluralité de routeurs d'accès (31, 32, 33, 34), et un appareil serveur ;
le système de communication mobile (100, 200, 300, 400, 500, 600) étant construit selon une configuration dans laquelle un routeur (22, 24, 25) existant sur des chemins de remise de données en provenance d'un terminal correspondant (11) vers un terminal mobile (51) par l'intermédiaire de chacun des routeurs d'accès (31, 32, 33, 34) utilisés dans un état de transfert par trajets multiples par le terminal mobile (51), multidiffuse des données (31, 32, 33, 34), ledit procédé de transmission de données comprenant ;
une étape de commande dans laquelle l'appareil serveur (1) commute de manière dynamique un routeur (22) de façon à multidiffuser des données (31, 32, 33, 34, 35), vers un autre (25) conjointement à un déplacement du terminal mobile (51) ou du terminal correspondant (11) ;
une étape d'acquisition dans laquelle des moyens d'acquisition (2) de l'appareil serveur (1) acquièrent des informations de chemin entre un routeur (21) connecté au terminal correspondant (11) et chacun des routeurs d'accès (31, 32, 33, 34) utilisés dans l'état de transfert par chemins multiples par le terminal mobile (51), sur la base d'informations qui se trouvent dans une base de données d'état de liaison OSPF, qui ont été acquises à partir du routeur (21) ou du routeur d'accès (31, 32, 33, 34) ;
une étape de sélection dans laquelle des moyens de sélection (4) de l'appareil serveur (1) procèdent à une comparaison des informations de chemin acquises dans l'étape d'acquisition et sélectionnent un routeur (22, 24, 25) de façon à multidiffuser des données, sur la base d'un résultat de la comparaison ; et
une étape de transmission d'ordres dans laquelle des moyens donneurs d'ordres (6) de l'appareil serveur (1) ordonnent au routeur (22, 24, 25) sélectionné dans l'étape de sélection, d'multidiffuser des données ;
dans lequel l'étape d'acquisition (2) exécutée par l'appareil serveur (1) comprend les étapes consistant à :
acquérir (S41) à partir d'un routeur au moins (23, 32, 34) qui appartient à chaque région de gestion d'OSPF utilisée par un réseau, des informations qui se trouvent dans la base de données d'état de liaison obtenues dans la zone de gestion à laquelle ledit routeur (23, 32, 34) appartient ;
modifier (S42) toutes les valeurs de coût entre les routeurs (21, 22, 23, 24, 25) ou les routeurs d'accès (31, 32, 33, 34), enregistrées dans la base de données d'état de liaison, en une valeur numérique identique supérieure à 0 selon les besoins ;
recevoir en provenance d'un routeur (21) connecté au terminal correspondant (11), une réponse de recherche de point de départ qui indique que ledit routeur (21) est un point de départ d'informations de chemin ;
lancer (S45) un algorithme du plus court chemin avec le routeur (21) indiqué par la réponse de recherche de point de départ, en tant que point de départ, et générer de ce fait un arbre des sauts les plus courts avec ledit routeur (21) au niveau d'un point de départ ; et
se référer (S46) à l'arbre des sauts les plus courts de manière à acquérir en tant qu'informations de chemin, les routeurs sur le chemin le plus court à partir du routeur en tant que point de départ vers chaque routeur d'accès en tant que point d'extrémité, et leur ordre de passage.
